# EUROPEAN PATENT APPLICATION

(11) **EP 1 950 265 A1**
(43) Date of publication of application: **30.07.2008**
(21) Application number: 06768425.8
(22) Date of filing: 31.07.2006
(51) Int. Cl.: C09K 5/06, F28D 20/02

(54) **HEAT STORAGE MATERIAL MICROCAPSULE, HEAT STORAGE MATERIAL MICROCAPSULE DISPERSION AND HEAT STORAGE MATERIAL MICROCAPSULE SOLIDIFIED PRODUCT**

(30) Priority: 17.11.2005 JP 2005332585; 17.11.2005 JP 2005332586; 25.11.2005 JP 2005340275; 25.11.2005 JP 2005340276
(71) Applicant: MITSUBISHI PAPER MILLS LIMITED, Tokyo 100-0005 (JP)
(72) Inventor: IKEGAMI, Koshiro, Chiyoda-ku, Tokyo 100-0005 (JP); MOURI, Nobuyoshi, Chiyoda-ku, Tokyo 100-0005 (JP); ISHIGURO, Mamoru, Chiyoda-ku, Tokyo 100-0005 (JP)
(74) Representative: Albrecht, Thomas
(86) International application number: PCT/JP2006/315554
(87) International publication number: WO 2007/058003

(57) **Abstract**

The thermal storage material microcapsules of the present invention are thermal storage material microcapsules encapsulating a thermal storage material, and the thermal storage material comprising at least one selected from compounds of the following formulae (I) to (III),

R¹- X-R² (I)

wherein each of R¹ and R² is independently a hydrocarbon group having 6 or more carbon atoms and X is a divalent binding group containing a heteroatom,

R³(-Y-R⁴)n (II)

wherein R³ is a hydrocarbon group having a valence of n, each of R⁴s is independently a hydrocarbon group having 6 or more carbon atoms and each Y is a divalent binding group containing a heteroatom,

A(-Z-R⁵)m (III)

wherein A is an atom, atomic group or binding group having a valence of m, each of R⁵s is independently a hydrocarbon group having 6 or more carbon atoms and each Z is a divalent binding group containing a heteroatom or a direct bond, the thermal storage material having an acid value of 8 or less.

## Description

### Technical Field

The present invention relates to microcapsules containing a thermal storage material whose latent heat is used. More specifically, it relates to thermal storage material microcapsules that are remarkably excellent in thermal shock absorbing capability around the melting temperature and/or coagulation temperature of a thermal storage material, a dispersion of the thermal storage material microcapsules in a dispersing medium, and a thermal storage microcapsule solid formed of the above thermal storage microcapsules or a plurality of the above thermal storage microcapsules that are bonded together.

### Background Art

In recent years, there is demanded energy saving by the efficient use of thermal energy. As an effective method therefor, studies have been made of a method in which heat is stored by utilizing latent heat that entails the phase change of a substance. As compared with a method using only sensible heat that entails no phase change, a large quantity and high density of thermal energy can be stored in a narrow temperature region having a melting point in it. It therefore has advantages that not only the volume of the thermal storage material can be decreased but also the heat loss can be controlled so that it may be small since no large temperature difference is caused for a large heat storage amount.

For improving the heat-exchange efficiency of a thermal storage material, it has been proposed to micro-encapsulate the thermal storage material. As a method for micro-encapsulating a thermal storage material, there can be employed an encapsulation method based on a co-emulsion method (for example, see JP62-1452A), a method in which a thermoplastic resin is formed on the surface of each of thermal storage particles in a liquid (for example, see JP62-149334A), a method in which a monomer is polymerized on the surface of each of thermal storage particles to coat the surfaces (for example, see JP62-225241A), a method in which polyamide-coated microcapsules are produced by an interfacial polycondensation reaction (for example, see JP2-258052A), and the like.

When the thermal storage material is encapsulated, it can maintain a constant appearance state regardless of the phase state of the thermal storage material that can repeat the state of being melted (liquid) and the state of being coagulated (solid) from one to the other. In most of the above micro-encapsulation methods, thermal storage microcapsules are obtained as a dispersion of microcapsules in a medium. The microcapsule dispersion can be constantly handled in the form of a liquid state whatever state the thermal storage material has, the state of being melted or the state of being coagulated.

When microcapsules are recovered as a solid by drying the dispersion of the microcapsules, they can be constantly handled in the state of being a solid regardless of the phase state of the thermal storage material encapsulated. The solid of thermal storage material microcapsules includes a powder obtained by drying a dispersion of microcapsules and thereby removing a medium and a granulated product obtained by bonding a plurality of thermal storage material microcapsules with a binder (for example, see JP2-222483A and JP2001-303032A).

When a thermal storage material that is not micro-encapsulated is used as it is, it is required to place the thermal storage material in a container and hermetically close or seal the container, or it is required to make the matrix of a polymer or inorganic material absorb and hold the thermal storage material, so that it may not flow out when it is melted to be in a liquid state. As a result, the heat-exchange efficiency is decreased or the field of use thereof has been limited in many cases. The micro-encapsulation of the thermal storage material is very effective means for efficiently utilizing it in broad use fields.

Meanwhile, thermal storage material microcapsules are used in fields of fiber processed products such as clothing materials, bedclothes, etc., thermal insulators that perform heating and heat storage by microwave application, apparatuses for utilizing exhaust heat of fuel cells, incinerators, etc., and over-heating and/or super-cooling suppressing materials for electronic parts and gas adsorbents, and besides these, they are also used in various fields of construction materials, the building frame thermal storage/space filling type air conditioning of buildings, floor heating, air-conditioning, civil engineering materials such as roads and bridges, industrial and agricultural thermal insulation materials, household goods, fitness gears, medical materials, and the like (for example, see JP5-25471A, JP2000-178545A, JP2000-38577A, JP2001-081447A and JP2001-288458A). The temperatures for the phase change of a thermal storage material, that is, a melting point and a coagulation point, are largely classified into a low temperature region (10°C or lower), an intermediate temperature region (10 to 40°C) and a high temperature region (40°C or higher).

In the thermal storage material microcapsules, an aliphatic hydrocarbon compound is used as a thermal storage material in many cases. The aliphatic hydrocarbon compound has an advantage that it is easily micro-encapsulated. However, although aliphatic hydrocarbon compounds having melting points in the low temperature region and high temperature region are produced in a large quantity, aliphatic hydrocarbon compounds having melting points in the high temperature region are difficult to isolate and purify, and there are few compounds that are mass-produced. They are also expensive. Therefore, a mixture of aliphatic hydrocarbon compounds having 20 or more carbon atoms, called paraffin wax, is commercially available. The paraffin wax is used as a mold release agent, a brightener, a water repellent, etc., while it can be also used as a thermal storage material. However, it has a drawback that the amount of heat for melting is low as compared with a single-compound product of an aliphatic hydrocarbon compound, presumably because it is a mixture. Further, it is poor in phase change response when it undergoes a phase change, and when a paraffin wax in a coagulation state is heated, the temperature range from the start of melting to the completion of melting is broad. When heat is stored or released in a narrow temperature change range, there can be utilized only part of the amount of heat for melting/coagulation that the thermal storage material originally has, and the effective utilization heat amount per mass of the thermal storage material has been sometimes small.

Further, when an aliphatic hydrocarbon compound having approximately 10 to 20 carbon atoms is used as a thermal storage material having a melting point in a low/intermediate temperature region of 0 to 30°C, it is obtained from a natural product at a low cost, so that it is obtained not as an isolated and purified product but as a mixture in many cases. In this case, the above hydrocarbon compound has a low heat amount for melting and is poor in phase change response when it undergoes a phase change like those which have melting points in the high temperature region. Therefore, the effective utilization heat amount per mass of the thermal storage material has been sometimes small.

It has been proposed that higher alcohols, higher fatty acids and ester compounds should be used as thermal storage materials since they have a high heat amount for melting, as high as 80 kJ/kg or more in the high temperature region, as compared with the aliphatic hydrocarbon compounds, and are excellent in phase change response (for example, see Japanese Patent No. 2847267). These compounds have been commercialized as high-purity compounds, and their temperature range from the start of melting to the end of melting is narrow. When heat is stored or released in a narrow temperature change range, the amount of heat for melting/coagulation that these compounds originally have can be mostly utilized, and the effective utilization heat amount per mass of each thermal storage material is large. Further, they are relatively less expensive. However, although these compounds can be used in a bulk state without any problem, they have had various problems when they are micro-encapsulated by emulsifying and dispersing them.

That is, when higher alcohols or higher fatty acids are micro-encapsulated by conventional procedures, they are poor in emulsion-dispersibility presumably because the crystallization rate of these compounds is high, and there has been a problem that the ratio of effective formation of capsules (encapsulation ratio) is decreased. Further, some of them have the problem of a characteristic odor depending upon the number of carbon atoms, and some of them are not suitable as thermal storage materials that are in particular emulsified and dispersed for use.

On the other hand, the ester compounds that are commercialized and distributed are mainly methyl esters, ethyl esters and butyl esters. Ester compounds whose alcohol moieties have 4 or less carbon atoms have high hydrophilic nature even if their fatty acid moieties are as high as 10 or more carbon atoms, so that they have the following problems in the step of micro-encapsulation. For example, when thermal storage material microcapsules are produced in a manner that a thermal storage material is emulsified and dispersed in water or the like as a dispersing medium, there is a problem that an ester compound obtained by a reaction between a higher fatty acid and a lower alcohol having 4 carbon atoms or less is easily dissolved in the dispersing medium and lost without being encapsulated, so that the encapsulation ratio is decreased. Further, such an ester compound dissolved in the dispersing medium in many cases has caused phenomena in which the emulsion dispersibility is degraded, the encapsulation reaction is inhibited and the dispersion stability of dispersion of thermal storage material microcapsules is degraded.

Further, the ester compound obtained by a reaction between a higher fatty acid and a lower alcohol having 4 carbon atoms or less comes to have a melting point around room temperature when the total number of carbon atoms of its fatty acid moiety and carbon atoms of its alcohol moiety is approximately 20. As far as the melting point is concerned, it can be used as a thermal storage material in the intermediate temperature region. However, this ester compound is easily hydrolyzable, and when heating and cooling are repeated for a long period of time, the decomposition gradually takes place and there are caused problems that the amount of heat for melting decreases and that the melting point is deviated from an intended temperature.

Further, when a ketone compound, an ether compound, an amide compound or amine compound other than the ester compound is used as a thermal storage material, a compound in which at least one of hydrocarbon groups viewed when a binding group is considered the center has 4 carbon atoms or less has the same problems as those which the above ester compound has.

Meanwhile, the intended melting temperature (or coagulation temperature) of a thermal storage material is determined depending upon its melting point (or coagulation point). However, there is no compound suitable for an intended melting temperature (or coagulation temperature) in some cases, or there are some cases where no industrially sufficient amount of a compound can be obtained since the compound is special. In these cases, attempts may be made to mix two or more compounds for obtaining a desirable melting temperature (or coagulation temperature). As described above, however, when two or more aliphatic hydrocarbon compounds are mixed, the amount of heat for melting (or the amount of heat for coagulation) with regard to the mixture comes in many cases to be greatly lower than any one of the amounts of heat for melting (amounts of heat for coagulation) that the individual compounds originally have before mixed. Further, when two or more aliphatic hydrocarbon compounds having greatly different melting points are mixed, there are many cases where the two or more melting temperatures derived from the respective compounds forming the mixture appear intact, and the mixture does not show a melting temperature at an average temperature. It is therefore difficult to store heat at a temperature other than the melting point of a compound with regard to aliphatic hydrocarbon compounds.

With regard to thermal storage material microcapsules, further, a temperature difference is sometimes caused between the melting temperature and the coagulation temperature thereof. As a method for controlling the above temperature difference, there has been proposed a method in which the temperature difference is brought near to zero by adding a super-cooling suppressing material or a nucleus generator. However, there is no method found for expanding the temperature difference and maintaining the thus-obtained temperature difference with time (for example, see JP5-237368A, JP8-259932A, JP9-31451A and JP2003-261866A). Thermal storage material microcapsules repeat heat absorption or heat release by heating or cooling, and they are used as/in a heat-retaining material, a cold insulation material, a storage container, cold insulation clothing, heat insulation clothing, a thermal storage material for air conditioning, an industrial thermal storage material, a construction material, etc. Of these uses, there are some uses where it is required to set the heat absorption region and the heat release region in separate temperature regions. In this case, there have been proposed a method in which two or more encapsulated thermal storage materials having different melting points are used in combination, a method in which identical microcapsules each of which contains two or more thermal storage materials having different melting points are used and a method in which two or more thermal storage materials are used. However, there has been found no method in which one thermal storage material is used for the above application. In the method using two or more thermal storage materials, unnecessary decalescent point(s) appears or appear in other temperature region(s) different from the originally required heat absorption temperature region, and the amount of heat for effective heat absorption in the originally required heat absorption region can be decreased. Otherwise, unnecessary heat release point(s) appears or appear in other temperature region(s) different from the originally required heat release temperature region, and the amount of heat for effective heat release in the originally required heat release temperature region can be decreased (for example, see JP59-56092A and JP10-311693A).

On the other hand, with regard to thermal storage material microcapsules, a temperature difference sometimes takes place between the melting temperature and coagulation temperature thereof, and as a method for controlling this temperature difference, there has been proposed a method in which a temperature control agent such as a super-cooling suppressing material or a nucleus generator is added to bring the temperature difference close to zero. In most of these proposals, aliphatic hydrocarbon compounds are used as thermal storage materials. When the thermal storage materials are not any aliphatic hydrocarbon compounds, there has been another problem that their effect on a decrease in the temperature difference is insufficient or that the effect is decreased with time (for example, see the above JP5-237368A, JP8-259932A, JP9-31451A and JP2003-261866A).

### Disclosure of the Invention

It is a first object of the present invention to provide thermal storage material microcapsules that are excellent in stability with time without being easily hydrolyzed and that have a high heat amount and are excellent in response in phase change.

It is a second object of the present invention to provide thermal storage material microcapsules that are so controlled as to expand the temperature difference between the melting temperature and the coagulation temperature, that can stably maintain such a temperature difference for a long period of time and that are also excellent in heat resistance.

It is a third object of the present invention to provide thermal storage material microcapsules that starts melting or coagulation in an intended temperature region and that are excellent in durability against repeated phase changes.

It is a fourth object of the present invention to provide thermal storage material microcapsules that are controlled so as to decrease the temperature difference between the melting temperature and the coagulation temperature, that can stably maintain the above temperature difference for a long period of time and that are excellent in durability against repeated phase changes.

The present inventors have made diligent studies and as a result it has been found that the above first object can be achieved by thermal storage material microcapsules in which the thermal storage material contains a specific compound and has an acid value of 8 or less, that the above second object can be achieved by thermal storage material microcapsules in which the thermal storage material contains a specific compound and has a melting temperature and a coagulation temperature which are different by 5°C or more, that the above third object can be achieved by thermal storage material microcapsules in which the thermal storage material contains two or more compounds selected from specific compounds and totals of carbon atoms being different in number by 4 or less between or among the selected compounds, and that the above fourth object can be achieved by thermal storage material microcapsules encapsulating a thermal storage material and a temperature control agent, in which the number of carbon atoms of a hydrocarbon group having the most carbon atoms in compounds constituting the temperature control agent is greater than the number of carbon atoms of a hydrocarbon group having the most carbon atoms in compounds constituting the thermal storage material by 2 or more. On the basis of finding of these, the present invention has been accordingly completed.

That is, the present invention provides
(1) thermal storage material microcapsules encapsulating a thermal storage material, said thermal storage material comprising at least one selected from compounds of the following formulae (I) to (III),

   R¹-X-R² (I)

   wherein each of R¹ and R² is independently a hydrocarbon group having 6 or more carbon atoms and X is a divalent binding group containing a heteroatom,

   R³(-Y-R⁴)n (II)

   wherein R³ is a hydrocarbon group having a valence of n, each of R⁴s is independently a hydrocarbon group having 6 or more carbon atoms and each Y is a divalent binding group containing a heteroatom,

   A(-Z-R⁵)m (III)

   wherein A is an atom, atomic group or binding group having a valence of m, each of R⁵s is independently a hydrocarbon group having 6 or more carbon atoms and each Z is a divalent binding group containing a heteroatom or a direct bond, the thermal storage material having an acid value of 8 or less (to be referred to as "first thermal storage material microcapsules of the present invention" hereinafter),
(2) thermal storage material microcapsules as recited in the above (1), wherein the thermal storage material has a purity of 75 mass% or more,
(3) thermal storage material microcapsules as recited in the above (1), wherein the thermal storage material has a hydroxyl value of 20 or less,
(4) thermal storage material microcapsules encapsulating a thermal storage material, said thermal storage material comprising at least one selected from compounds of the following formulae (I) to (III),

   R¹-X-R² (I)

   wherein each of R¹ and R² is independently a hydrocarbon group having 6 or more carbon atoms and X is a divalent binding group containing a heteroatom,

   R³(-Y-R⁴)n (II)

   wherein R³ is a hydrocarbon group having a valence of n, each of R⁴s is independently a hydrocarbon group having 6 or more carbon atoms and each Y is a divalent binding group containing a heteroatom,

   A(-Z-R⁵)m (III)

   wherein A is an atom, atomic group or binding group having a valence of m, each of R⁵s is independently a hydrocarbon group having 6 or more carbon atoms and each Z is a divalent binding group containing a heteroatom or a direct bond, said thermal storage material having a melting temperature and a coagulation temperature which are different by 5°C or more (to be referred to as "second thermal storage material microcapsules of the present invention" hereinafter),
(5) thermal storage material microcapsules as recited in the above (4), which have coatings formed by an in-situ polymerization method,
(6) thermal storage material microcapsules as recited in the above (5), wherein the thermal storage material has a purity of 91 mass% or more,
(7) thermal storage material microcapsules as recited in the above (5), wherein the thermal storage material has an acid value of 1 or less,
(8) thermal storage material microcapsules as recited in the above (5), wherein the thermal storage material has a hydroxyl value of 3 or less,
(9) thermal storage material microcapsules as recited in any one of the above (5) to (8), which have a volume average particle diameter of 0.1 µm or more but 7 µm or less,
(10) thermal storage material microcapsules as recited in the above (4), which have coatings formed by an interfacial polymerization method or a radical polymerization method,
(11) thermal storage material microcapsules as recited in the above (10), wherein the thermal storage material has a purity of 80 mass% or more,
(12) thermal storage material microcapsules as recited in the above (10), wherein the thermal storage material has an acid value of 3 or less,
(13) thermal storage material microcapsules as recited in the above (10), wherein the thermal storage material has a hydroxyl value of 10 or less,
(14) thermal storage material microcapsules as recited in any one of the above (10) to (13), which have a volume average particle diameter of 0.1 µm or more but 12 µm or less,
(15) thermal storage material microcapsules encapsulating a thermal storage material, said thermal storage material comprising two or more compounds selected from compounds of the following formulae (I) to (III),

   R¹-X-R² (I)

   wherein each of R¹ and R² is independently a hydrocarbon group having 6 or more carbon atoms and X is a divalent binding group containing a heteroatom,

   R³(-Y-R⁴)n (II)

   wherein R³ is a hydrocarbon group having a valence of n, each of R⁴s is independently a hydrocarbon group having 6 or more carbon atoms and each Y is a divalent binding group containing a heteroatom,

   A(-Z-R⁵)m (III)

   wherein A is an atom, atomic group or binding group having a valence of m, each of R⁵s is independently a hydrocarbon group having 6 or more carbon atoms and each Z is a divalent binding group containing a heteroatom or a direct bond, the totals of carbon atoms being different in number by 4 or less between or among the selected compounds (to be referred to as "third thermal storage material microcapsules of the present invention" hereinafter),
(16) thermal storage material microcapsules as recited in the above (15), wherein the content of the most compound of the compounds constituting the thermal storage material is 20 to 95 mass%,
(17) thermal storage material microcapsules encapsulating a thermal storage material and a temperature control agent, said thermal storage material comprising at least one selected from compounds of the following formulae (I) to (III),

   R¹-X-R² (I)

   wherein each of R¹ and R² is independently a hydrocarbon group having 6 or more carbon atoms and X is a divalent binding group containing a heteroatom,

   R³(-Y-R⁴)n (II)

   wherein R³ is a hydrocarbon group having a valence of n, each of R⁴s is independently a hydrocarbon group having 6 or more carbon atoms and each Y is a divalent binding group containing a heteroatom,

   A(-Z-R⁵)m (III)

   wherein A is an atom, atomic group or binding group having a valence of m, each of R⁵s is independently a hydrocarbon group having 6 or more carbon atoms and each Z is a divalent binding group containing a heteroatom or a direct bond,
   said temperature control agent containing at least one of compounds of the following general formulae (IV) and (V), 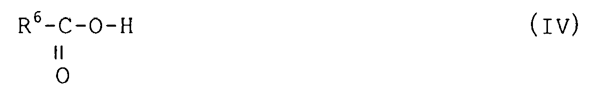 wherein R⁶ is a hydrocarbon group having 8 or more carbon atoms,

   R⁷-O-H (V)

   wherein R⁷ is a hydrocarbon group having 8 or more carbon atoms,
   the temperature control agent and the thermal storage material satisfying the requirement that the number of carbon atoms of a hydrocarbon group having the most carbon atoms in compounds constituting the temperature control agent is greater than the number of carbon atoms of a hydrocarbon group having the most carbon atoms in compounds constituting the thermal storage material by 2 or more (to be referred to as "fourth thermal storage material microcapsules of the present invention" hereinafter),
(18) thermal storage material microcapsules as recited in the above (17), wherein the number of carbon atoms of a hydrocarbon group having the most carbon atoms in the compounds constituting the temperature control agent is greater than the number of carbon atoms of a hydrocarbon group having the most carbon atoms in the compounds constituting the thermal storage material by 4 or more,
(19) thermal storage material microcapsules as recited in the above (17) or (18), which have a temperature control agent content in the range of 0.05 to 3 mass% based on the thermal storage material,
(20) A thermal storage material microcapsule dispersion of the thermal storage material microcapsules recited in any one of the above (1) to (19) in a dispersing medium, and
(21) A thermal storage material microcapsule solid formed of the thermal storage material microcapsules recited in any one of the above (1) to (20) or a plurality of the thermal storage material microcapsules recited in any one of the above (1) to (20) which are bonded together.

The first object of the present invention can be achieved by the first thermal storage material microcapsules of the present invention. In the first thermal storage material microcapsules of the present invention, at least one of the compounds of the general formula (I) to (III) is used as a thermal storage material. The hydrocarbon groups of each of these compounds have 6 or more carbon atoms, and the thermal storage material has an acid value of 8 or less. The first thermal storage material microcapsules therefore have characteristic features that they are not easily dissolved in dispersing media such as water and that they are not easily hydrolyzable in environments where a water content and pH are easily changed. Therefore, when they are used for a long period of time in fields where heating and cooling are repeated, stable thermal properties can be obtained and a high heat amount for melting can be maintained. Further, in the step of micro-encapsulation, most part of the thermal storage material compound forms oil drops to be encapsulated, and the encapsulation ratio is improved. Further, the resultant dispersion of the thermal storage material microcapsules is excellent in dispersion stability.

Each of the above compounds (I) to (III) has two hydrocarbon groups which may be different in the number of carbon atoms, and these two hydrocarbon groups are combined while the numbers of carbon atoms are changed so long as the they have 6 or more carbon atoms, whereby any melting point can be set as required and the above compounds (I) to (III) can be applied to the thermal storage material for use in any one of the low temperature, intermediate temperature and high temperature regions. When the above thermal storage material is used as one in the high temperature region, a high heat amount that cannot obtained with a paraffin wax can be attained, and a prompt thermal response in a phase change can be accomplished. When the above thermal storage material is used as one in the intermediate temperature region, there can be obtained a high heat amount and a prompt thermal response in a phase change which could not obtained with a mixture of aliphatic hydrocarbon compounds.

In the first thermal storage material microcapsules of the present invention, when the purity of the compound for constituting the thermal storage material or the hydroxyl value of the thermal storage material is controlled, a reaction for forming capsule coatings can be smoothly proceeded with without any hindrance, and there can be secured the coating strength sufficient for durability against use for a long period of time which use entails phase changes. Further, the thermal storage material in the state of being micro-encapsulated can be inhibited from starting melting or coagulation at a temperature other than a desired temperature region.

The second object of the present invention can be achieved by the second thermal storage material microcapsules of the present invention. In the second thermal storage material microcapsule of the present invention, the melting temperature and the coagulation temperature of the compound constituting the thermal storage material differ by 5°C or more, and the heat absorption during melting and the heat release during coagulation are performed in different temperature regions. While using only one thermal storage material, therefore, the second thermal storage material microcapsules can be applied to the use fields that require different heat absorption and heat release temperature regions. In the second thermal storage material microcapsules of the present invention, the purity, acid value and hydroxyl value of the thermal storage material, the volume average particle diameter of the microcapsules and the method of forming coatings are combined in multiple ways, whereby the difference between the melting temperature and the coagulation temperature can be controlled as required. Further, since the above temperature difference does not easily vary with time, the second thermal storage material microcapsules of the present invention can be advantageously used in the use fields that require durability.

The above third object of the present invention can be achieved by the third thermal storage material microcapsules of the present invention. That is, the temperature property that could not be attained by aliphatic hydrocarbon compounds can be attained by thermal storage material microcapsules encapsulating two or more compounds of the compounds of the general formulae (I) to (III) in which the totals of carbon atoms are different in number by 4 or less between or among the selected compounds. That is, when it is required to set an intended melting temperature (or coagulation temperature) at an arbitrary temperature, the third thermal storage material microcapsules of the present invention has the temperature property of exhibiting such a required one melting temperature (or coagulation temperature) without causing any one of a decrease in heat amount for melting (heat amount for coagulation) and the dividing of the melting temperature region (or coagulation temperature region) into two or more regions.

The fourth object of the present invention can be achieved by the fourth thermal storage material microcapsules of the present invention. That is, the thermal storage material microcapsules encapsulate a temperature control agent containing at least one selected from the compounds of the general formula (IV) and (V) together with the thermal storage material, whereby the difference between the melting temperature and the coagulation temperature can be decreased. That is, the heat absorption during melting and the heat release during coagulation can be caused to take place at almost the same temperatures. Therefore, even in the use fields where a change in environmental temperature is small, the heat amount for melting and the heat amount for coagulation that the thermal storage material encapsulated in the microcapsules originally have can be mostly utilized, and the effective use heat amount per mass of the thermal storage material can be increased. Further, the fourth thermal storage material microcapsules of the present invention can be suitably used in the use fields that require durability, since the above difference between the melting temperature and the coagulation temperature does not easily change with time.

### Preferred Embodiments for Practicing the Invention

At the outset, the first thermal storage material microcapsules of the present invention will be explained.

The first thermal storage material microcapsules of the present invention are thermal storage material microcapsules encapsulating a thermal storage material, said thermal storage material comprising at least one selected from compounds of the following formulae (I) to (III),

R¹-X-R² (I)

wherein each of R¹ and R² is independently a hydrocarbon group having 6 or more carbon atoms and X is a divalent binding group containing a heteroatom,

R³(-Y-R⁴)n (II)

wherein R³ is a hydrocarbon group having a valence of n, each of R⁴s is independently a hydrocarbon group having 6 or more carbon atoms and each Y is a divalent binding group containing a heteroatom,

A(-Z-R⁵)m (III)

wherein A is an atom, atomic group or binding group having a valence of m, each of R⁵s is independently a hydrocarbon group having 6 or more carbon atoms and each Z is a divalent binding group containing a heteroatom or a direct bond, the thermal storage material having an acid value of 8 or less.

In the general formula (I),

R¹-X-R² (I)

each of R¹ and R² is independently a hydrocarbon group having 6 or more carbon atoms, that is, they may be the same or different hydrocarbon groups having 6 or more carbon atoms each. Specific examples thereof include linear hydrocarbon groups such as hexyl, heptyl, octyl, nonyl, decyl, undecyl, dodecyl, tridecyl, tetradecyl, pentadecyl, hexadecyl, heptadecyl, octadecyl, nonadecyl, eicosyl, heneicosyl, docosyl, tricosyl, tetracosyl, pentacosyl, hexacosyl, octacosyl, nonacosyl, triacontyl, hentriacontyl, dotriacontyl, tritriacontyl, tetratriacontyl, pentatriacontyl, hexatriacontyl, heptatriacontyl, octatriacontyl, nonatriacontyl, tetracontyl, hentetracontyl, dotetracontyl, tritetracontyl, tetratetracontyl, pentatetracontyl, hexatetracontyl, heptatetracontyl, octatetracontyl, nonatetracontyl, pentacontyl, etc., branched hydrocarbon groups such as 2-ethylhexyl, 2-ethyloctyl, isododecyl, isooctadecyl, etc., and hydrocarbon groups having an unsaturated bond such as hexenyl, peptenyl, octenyl, nonenyl, decenyl, undecenyl, dodecyl, tridecenyl, tetradecenyl, pentadecenyl, hexadecenyl, heptadecenyl, octadecenyl, nonadecenyl, eicosenyl, heneicosenyl, docosenyl, tricosenyl, tetracosenyl, pentacosenyl, hexacosenyl, heptacosenyl, octacosenyl, nonacosenyl, triacontenyl, hentriacontenyl, dotriacontenyl, tritriacontenyl, tetratriacontenyl, pentatriacontenyl, hexatriacontenyl, heptatriacontenyl, octatriacontenyl, nonatriacontenyl, tetracontenyl, hentetracontenyl, dotetracontenyl, tritetracontenyl, tetratetracontenyl, pentatetracontenyl, hexatetracontenyl, heptatetracontenyl, octatetracontenyl, nonatetracontenyl, pentacontenyl, etc. In R¹ and R², the number of carbon atoms is more preferably 8 to 60, still more preferably 10 to 40. When the number of carbon atoms is less than 8, the stability against hydrolysis may be decreased, or the heat amount may be insufficient for a necessary amount. When the number of carbon atoms exceeds 60, a raw material may be expensive since the amount of natural occurring materials is very small.

In the general formula (I), X is a binding group containing a heteroatom, and specific examples thereof include the following groups.

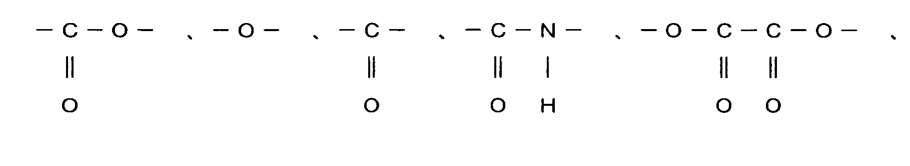

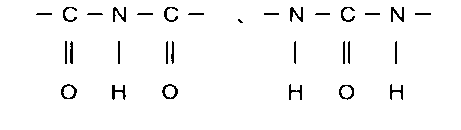

In the general formula (II),

R³(-Y-R⁴)n (II)

R³ is a hydrocarbon group having a valence of n, and the valence of n as used herein means that the number of sites that bond to Y's is n. R³ includes saturated hydrocarbon groups, unsaturated hydrocarbon groups, aromatic-ring-containing hydrocarbon groups, cycloparaffin-ring-containing hydrocarbon groups, etc., and specific examples thereof include the following groups. 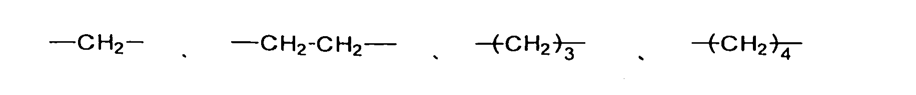 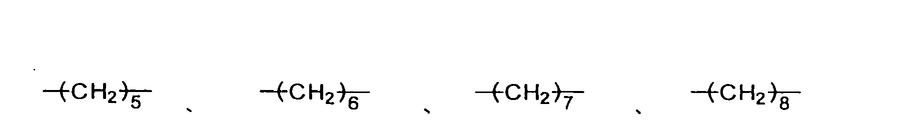 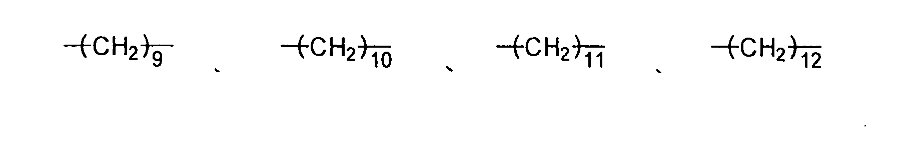 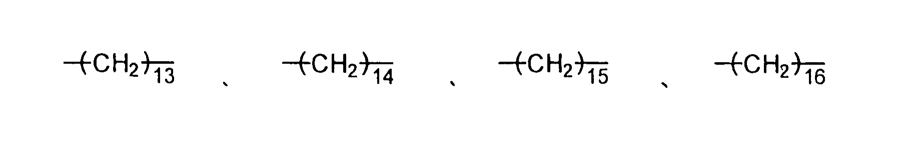 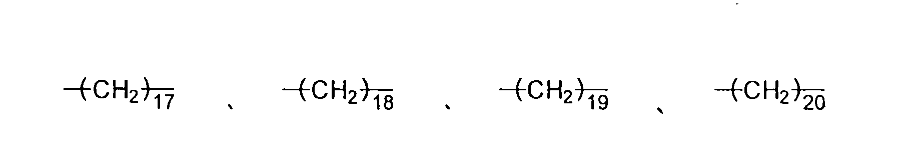 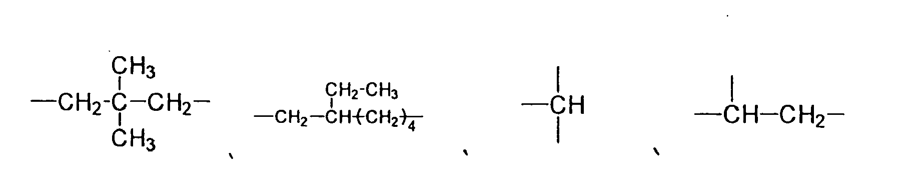 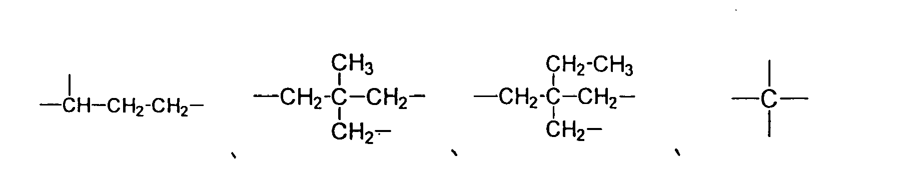 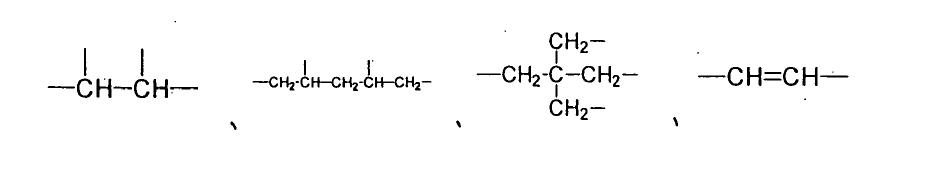 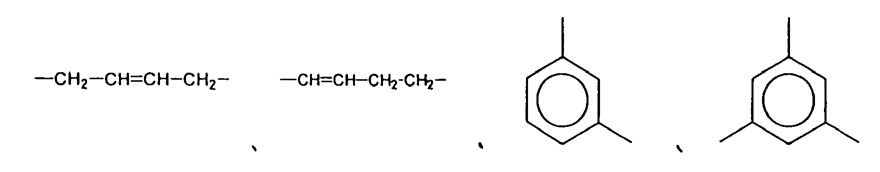 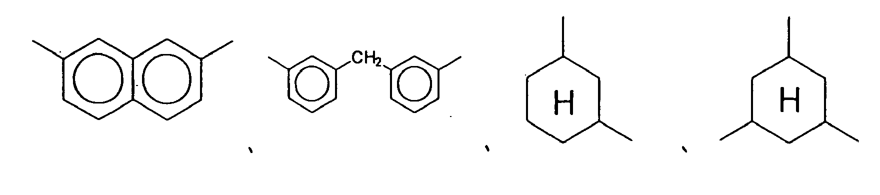 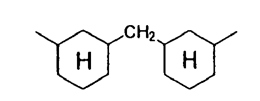 Further, n is an integer of 2 or more, and it is preferably in the range of 2 to 60.

In the general formula (II), each of R⁴s is independently a hydrocarbon group having 6 or more carbon atoms, that is, they may be the same or different hydrocarbon groups having 6 or more carbon atoms. Specific examples thereof include linear hydrocarbon groups such as hexyl, heptyl, octyl, nonyl, decyl, undecyl, dodecyl, tridecyl, tetradecyl, pentadecyl, hexadecyl, heptadecyl, octadecyl, nonadecyl, eicosyl, heneicosyl, docosyl, tricosyl, tetracosyl, pentacosyl, hexacosyl, heptacosyl, octacosyl, nonacosyl, triacontyl, hentriacontyl, dotriacontyl, tritriacontyl, tetratriacontyl, pentatriacontyl, hexatriacontyl, heptatriacontyl, octatriaconyl, nonatriacontyl, tetracontyl, hentetracontyl, dotetracontyl, tritetracontyl, tetratetracontyl, pentatetraconyl, hexatetracontyl, heptatetracontyl, octatetracontyl, nonatetracontyl, pentacontyl, etc., branched hydrocarbon groups such as 2-ethylhexyl, e-ethyloctyl, isododecyl, isooctadecyl, etc., and hydrocarbon groups having an unsaturated bond such as hexenyl, heptenyl, octenyl, nonenyl, decenyl, undecenyl, dodecenyl, tridecenyl, tetradecenyl, pentadecenyl, hexadecenyl, heptadecenyl, octadecenyl, nonadecenyl, eicosenyl, heneicosenyl, docosenyl, tricosenyl, tetracosenyl, pentacosenyl, hexacosenyl, heptacosenyl, octaconsenyl, nonacosenyl, triacontenyl, hentriacontenyl, dotriacontenyl, tritriacontenyl, tetratriacontenyl, pentatriacontenyl, hexatriacontenyl, heptatriacontenyl, octatriacontenyl, nonatriacontenyl, tetracontenyl, hentetracontenyl, dotetracontenyl, tritetracontenyl, tetratetracontenyl, pentatetracontenyl, hexatetracontenyl, heptatetracontenyl, octatetracontenyl, nonatetracontenyl, pentatetracontenyl, etc. In R⁴s, the number of carbon atoms is more preferably 8 to 60, still more preferably 10 to 40. When the number of carbon atoms is less than 8, the stability against hydrolysis may be decreased, or the heat amount may be insufficient for a necessary amount. When the number of carbon atoms exceeds 60, a raw material may be expensive since the amount of natural occurring materials is very small.

In the general formula (II), each Y is a divalent binding group containing a heteroatom, and specific examples thereof include the following groups.

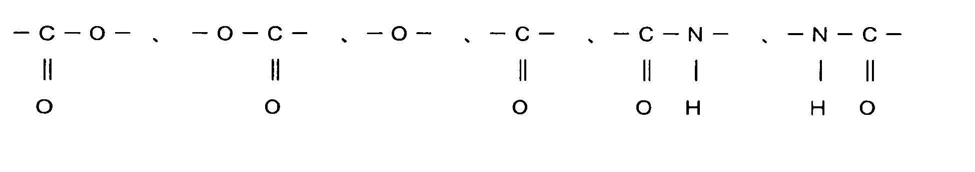

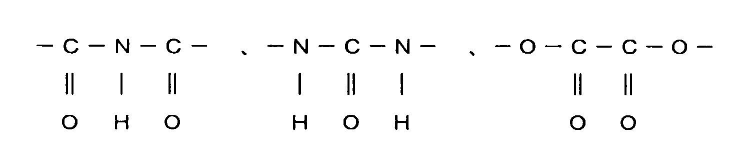

In the general formula (III),

A(-Z-R⁵)m (III),

each of R⁵s is independently a hydrocarbon group having 6 or more carbon atoms, that is, they may be the same or different hydrocarbon groups having 6 or more carbon atoms each. Specific examples thereof include linear hydrocarbon groups such as hexyl, heptyl, octyl, nonyl, decyl, undecyl, dodecyl, tridecyl, tetradecyl, pentadecyl, hexadecyl, heptadecyl, octadecyl, nonadecyl, eicosyl, heneicosyl, docosyl, tricosyl, tetracosyl, pentacosyl, hexacosyl, heptacosyl, octacosyl, nonacosyl, triacontyl, hentriacontyl, dotriacontyl, tritriancontyl, tetratriacontyl, pentatetracontyl, hexatriacontyl, heptatriacontyl, octatriacontyl, octatriacontyl, nonatriacontyl, hentetracontyl, dotetracontyl, tritetracontyl, tetratetracontyl, pentatetracontyl, hexatetracontyl, heptatetracontyl, octatetracontyl, nonatetracontyl, pentacontyl, etc., branched hydrocarbon groups such as 2-ethylhexyl, 2-ethyloctyl, isododecyl, isooctadodecyl, etc., and hydrocarbon groups having an unsaturated bond such as hexenyl, heptenyl, octenyl, nonenyl, decenyl, undecenyl, dodecenyl, tridecenyl, tetradecenyl, pentadecenyl, hexadecenyl, heptadecenyl, octadecenyl, nonadecenyl, eicosenyl, heneicosenyl, docosenyl, tricosenyl, tetracosenyl, pentacosenyl, hexacosenyl, heptacosenyl, octaconsenyl, nonacosenyl, triacontenyl, hentriacontenyl, dotriacontenyl, tritriacontenyl, tetratriacontenyl, pentatriacontenyl, hexatriacontenyl, heptatriacontenyl, octatriacontenyl, nonatriacontenyl, tetracontenyl, hentetracontenyl, dotetracontenyl, tritetracontenyl, tetratetracontenyl, pentatetracontenyl, hexatetracontenyl, heptatetracontenyl, octatetracontenyl, nonatetracontenyl, pentatetracontenyl, etc. In R⁵s, the number of carbon atoms is more preferably 8 to 60, still more preferably 10 to 40. When the number of carbon atoms is less than 8, the stability against hydrolysis may be decreased or the heat amount may be insufficient for a necessary amount. When the number of carbon atoms exceeds 60, a raw material may be expensive since the amount of natural occurring materials is very small.

In the general formula (III), each Z is a divalent binding group containing a heteroatom or a direct bond. Specific examples of the binding group containing a heteroatom include those that are described with regard to the above Y.

In the general formula (III), A is an atom, an atomic group or binding group having a valence of m, and the valence of m as used herein means that the number of sites that bond to Z's is m. Specific examples of A include a nitrogen atom, a sulfur atom, an oxygen atom, a silicon atom, a phosphorus atom, a heterocyclic ring, a hydrocarbon group containing a heteroatom, etc. Further, m is an integer of 2 or more, and m is preferably an integer of 2 to 60.

The hydrocarbon groups having 6 or more carbon atoms independently, represented by the above R¹, R², R⁴ and R⁵, are preferably linear saturated hydrocarbon groups in view of their heat amounts for melting and harmfulness.

The compound contained in the thermal storage material is particularly preferably a fatty acid ester compound that is obtained from a fatty acid and a monohydric alcohol and corresponds to the above general formula (I), a diester compound that is obtained from a dibasic acid and a monohydric alcohol and corresponds to the above general formula (II), an ester compound that is obtained from a polyhydric alcohol and a fatty acid and corresponds to the above general formula (II), an N-substituted aliphatic acid amide compound corresponding to the above general formula (I) and a ketone compound corresponding to the above general formula (I). Above all, the fatty acid ester compound corresponding to the above general formula (I) can be suitably used for reasons that raw materials are easily available and that its synthesis is easy. That is, it is an ester compound of the general formula (I) in which X is a - COO- bond, R¹ is a hydrocarbon group having 6 or more carbon atoms and R² is a hydrocarbon group having 6 or more carbon atoms. The numbers of carbon atoms of the hydrocarbon groups represented by R¹ and R² may be the same or different. The numbers of carbon atoms of the hydrocarbon groups represented by R¹ and R² are more preferably in the range of 8 to 60, still more preferably in the range of 10 to 40, respectively. The hydrocarbon group represented by R¹ and R² are most preferably linear and saturated.

When the present inventors have made diligent studies, it has been found that the content of a hydrophilic group is also an important factor for obtaining thermal storage material microcapsules that exhibit excellent performances. For example, when it is intended to obtain an ester compound that is a compound of the general formula (I) in which X is a -COO- bond, R¹ is a hydrocarbon group having 6 or more carbon atoms and R² is a hydrocarbon group having 6 or more carbon atoms, the intended ester represented by R¹-COO-R² is obtained by reacting a carboxylic acid compound represented by R¹-COOH with an alcohol compound represented by R²-OH. In this reaction, however, an unreacted carboxylic acid compound and an unreacted alcohol compound sometimes remain although their amounts are small. This is also true of reactions for the compounds of the general formula (I) and the general formula (II). When these unreacted carboxylic acid compound and alcohol compound remain, it follows that a carboxyl group and a hydroxyl group that are hydrophilic groups are contained. The content of the carboxyl group can be found on the basis of an acid value, and the content of the hydroxyl group can be found on the basis of a hydroxyl value. Further, for example, in the compound of the general formula (III), A in the formula (III) may contain functional groups such as a carboxyl group, a hydroxyl group, etc., which do not take part in the bonding to Z, so long as their contents are very small. The contents of them can be found on the basis of an acid value and a hydroxyl value as described above.

In the first thermal storage material microcapsules of the present invention, the acid value of the above thermal storage material is preferably 5 or less, more preferably 3 or less. In the present invention, the hydroxyl value of the thermal storage material is preferably 20 or less, more preferably 10 or less, still more preferably 5 or less. When the thermal storage material has an acid value of over 8 or a hydroxyl value of over 20, the proceeding of a reaction for forming capsule coatings is sometimes partially hampered by a carboxylic acid compound, an alcohol compound, etc., which have remained as impurities or unreacted compounds in the thermal storage material, and sometimes there cannot be ensured the coating strength sufficient for use that involves the repeat of phase changes for a long period of time. Of the acid value and the hydroxyl value, the acid value in particular has a large influence on the coating strength. In the present specification, the acid value and the hydroxyl value of the thermal storage material refer to values measured according to JIS K0070, and the units of both the acid value and the hydroxyl value are mgKOH/g.

In the first thermal storage material microcapsules of the present invention, the purity of the thermal storage material is preferably 75 mass% or more, more preferably 80 mass% or more, still more preferably 85 mass% or more. When the purity of the thermal storage material is less than 75 mass%, the thermal storage material in the state of being micro-encapsulated may start melting or coagulation at a temperature other than the desired temperature region, and the amount of heat for melting or coagulation in the desired temperature region may be decreased. In the present specification, the purity of the thermal storage material means a total content (mass%) of the compounds of the above general formulae (I) to (III) in the thermal storage material. The purity of the thermal storage material can be measured by a gas chromatography method, a liquid chromatography method or the like. In the gas chromatography method, it is measured according to JIS K0114 and an area percentage method or an area percentage correction method can be suitably applied. In the liquid chromatography method, it is measured according to JIS K0124.

The above thermal storage material may contain a specific gravity adjusting agent, an anti-degrading agent, a super-cooling preventing agent, etc. When these additives are contained, it is sufficient to ensure that the ratio of total weight of the compounds of the above general formulae (I) to (III) based on the total weight of the thermal storage material including the additives satisfies the above purity range of the thermal storage material.

The melting point of the thermal storage material in a state prior to its micro-encapsulation is not specially limited. When the thermal storage material is a compound having a melting point of 100°C or more, it can be micro-encapsulated in an aqueous medium by carrying out an emulsification-reaction in an autoclave. For availability of general micro-encapsulation facilities, the melting point of the thermal storage material in a state prior to the micro-encapsulation is set in the range of approximately -50 to 100°C, preferably in the range of -20 to 90°C.

As a method for producing the thermal storage material microcapsules of the present invention, any one of a physical method and a chemical method may be employed. For example, the method can be selected from an encapsulation method according to a complex emulsion method, described in JP62-1452A, etc., a method in which a thermoplastic resin is sprayed to surfaces of thermal storage material particles, described in JP62-45680A, etc., a method in which a thermoplastic resin is formed on surfaces of thermal storage material particles in a liquid, described in JP62-149334A, a method in which a monomer is polymerized on surfaces of thermal storage material particles to coat them, described in JP62-225241A, etc., a method for producing polyamide-coated microcapsules according to a reaction of interfacial polycondensation, described in JP2-258052A, etc., and the like. In general, the coating material for the microcapsules can be selected from polystyrene, polyacrylonitrile, poly(meth)acrylate, polyamide, polyacrylamide, ethyl cellulose, polyurethane and an aminoplast resin which are obtained by procedures according to an interfacial polymerization method, an in-situ polymerization method, a radical polymerization method, etc., a resin that is synthesized by a coacervation method using gelatin and carboxymethylcellulose or gum Arabic, or natural resins.

The coating of the thermal storage material microcapsules of the present invention can be selected from polystyrene, polyacrylonitrile, poly(meth)acrylate, polyamide, polyacrylamide, ethyl cellulose and polyurethane, an aminoplast resin, which are obtained by an interfacial polymerization method, an in-situ method, a radical polymerization method, or the like, a resin obtained by a coacervation method using gelatin and carboxymethyl cellulose or gum Arabic or a natural resin. A melamine formalin resin, a urea formalin resin, polyamide, polyurea and polyurethane are preferred, and it is particularly preferred to use microcapsules having a melamine formalin resin or urea formalin resin coating that is formed by a physically and chemically stable in-situ method.

The volume average particle diameter of the first thermal storage material microcapsules of the present invention is preferably in the range of 0.1 to 50 µm, more preferably in the range of 0.5 to 20 µm. When the volume average particle diameter is larger than 50 µm, the thermal storage material microcapsules are sometimes less durable against the mechanical shearing force. When the volume average particle diameter is smaller than 0.1 µm, the coating thickness is small and the thermal storage material microcapsules are poor in heat resistance although they are kept from breaking. In the present specification, the volume average particle diameter refers to an average particle diameter of conversion values from volumes of microcapsule particles, and in principle, it means a particle diameter obtained by sifting out smaller particles little by little from particles having a certain volume and determining a particle diameter when a particle corresponding to a 50 % volume of the certain volume is separated. While the volume average particle diameter can be measured by microscopic observation, it can be measured with a commercially available electric or optical particle diameter measuring apparatus. Volume average particle diameters in Examples to be described later were measured with a particle size measuring apparatus, Multisizer II, supplied by Coulter Corporation of USA.

The second thermal storage material microcapsules of the present invention will be explained below.

The second thermal storage material microcapsules of the present invention are thermal storage material microcapsules encapsulating a thermal storage material, said thermal storage material comprising at least one selected from compounds of the following formulae (I) to (III),

R¹-X-R² (I)

wherein each of R¹ and R² is independently a hydrocarbon group having 6 or more carbon atoms and X is a divalent binding group containing a heteroatom,

R³(-Y-R⁴)n (II)

wherein R³ is a hydrocarbon group having a valence of n, each of R⁴s is independently a hydrocarbon group having 6 or more carbon atoms and each Y is a divalent binding group containing a heteroatom,

A(-Z-R⁵)m (III)

wherein A is an atom, atomic group or binding group having a valence of m, each of R⁵s is independently a hydrocarbon group having 6 or more carbon atoms and each Z is a divalent binding group containing a heteroatom or a direct bond, said thermal storage material having a melting temperature and a coagulation temperature which are different by 5°C or more.

While containing at least one of the compounds of the general formulae (I) to (III), the second thermal storage material microcapsules of the present invention can be applied to a use field where the heat absorption and heat release temperature regions are required to be different.

In the second thermal storage material microcapsules of the present invention, the thermal storage material contains at least one of the compounds of the general formulae (I) to (III) like the thermal storage material of the first thermal storage material microcapsules of the present invention, and specific examples of the compounds of the general formulae (I) to (III) include those which are explained with regard to the first microcapsules of the present invention.

In the second thermal storage material microcapsules of the present invention, the difference between the melting temperature and the coagulation temperature of the thermal storage material is at least 5°C, and the upper limit value of this temperature difference is not specially restricted since the object of the present invention can be achieved so long at it is 5°C or more. For adjusting the temperature difference to over 35°C, for example, it is sometimes required to decrease the volume average particle diameter to such an extent that it is less than 0.1 µm. However, when the volume average particle diameter of the thermal storage material microcapsules is approximately less than 0.1 µm, the coating thickness is extremely small and the microcapsules are sometimes poor in heat resistance. Therefore, the difference between the melting temperature and the coagulation temperature of the thermal storage material in the state of being micro-encapsulated is preferably 35°C or smaller.

In the present specification, the melting temperature and coagulation temperature of the thermal storage material correspond respectively to an onset temperature of leading edge of a heat capacity curve (temperature at a point of intersection of a base line and a tangent line of the heat absorption curve) caused by the melting behavior of the thermal storage material in the state of being micro-encapsulated during an increase in temperature and an onset set temperature of leading edge of a heat capacity curve (temperature at a point of intersection of a base line and a tangent line of the heat absorption curve) caused by the coagulation behavior of the thermal storage material in the state of being micro-encapsulated during an increase in temperature during a decrease in temperature when the obtained thermal storage material microcapsules in a sample amount of 2 ±0.2 mg are measured at a temperature elevation rate of 10°C/minute or a temperature decrease rate of 10°C/minute with a differential scanning calorimeter (DSC-7, supplied by Perkin Elmer Inc. of USA).

In the second thermal storage material microcapsules of the present invention, the coatings of their microcapsules are preferably formed by an in-situ polymerization method, an interfacial polymerization method or a radical polymerization method. Since the preferred ranges of the purity, acid value and hydroxyl value of the thermal storage material to be used and the preferred range of the volume average particle diameter of the microcapsules to be obtained are different depending upon the methods for forming the coatings of the microcapsules, these items will be explained below with regard to each of the methods for forming the coatings of the microcapsules.

When the coatings of the thermal storage material microcapsules are formed by an in-situ polymerization method, the purity of the thermal storage material is preferably 91 mass% or more, more preferably 95 mass%. When the purity of the thermal storage material is less than 91 mass%, the difference between the melting temperature and coagulation temperature of the thermal storage material in the state of being micro-encapsulated may be sometimes less than 5°C or the coagulation temperature may vary due to the coagulation promoting action by impurities or the coagulation, precipitation and nucleating actions of impurities per se, so that it is sometimes difficult to unify the temperature difference.

When the coatings of the thermal storage material microcapsules are formed by an in-situ polymerization method, the acid value of the thermal storage material is preferably 1 or less, more preferably 0.5 or less. Further, the hydroxyl value of the thermal storage material is preferably 3 or less, more preferably 1.5 or less. When the thermal storage material has an acid value of over 1 or a hydroxyl value of over 3, the difference between the melting temperature and coagulation temperature of the thermal storage material in the state of being micro-encapsulated may be sometimes less than 5°C or the coagulation temperature may vary due to the coagulation promoting action and the coagulation, precipitation and nucleating actions by a carboxylic acid compound and an alcohol compound, so that it is sometimes difficult to unify the temperature difference.

In the second thermal storage material microcapsules of the present invention, the volume average particle diameter of the thermal storage material microcapsules is also an important factor for ensuring that the difference between the melting temperature and the coagulation temperature of the thermal storage material is 5°C or more. Further, the above volume average particle diameter also has a strong correlation with the purity, acid value, hydroxyl value or coating material of the thermal storage material. In the second thermal storage material microcapsules of the present invention in which the coatings are formed by an in-situ polymerization method, when the thermal storage material used has a purity of 91 mass% or more and/or an acid value of 1 or less and/or a hydroxyl value of 3 or less, the volume average particle diameter of the thermal storage material microcapsules is preferably 4 µm or less, more preferably 3 µm or less, for ensuring that the difference between the melting temperature and the coagulation temperature of the thermal storage material is 5°C or more. Further, when the thermal storage material used has more highly pure properties of as high as a purity of 95 mass% or more and/or an acid value of 0.5 or less and/or a hydroxyl value of 1.5 or less, the allowable range of the particle diameter is a broader, and the above volume average particle diameter is preferably 7 µm or less, more preferably 5 µm or less.

In the second thermal storage material microcapsules of the present invention in which the coatings are formed by an in-situ polymerization method, when the thermal storage material used has a purity of 91 mass% or more and/or an acid value of 1 or less and/or a hydroxyl value of 3 or less, and when the volume average particle diameter of the thermal storage material microcapsules exceeds 4 µm, it is sometimes difficult to maintain the difference between the melting temperature and the coagulation temperature of the thermal storage material in the intended range. Further, when the thermal storage material for use has a purity of 95 mass% and/or an acid value of 0.5 or less and/or a hydroxyl value of 1.5 or less, and when the volume average particle diameter of the thermal storage material microcapsules exceeds 7 µm, it is sometimes difficult to maintain the difference between the melting temperature and the coagulation temperature of the thermal storage material in the intended range. While the lower limit value of the volume average particle diameter is not specially restricted, the volume average particle diameter is preferably 0.1 µm or more, more preferably 0.5 µm or more. That is, when the volume average particle diameter is less than 0.1 µm, the coating thickness is extremely small, and the thermal storage material microcapsules are poor in heat resistance.

When the coatings of the thermal storage material microcapsules are formed by an interfacial polymerization method or a radical polymerization method, it is efficiently ensured that the temperature difference between the melting temperature and the coagulation temperature is 5°C or more. The reason therefor is assumed to be that the smoothness of inside surface of each coating formed by an interfacial polymerization method or a radical polymerization method is high as compared with that of such coatings formed by any other encapsulation method. In the inside surface of each coating obtained by an encapsulation method other than the interfacial polymerization method or radial polymerization method, nucleating is liable to take place in its portion of microscopic valleys and hills and the coagulation promoting action is brought about, while it is assumed that the coagulation promoting action does not easily take place in the inside surface of each coating obtained by the interfacial polymerization or radical polymerization method since the inside surfaces are smooth. In the thermal storage material microcapsules having resin coatings formed by the interfacial polymerization method or radical polymerization method, therefore, the allowable ranges of the purity, acid value and hydroxyl value of the thermal storage material are broader than those of coatings formed by any other encapsulation method. As a coating material for the microcapsules to be obtained by the interfacial polymerization method or radical polymerization, polystyrene, polyacrylonitrile, poly(meth)acrylate, polyacrylamide, polyamide, polyurea, polyurethaneurea, polyurethane, etc., are suitably used.

When the coatings of the thermal storage material microcapsules are formed by the interfacial polymerization method or radical polymerization method, the purity of the thermal storage material is preferably adjusted to 80 mass% or more, more preferably, to 91 mass% or more. When the purity of the thermal storage material is less than 80 mass%, the difference between the melting temperature and coagulation temperature of the micro-encapsulated thermal storage material may be sometimes less than 5°C or the coagulation temperature may vary due to the coagulation promoting action by impurities or the coagulating, precipitating and nucleating actions of impurities per se, so that it is sometimes difficult to unify the temperature difference.

When the coatings of the thermal storage material microcapsules are formed by the interfacial polymerization method or radical polymerization method, the acid value of the thermal storage material is preferably 3 or less, more preferably 1 or less. The hydroxyl value of the thermal storage material is preferably 10 or less, more preferably 3 or less. When the thermal storage material has an acid value of over 3 or a hydroxyl value of over 10, the difference between the melting temperature and coagulation temperature of the thermal storage material in the state of being micro-encapsulated may be sometimes less than 5°C or the coagulation temperature may vary due to the coagulation promoting action and the coagulation, precipitation and nucleating actions by a carboxylic acid compound and an alcohol compound, so that it is sometimes difficult to unify the temperature difference.

In the second thermal storage material microcapsules of the present invention, the purity, acid value and hydroxyl value of the thermal storage material are all important factors, while the acid value in particular is the factor that sharply influences the difference between the melting temperature and the coagulation temperature of the micro-encapsulated thermal storage material and the variation of the coagulation temperature.

Further, when the coatings of the thermal storage material microcapsules are formed by the interfacial polymerization method or radical polymerization method, and when the thermal storage material for use has a purity of 80 mass% or more and/or an acid value of 3 or less and/or a hydroxyl value of 10 or less, the volume average particle diameter of the thermal storage material is preferably 12 µm or less, more preferably 10 µm or less. Further, when the coatings of the thermal storage material microcapsules are formed by the interfacial polymerization method or radical polymerization method, and when the thermal storage material used has more highly pure properties of as high as a purity of 91 mass% or more and/or an acid value of 1 or less and/or a hydroxyl value of 3 or less, the allowable range of the particle diameter is a broader, and the volume average particle diameter is preferably 20 µm or less, more preferably 15 µm or less. When the thermal storage material used has a purity of 80 mass% or more and/or an acid value of 3 or less and/or a hydroxyl value of 10 or less, and when the volume average particle diameter exceeds 12 µm, it is sometimes difficult to maintain the difference between the melting temperature and the coagulation temperature of the micro-encapsulated thermal storage material in the intended range. Further, when the thermal storage material used has more highly pure properties of as high as a purity of 91 mass% or more and/or an acid value of 1 or less and/or a hydroxyl value of 3 or less, and when the volume average particle diameter exceeds 20 µm, it is likewise sometimes difficult to maintain the difference between the melting temperature and the coagulation temperature of the micro-encapsulated thermal storage material in the intended range.

When the coatings of the thermal storage material microcapsules are formed by the interfacial polymerization method or radical polymerization method, the volume average particle diameter of the microcapsules is preferably 0.1 µm or more, more preferably 0.5 µm or more. That is, when the volume average particle diameter is.less than 0.1 µm, the coating thickness is extremely small, and the thermal storage material microcapsules are poor in heat resistance.

In the second thermal storage material microcapsules of the present invention, the kind and content of additives that the thermal storage material may contain, the melting point of the thermal storage material, the method for producing the thermal storage material microcapsules and the coating material for the microcapsules are the same as those which are explained with regard to the first thermal storage material microcapsules of the present invention.

The third thermal storage material microcapsules of the present invention will be explained below.

The third thermal storage material microcapsules of the present invention are thermal storage material microcapsules encapsulating a thermal storage material, said thermal storage material comprising two or more compounds selected from compounds of the following formulae (I) to (III),

R¹-X-R² (I)

wherein each of R¹ and R² is independently a hydrocarbon group having 6 or more carbon atoms and X is a divalent binding group containing a heteroatom,

R³(-Y-R⁴)n (II)

wherein R³ is a hydrocarbon group having a valence of n, each of R⁴s is independently a hydrocarbon group having 6 or more carbon atoms and each Y is a divalent binding group containing a heteroatom,

A(-Z-R⁵)m (III)

wherein A is an atom, atomic group or binding group having a valence of m, each of R⁵s is independently a hydrocarbon group having 6 or more carbon atoms and each Z is a divalent binding group containing a heteroatom or a direct bond, the totals of carbon atoms being different in number by 4 or less between or among the selected compounds.

In the third thermal storage material microcapsules of the present invention contain, the thermal storage material contains compounds selected from the compounds of the general formulae (I) to (III) like the above first thermal storage material microcapsules of the present invention, and specific examples of the compounds of the general formulae (I) to (III) include those which are explained with regard to the above first microcapsules of the present invention.

In the third thermal storage material microcapsules of the present invention, the thermal storage material contains two or more compounds selected from the compounds of the above general formulae (I) to (III), and the totals of carbon atoms are different in number by 4 or less between or among the selected compounds. As an example in which the totals of carbon atoms are different in number by 4 or less between or among the selected compounds, there is a case where a compound of the general formula (I) in which X is a -COO- bond, R¹ is a tridecyl group having 13 carbon atoms and R² is a dodecyl group having 12 carbon atoms, which is an ester compound (total of carbon atoms = 26) and a compound of the general formula (I) in which X is a -COO-bond, R¹ is an undecyl group having 11 carbon atoms and R² is a dodecyl group having 12 carbon atoms, which is an ester compound (total of carbon atoms = 24) (difference of totals in number = 2). When two or more compounds in which the totals of carbon atoms are different in number by 4 or less are mixed and micro-encapsulated, there can be obtained the temperature property of exhibiting one melting temperature (or coagulation temperature) without causing any one of a decrease in the heat amount for melting (or the heat amount for coagulation) and the dividing of the melting temperature region (or the coagulation temperature region) into two or more regions, even when it is required to set an intended melting temperature (or coagulation temperature).

On the other hand, when a thermal storage material used contains two or more compounds in which the totals of carbon atoms are different in number by 5 or more, there is sometimes caused a phenomenon that is like a phenomenon caused when two or more aliphatic hydrocarbon compounds are used. That is, the heat amount for melting (or heat amount for coagulation) of a mixture of the above two or more compounds is sometimes greatly lower than the heat amounts for melting (or heat amounts for coagulation) of the respective compounds, or the temperature region at which the melting temperature, i.e., heat absorption is exhibited (or the temperature region at which coagulation temperature, i.e., heat release is exhibited) is sometimes divided into two or more.

The content of the most compound of the compounds constituting the thermal storage material is preferably 20 to 95 mass%, more preferably 25 to 90 mass%, still more preferably 30 to 85 mass%. When the content of the most compound is smaller than 20 mass%, it follows that the thermal storage material at least contains more than five compounds, and the number of constituent compounds is large. Therefore, the heat amount for melting (or heat amount for coagulation) may be sometimes decreased, and the phase change response during phase change is poor. That is, the temperature range from the start of melting to the end of the melting (or temperature range from the start of coagulation to the end of the coagulation) may be sometimes broadened. Further, when the content of the most compound exceeds 95 mass%, the difference between the melting temperature and the coagulation temperature of the thermal storage material at a stage prior to micro-encapsulation may be sometimes increased. That is, a super-cooling phenomenon may sometimes grow large. When the thermal storage material that grows this super-cooling phenomenon large is micro-encapsulated, even if an additive that works as a super-cooling preventing agent is added, there is no case where the difference between the melting temperature and the coagulation temperature of the thermal storage material microcapsules is smaller than the difference between the melting temperature and the coagulation temperature which the thermal storage material exhibits before its micro-encapsulation. That is, a super-cooling phenomenon takes place in the thermal storage material microcapsules as well, which may be a hindrance to the use filed where the difference between the melting temperature and the coagulation temperature is decreased (for example, the temperature difference should be approximately 5°C or smaller).

In the third thermal storage material microcapsules of the present invention, the purity, acid value and hydroxyl value of the thermal storage material, the kind and content of additives that the thermal storage material may contain, the melting point of the thermal storage material, the method for producing the thermal storage material microcapsules and the coating material for the microcapsules are the same as those which are explained with regard to the first thermal storage material microcapsules of the present invention.

The volume average particle diameter of the third thermal storage material microcapsules of the present invention is preferably in the range of 0.5 to 50 µm, more preferably in the range of 1 to 20 µm. When the volume average particle diameter is larger than 50 µm, the thermal storage material microcapsules are sometimes very poor in strength against the mechanical shearing force. When the volume average particle diameter is smaller than 0.5 µm, the coating thickness is small and the thermal storage material microcapsules are sometimes poor in heat resistance although they are kept from breaking.

The fourth thermal storage material microcapsules of the present invention will be explained below.

The fourth thermal storage material microcapsules of the present invention are thermal storage material microcapsules encapsulating a thermal storage material and a temperature control agent, said thermal storage material comprising at least one selected from compounds of the following formulae (I) to (III),

R¹-X-R² (I)

wherein each of R¹ and R² is independently a hydrocarbon group having 6 or more carbon atoms and X is a divalent binding group containing a heteroatom,

R³(-Y-R⁴)n (II)

wherein R³ is a hydrocarbon group having a valence of n, each of R⁴s is independently a hydrocarbon group having 6 or more carbon atoms and each Y is a divalent binding group containing a heteroatom,

A(-Z-R⁵)m (III)

wherein A is an atom, atomic group or binding group having a valence of m, each of R⁵s is independently a hydrocarbon group having 6 or more carbon atoms and each Z is a divalent binding group containing a heteroatom or a direct bond, said temperature control agent containing at least one of compounds of the following general formulae (IV) and (V), 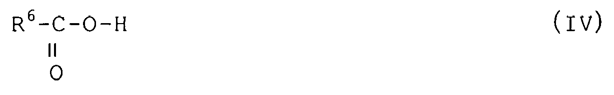 wherein R⁶ is a hydrocarbon group having 8 or more carbon atoms,

R⁷-O-H (V)

wherein R⁷ is a hydrocarbon group having 8 or more carbon atoms,
the temperature control agent and the thermal storage material satisfying the requirement that the number of carbon atoms of a hydrocarbon group having the most carbon atoms in compounds constituting the temperature control agent is greater than the number of carbon atoms of a hydrocarbon group having the most carbon atoms in compounds constituting the thermal storage material by 2 or more.

In the fourth thermal storage material microcapsules of the present invention, the thermal storage material contains at least one of the compounds of the general formulae (I) to (III). Specific examples of the compounds of the general formulae (I) to (III) include those which are explained with regard to the above first microcapsules of the present invention.

In the general formula (IV), 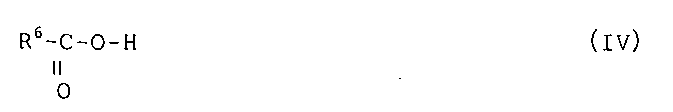 wherein R⁶ is a hydrocarbon group having 8 or more carbon atoms,
R⁶ is a hydrocarbon group having 8 or more carbon atoms. Specific examples thereof include linear hydrocarbon groups such as octyl, nonyl, decyl, undecyl, dodecyl, tridecyl, tetradecyl, pentadecyl, hexadecyl, heptadecyl, octadecyl, nonadecyl, eicosyl, heneicosyl, docosyl, tricosyl, tetracosyl, pentacosyl, hexacosyl, heptacosyl, octacosyl, nonacosyl, triacontyl, hentriacontyl, dotriacontyl, tritriacontyl, tetratriacontyl, pentatriacontyl, hexatriacontyl, heptatriacontyl, octatriacontyl, nonatriacontyl, tetracontyl, hentetracontyl, dotetracontyl, tritetracontyl tetratetracontyl, pentatetracontyl, hexatetracontyl, heptatetracontyl, octatetracontyl, nonatetracontyl, pentacontyl, etc., branched hydrocarbon groups such as 2-ethylcotyl, isodecyl, isooctadecyl, etc., and hydrocarbon groups having an unsaturated bond such as decenyl, undecenyl, dodecenyl, tridecenyl, tetradecenyl, pentadecenyl, hexadecenyl, heptadecenyl, octadecenyl, nonadecenyl, eicosenyl, heneicosenyl, docosenyl, tricosenyl, tetracosenyl, pentacosenyl, hexacosenyl, heptacosenyl, octacosenyl, nonacosenyl, triacontenyl, hentriacontenyl, dotriacontenyl, tritriacontenyl, tetratriacontenyl, pentatriacontenyl, hexatriacontenyl, heptatriacontenyl, octatriacontenyl, nonatriacontenyl, tetracontenyl, hentetracontenyl, dotetracontenyl, tritetracontenyl, tetratetracontenyl, pentatetracontenyl, hexatetracontenyl, heptatetracontenyl, octatetracontenyl, nonatetracontenyl, pentacontenyl, etc. The number of carbon atoms of R⁶ is preferably 60 or less carbon atoms. When the number of carbon atoms exceeds 60, very few natural raw materials are available and such raw materials may be sometimes expensive.

In the general formula (V),

R⁷-O-H (V)

wherein R⁷ is a hydrocarbon group having 8 or more carbon atoms,
R⁷ is a hydrocarbon group having 8 or more carbon atoms. Specific examples thereof include linear hydrocarbon groups such as octyl, nonyl, decyl, undecyl, dodecyl, tridecyl, tetradecyl, pentadecyl, hexadecyl, heptadecyl, octadecyl, nonadecyl, eicosyl, heneicosyl, docosyl, tricosyl, tetracosyl, pentacosyl, hexacosyl, heptacosyl, octacosyl, nonacosyl, triacontyl, hentriacontyl, dotriacontyl, tritriacontyl, tetratriacontyl, pentatriacontyl, hexatriacontyl, heptatriacontyl, octatriacontyl, nonatriacontyl, tetracontyl, hentetracontyl, dotetracontyl, tritetracontyl tetratetracontyl, pentatetracontyl, hexatetracontyl, heptatetracontyl, octatetracontyl, nonatetracontyl, pentacontyl, etc., branched hydrocarbon groups such as 2-ethylcotyl, isodecyl, isooctadecyl, etc., and hydrocarbon groups having an unsaturated bond such as decenyl, undecenyl, dodecenyl, tridecenyl, tetradecenyl, pentadecenyl, hexadecenyl, heptadecenyl, octadecenyl, nonadecenyl, eicosenyl, heneicosenyl, docosenyl, tricosenyl, tetracosenyl, pentacosenyl, hexacosenyl, heptacosenyl, octacosenyl, nonacosenyl, triacontenyl, hentriacontenyl, dotriacontenyl, tritriacontenyl, tetratriacontenyl, pentatriacontenyl, hexatriacontenyl, heptatriacontenyl, octatriacontenyl, nonatriacontenyl, tetracontenyl, hentetracontenyl, dotetracontenyl, tritetracontenyl, tetratetracontenyl, pentatetracontenyl, hexatetracontenyl, heptatetracontenyl, octatetracontenyl, nonatetracontenyl, pentacontenyl, etc. The number of carbon atoms of R⁷ is preferably 60 or less carbon atoms. When the number of carbon atoms exceeds 60, very few natural raw materials are available and such raw materials may be sometimes expensive. In the fourth thermal storage material microcapsules of the present invention, as compound(s) for constituting the temperature control agent, at least one compound is selected from the compounds of the general formulae (IV) and (V), and the number of carbon atoms of a hydrocarbon group having the most carbon atoms in compounds constituting the temperature control agent is greater than the number of carbon atoms of a hydrocarbon group having the most carbon atoms in compounds constituting the thermal storage material by 2 or more. As compound(s) for constituting the temperature control agent, preferably, at least one compound is selected from the compounds of the general formulae (IV) and (V), and the number of carbon atoms of a hydrocarbon group having the most carbon atoms in compounds constituting the temperature control agent is greater than the number of carbon atoms of a hydrocarbon group having the most carbon atoms in compounds constituting the thermal storage material by 4 or more. For example, when the thermal storage material contains dodecyl myristate (that is a compound of the general formula (I) in which R¹ is a tridecyl group having 13 carbon atoms, R² is a dodecyl group having 12 carbon atoms and X is -COO-), there is selected a temperature control agent containing a carboxylic acid compound of the general formula (IV) and/or an alcohol compound of the general formula (V) each having a hydrocarbon group having 15 or more carbon atoms, this number of 15 or more carbon atoms being greater than the number of 13 carbon atoms of R¹ by 2 or more, R¹ being greater than R² in number of carbon atoms. Preferably, there is selected a temperature control agent containing a carboxylic acid compound of the general formula (IV) and/or an alcohol compound of the general formula (V) each having a hydrocarbon group having 17 or more carbon atoms. The above example explains a case where the thermal storage material contains the compound of the general formula (I), while this explanation is likewise applicable to cases where the thermal storage material contains the compound of the general formula (II) and the compound of the general formula (III).

In the fourth thermal storage material microcapsules of the present invention, the thermal storage material may contain two or more compounds of the compounds of the general formulae (I) to (III). In this case, the compound to be contained in the temperature control agent is selected from the compounds of the general formulae (IV) and (V) so as to ensure that the number of carbon atoms of a hydrocarbon group having the most carbon atoms in the selected compound is greater than the number of carbon atoms of a hydrocarbon group having the most hydrocarbon groups in the compound to constitute the thermal storage material by 2 or more. Further, the temperature control agent may contain two or more compounds selected from the compounds of the general formulae (IV) and (V).

When the temperature control agent contains an amide compound different from the compounds of the general formulae (IV) and (V), and when the thermal storage material contains an aliphatic hydrocarbon compound, the amide compound is effective for decreasing the temperature difference between the melting temperature and the coagulation temperature. When the thermal storage material contains an ester compound, a ketone compound, an ether compound, an amide compound, an amine compound, or the like, and when the above temperature control agent is used, the effect on the decreasing of the temperature difference between the melting temperature and the coagulation temperature may be sometimes decreased with time.

Further, when the temperature control agent contains a carboxylic acid compound or an alcohol compound, and when those hydrocarbon groups having the most carbon atoms in the compound constituting the temperature control agent and the compound constituting the thermal storage material are compared, if the numbers of carbon atoms of these hydrocarbon groups are the same or if the number of carbon atoms of hydrocarbon group of the compound constituting the temperature control agent is smaller, the decreasing of the temperature difference between the melting temperature and the coagulation temperature may be sometimes insufficient or the effect is not at all exhibited. Further, when the difference between the above two numbers of carbon atoms is less than 2, the decreasing of the temperature difference between the melting temperature and the coagulation temperature may be sometimes insufficient, or in many cases the effect on the decreasing the temperature difference is not maintained for a long period of time although the effect is exhibited at an initial stage.

In contrast, when the temperature control agent contains the specified carboxylic acid compound or alcohol compound and when the number of carbon atoms of the hydrocarbon group having the most carbon atoms in this compound is greater than the number of carbon atoms of hydrocarbon group having the most carbon atoms in the compound of the thermal storage material by 2 or more as specified in the fourth thermal storage material microcapsules of the present invention, the effect on the decreasing of the temperature difference between the melting temperature and the coagulation temperature is fully exhibited, and the effect on the decreasing of the temperature difference is not only an effect that is exhibited at an initial stage but also an effect that is not easily changed with time. It is assumed that such an excellent effect produced for the following reason. When the numbers of carbon atoms of the compound constituting the temperature control agent and the compound constituting the thermal storage material are adjusted as described above, the balance of compatibility between the thermal storage material and the temperature control agent is stabilized, and even if the melting and the coagulation are repeated, the above compatibility is not easily changed. Further, it is assumed that the melting point difference or the coagulation point difference between the thermal storage material and the temperature control agent, caused by the use of the specified thermal storage material and temperature control agent, also produces an effect on the decreasing of the temperature difference and the stability with time.

In the fourth thermal storage material microcapsules of the present invention, the amount of the temperature control agent to be added is preferably in the range of 0.05 to 3 mass% based on the thermal storage material. More preferably, it is 0.1 to 2 mass%, still more preferably 0.2 to 1.5 mass%. When the above amount is smaller than 0.05 mass%, the decreasing of the temperature difference between the melting temperature and the coagulation temperature may be insufficient. When the above amount is greater than 3 mass%, the emulsion dispersibility during the encapsulation may be poor, the reaction for the encapsulation may be hampered or the stability of dispersion of the thermal storage material microcapsules may be degraded.

In the fourth thermal storage material microcapsules of the present invention, the purity, acid value and hydroxyl value of the thermal storage material, the kind and content of additives that the thermal storage material may contain, the melting point of the thermal storage material, the method for producing the thermal storage material microcapsules and the coating material for the microcapsules are the same as those which are explained with regard to the first thermal storage material microcapsules of the present invention. Further, the temperature control agent may contain a temperature control agent that is other compound different from the compounds of the above general formulae (IV) and (V).

The volume average particle diameter of the fourth thermal storage material microcapsules of the present invention is preferably in the range of 0.5 to 50 µm, more preferably in the range of 1 to 20 µm. When the particle diameter is larger than 50 µm, the thermal storage material microcapsules are sometimes very poor in strength against the mechanical shearing force. When the volume average particle diameter is smaller than 0.5 µm, the coating thickness is small and the thermal storage material microcapsules are sometimes poor in heat resistance although they are kept from breaking.

The first to fourth thermal storage material microcapsules of the present invention are produced in the state where they are dispersed in dispersing agents, generally, in the state of aqueous dispersions, and these dispersions can be used as they are. Further, they can be subjected to evaporation of water as a medium, dehydration and drying, by means of various drying apparatuses or dehydrating apparatuses such as a spray dryer, a drum dryer, a freeze dryer, a filter press, etc., to bring them into forms such as a powder, a solid, etc., of the thermal storage material microcapsules. Further, there may be also employed a constitution in which a binder or the like is added to the above powder or solid as required and the mixture is granulated by various granulation methods such as extrusion granulation, roll granulation, agitation granulation, etc., to increase their particle size so that they can be used in the granulated product form that is easily handled. In the present specification, the powder, solid and granulated product will be generically referred to as a thermal storage material microcapsule solid. The thermal storage material microcapsule solid may have any form such as the form of a sphere, an ellipse, a cube, a rectangular parallelepiped, a column, a circular cone, a circular disc, a barrel, a rod, a regular polyhedron, a star shape, a cylinder, or the like.

As a method for utilizing each of the first to fourth thermal storage material microcapsules of the present invention, there is employed a method in which the thermal storage material microcapsules are heated in a specific temperature region to cause them to store latent heat therein and at an appropriate time thereafter the thermal storage material microcapsules are caused to cool to release the latent heat stored therein. Depending upon use, the effect on the inhibition of an increase in temperature during heat storing can be used, or the effect on the inhibition of a decrease in temperature during temperature release can be used, or both can be used. In this case, the temperature region for storing heat and the temperature for releasing heat can be adjusted to nearly the same temperature regions or can be set to different temperature regions. The first to fourth thermal storage material microcapsules of the present invention can be applied to fiber-processed products such as clothing materials, bedclothes, etc., heat-retaining materials for heating and storing heat by the application of microwave, apparatuses for recovering waste heat of a fuel cell, an incinerator, etc., and over-heating and/or supper-cooling suppressing materials for electronic parts and gas adsorbents, and in addition to these, they can be also applied to various use fields such as construction materials, the building frame thermal storage/space filling type air conditioning of buildings, floor heating, air-conditioning, civil engineering materials such as roads and bridges, industrial and agricultural thermal insulation materials, household goods, fitness gears, medical materials, and the like. When they are used, generally, the temperature difference between the temperature region for storing heat and the temperature region for releasing heat is decreased.

The case where the temperature region for storing heat and the temperature region for releasing heat are different, i.e., the method for using the second thermal storage material microcapsules of the present invention in which the difference between the melting temperature and the coagulation temperature of the micro-encapsulated thermal storage material is 5°C or more will be explained below.

First, an example in which they are applied to fiber-processed products such as clothing materials and bedclothes will be explained. Fiber products imparted with the second thermal storage material microcapsules of the present invention can provide a human body with the sense of comfortable warmness and the pleasant sense of comfortable coolness. The method for imparting a fiber product with the thermal storage material microcapsules includes a method in which the fiber-processed product is coated or impregnated with them or a method in which they are kneaded together with fibers. Specific examples of the fibers include natural fibers such as cotton, hemp, silk, wool, etc., regenerated fibers such as rayon and cupra, semi-synthetic fibers such as acetate, triacetate and promix, synthetic fibers such as nylon, acryl, vinylon, vinylidene, polyester, polyethylene, polypropylene and phenol fibers, and the like. Specific examples of the fiber-processed products include cloths such as knitted fabrics, woven fabrics, nonwoven fabrics, etc., of the above fibers and sewn products of these cloths. Further, the thermal storage material microcapsules can be used as clothing materials and bedclothes by filling them in air-permeable cloths.

When it is arranged that the melting temperature and the coagulation temperature of the thermal storage material is different by 5°C or more in a fiber-processed product using the second thermal storage material microcapsules of the present invention, the heat energy stored by heat absorption can be released at a temperature lower than the temperature at which the heat is absorbed, so that the comfortable wearing of clothes can be secured.

### (Fiber-processed product example 1)

Wearing a coat obtained by processing the thermal storage material microcapsules in which the thermal storage material is adjusted to have a melting temperature of 32°C and a coagulation temperature of 26°C, one stays in a room having a room temperature of 24°C for 1 hour (at this time, the entire thermal storage material inside the thermal storage material microcapsules is coagulated), and then he or she goes out at an outdoor air temperature of 35°C. In this case, the temperature of the coat increases due to the outdoor air temperature, and when it reaches 32°C that is the melting temperature of the thermal storage material, the thermal energy supplied by the outdoor air is consumed to melt the thermal storage material, so that the temperature of the coat is maintained until the entire thermal storage material is completely melted. For this period of time, he or she wearing the coat can feel the sense of comfortable coolness. When the entire thermal storage material is completely melted, the temperature of the coat goes higher than 32°C.

Then, when he or she comes back into the room having a room temperature of 24°C, the coat is rapidly temperature-decreased to 26°C which is the coagulation temperature of the thermal storage material, so that he or she wearing the coat can feel the sense of comfortable coolness. When the temperature of the coat reaches 26°C, the thermal energy stored inside the thermal storage material microcapsules is released, and a temperature of 26°C is maintained. When the release of the thermal energy comes to be a complete end so that the entire thermal storage material is completely coagulated, the temperature of the coat goes lower than 26°C. During this period of time, he or she wearing the coat can maintain the sense of comfortable coolness.

It is supposed that wearing a coat obtained by processing the thermal storage material microcapsules in which the thermal storage material is adjusted to have a melting temperature of 32°C and a coagulation temperature of 31°C, he or she moves in the order of indoor → outdoor → indoor as described above. Going out of the room, he or she can have the same sense of coolness as described above. However, when he or she returns into the room, the decrease in the temperature of the coat stops at a temperature of 31°C which is the coagulation temperature of the thermal storage material, and the thermal energy stored inside the thermal storage material microcapsules is released at 31°C, so that he or she comes to feel the sense of unpleasant humid heat.

### (Fiber-processed product example 2)

Wearing a jacket obtained by processing the thermal storage material microcapsules in which the thermal storage material is adjusted to have a melting temperature of 18°C and a coagulation temperature of 10°C, one stays in a room having a room temperature of 21°C for 1 hour (at this time, the entire thermal storage material inside the thermal storage material microcapsules is melted), and then he or she goes out at an outdoor air temperature of 5°C. In this case, the temperature of the jacket is decreased due to the outdoor air temperature, and when it reaches 10°C which is the coagulation temperature of the thermal storage material, the thermal energy stored inside the thermal storage material starts to be released, so that a temperature of 10°C is maintained until the entire thermal storage material is completely coagulated. During this period of time, he or she wearing the jacket can feel the sense of comfortable warmness since the jacket temperature is maintained at 10°C although the outdoor air temperature is 5°C. When the entire thermal storage material is completely coagulated, the temperature of the jacket goes lower than 10°C.

Then, he or she returns into the room having a room temperature of 20°C, the jacket is rapidly temperature-increased to 18°C which is the melting temperature of the thermal storage material, so that he or she wearing the jacket can feel the sense of comfortable warmness. When the temperature of the jacket rises to 18°C, the thermal energy supplied by indoor air is consumed to melt the thermal storage material, and a temperature of 18°C is maintained. When the absorption of the thermal energy comes to a complete end so that the entire thermal storage material is melted, the temperature of the jacket goes higher than 18°C. During this period of time, he or she wearing the jacket can stay away from an unpleasant sense.

In contrast, it is supposed that wearing a jacket obtained by processing the thermal storage material microcapsules in which the thermal storage material is adjusted to have a melting temperature of 12°C and a coagulation temperature of 10°C, he or she moves in the order of indoor → outdoor → indoor as described above. Going out of the room, he or she can have the same sense of warmness as described above. However, when he or she comes back to the room, an increase in the temperature of the jacket stops at 12°C which is the melting temperature of the thermal storage material, the thermal energy supplied from indoor air is consumed to melt the thermal storage material, and during this period, the temperature of the jacket remains at 12°C. Therefore, he or she wearing the jacket comes to feel the sense of unpleasant coldness.

A method for the application of the second thermal storage material microcapsules of the present invention to a heat-retaining material for heating and storing heat by applying microwave will be explained below. The heat-retaining material for heating and storing heat by applying microwave refers to a mixture obtained by mixing a water-absorbing compound such as silica gel, or the like or a compound having a polar structure with a solid of the thermal storage material microcapsules, or a material obtained by filling it in a proper encapsulating material, as described in JP2001-303032A or JP2005-179458A. When microwave is applied, the water-absorbing compound or the compound having a polar structure generated heat, and the heat can be conducted to the solid of the thermal storage material microcapsules which are directly or indirectly in contact with such a compound.

It is supposed that a thermal storage material microcapsule solid in which the thermal storage material is adjusted to have a melting temperature of 70°C and a coagulation temperature of 50°C is used as a heat-retaining material for heating and storing heat by the application of microwave. When microwave is applied with a microwave oven, the heat generated from the water-absorbing compound is conducted to the thermal storage material microcapsule solid. The temperature of the thermal storage material microcapsule solid is rapidly increased to 70°C which is the melting temperature thereof, to store latent heat. When 70°C is reached, the thermal storage material is melted to store latent heat. When the application of the microwave is stopped, the latent heat stored in the water-absorbing compound and the thermal storage material microcapsule solid is first released. For a relatively short period of time, the temperature is decreased to 50°C as the coagulation temperature, so that he or she as a user cannot almost feel the unpleasant sense that it is too hot. When a temperature of 50°C is reached, the latent heat stored in the thermal storage material in the thermal storage material microcapsule solid is released, and he or she as a user can have a pleasant heat sense for a long period of time.

In contrast, it is supposed that a thermal storage material microcapsule solid in which the thermal storage material is adjusted to have a melting temperature of 70°C and a coagulation temperature of 68°C is used as a heat-retaining material for heating and storing heat by the application of microwave. In this case, no special problem is posed during heating. However, in the stage of use after the heating, the latent heat stored in the thermal storage material in the thermal storage material microcapsule solid is released at 68°C. Since 68°C continues for a long period of time, he or she as a user comes to feel an unpleasant sense that it is too hot.

The second thermal storage material microcapsules of the present invention can be also applied to waste heat recovery apparatuses. Examples of the waste heat recovery apparatuses using the thermal storage material microcapsules include a fuel cell hot water supply cogeneration system utilizing the waste heat of a fuel cell and a hot water supply system utilizing combustion heat in an incinerator. In the fuel cell hot water supply cogeneration system, heat exchangers are provided to a modifier and a fuel cell, the heat exchangers are connected to a thermal storage tank through pipes, and a heating medium fluid prepared by dispersing the thermal storage material microcapsules in a dispersing medium is filled and circulated in the pipes and the thermal storage tank, whereby a large volume of the waste heat recovered from the modifier and the fuel cell with the heat exchanger can be stored in the thermal storage tank. When a water supply pipe system is connected to the thermal storage tank, hot water can be supplied as required.

It is supposed that the thermal storage material microcapsules in which the thermal storage material is adjusted to have a melting temperature of 85°C and a coagulation temperature of 60°C is applied to a fuel cell hot water supply cogeneration system utilizing waste heat of a fuel cell. For highly efficiently operating a fuel cell, a relatively high temperature is advantageous, and when the thermal storage material is melted at 85°C in such a temperature region, waste heat can be recovered in the thermal storage material microcapsules and stored therein as latent heat. The thermal energy stored in the thermal storage material microcapsules as latent heat is released at 60°C at which the thermal storage material is coagulated, so that heat can be recovered at a temperature close to a temperature suitable for hot water to use.

In contrast, it is supposed that the thermal storage material microcapsules in which the thermal storage material is adjusted to have a melting temperature of 85°C and a coagulation temperature of 80°C is used. In this case, when waste heat is recovered and stored as latent heat, there is no special problem. However, when the thermal energy stored as latent heat is released, the heat is released at 80°C. Therefore, it is necessary to take care for handling of hot water, or when the latent heat is completely released, the temperature of hot water is sharply decreased from 80°C, and it follows that it is difficult to stably supply hot water having a little variation in temperature.

The second thermal storage material microcapsules of the present invention can be also applied to an overheating and/or super-cooling suppressing material. The "overheating" means all of phenomena in which a failure takes place when the temperature goes higher than a set temperature. The "super-cooling" means all of phenomena in which a failure takes place when the temperature goes lower than a set temperature. Specifically, they are applications for suppressing the heat generation in an electronic part such as a control device in an electronic machine such as a computer or the like, the heat generation caused by sunlight on roads, and the like.

As another application example, there can be preferably employed a method in which the second thermal storage material microcapsules of the present invention are arranged and fixed near a gas adsorbent as means for suppressing the performance deterioration entailed by an increase in temperature caused by the heat of adsorption of the gas adsorbent and the performance deterioration entailed by a decrease in temperature caused by the heat of desorption. The gas adsorbent includes activated carbon, zeolite, silica gel, organic metal complexes, etc. The gas as an adsorption object includes natural gases such as methane, etc., petroleum gases such as propane, butane, etc., hydrogen, carbon monoxide, carbon dioxide, oxygen, nitrogen, odorous gases, acidic gases, basic gases, organic solvent gases, etc.

It is supposed that the thermal storage material microcapsules in which the thermal storage material is adjusted to have a melting temperature of 34°C and a coagulation temperature of 18°C are fixed to a gas adsorbent and that an organic solvent gas is adsorbed in an environment at an air temperature of 25°C. In this case, the temperature of the gas adsorbent is increased due to the heat of adsorption to the gas adsorbent, and the temperature reaches 34°C which is the melting temperature of the thermal storage material, the heat of adsorption is consumed to melt the thermal storage material, so that the temperature is maintained at 34°C until the entire thermal storage material is completely melted. Therefore, a decrease in the adsorption efficiency caused by an increase in temperature can be suppressed. When the entire thermal storage material is completely melted, the temperature of the gas adsorbent goes higher than 34°C. However, the temperature increase is delayed to such an extent that the thermal energy is consumed to melt the thermal storage material, so that a decrease in the adsorption efficiency is suppressed.

In the step of desorbing the organic solvent gas in the environment at an air temperature of 25°C, the temperature of the gas adsorbent is decreased due to the heat of desorption from the gas adsorbent. When the temperature reaches 18°C which is the coagulation temperature of the thermal storage material, the thermal energy stored inside the thermal storage material microcapsules is released, so that the temperature is maintained at 18°C until the entire thermal storage material is completely coagulated. This phenomenon in which a decrease in temperature is suppressed is a synergistic effect of the heat release action that the coagulation of the thermal storage material entails and the warming action of an air temperature of 25°C, and hence the decrease in desorption efficiency caused by a decrease in temperature can be suppressed. When the entire thermal storage material is completely coagulated, the temperature of the gas adsorbent goes lower than 18°C. However, the decrease in temperature is delayed to such an extent that the thermal energy is released when the thermal storage material is coagulated, and the decrease in desorption efficiency is suppressed. Further, when the adsorption/desorption steps are repeated, the above effects are repeatedly produced.

When a gas adsorbent using thermal storage material microcapsules in which the thermal storage material is adjusted to have a melting temperature of 34°C and a coagulation temperature of 32°C is used in an environment at an air temperature of 25°C, a decrease in adsorption efficiency caused by an increase in temperature can be suppressed as described above. In the step of an organic solvent gas desorption step, however, the heat release from the thermal storage material microcapsules takes place first, so that the latent heat of the thermal storage material microcapsules can be no longer effectively utilized against a decrease in temperature when the organic solvent gas is desorbed.

### Examples

The present invention will be more specifically explained with reference to Examples hereinafter. In Examples, "part" and "%" are based on "mass" unless otherwise specified, and in the following Examples and Comparative Examples, melting temperatures, coagulation temperatures and heat amounts for melting thermal storage materials, change ratios of temperature differences, thermal storage material microcapsule heat loss ratios and thermal history durability were measured by the following methods. [Melting temperature, coagulation temperature and heat amount for melting of thermal storage material]

A thermal storage material in the state of being micro-encapsulated in a thermal storage material microcapsule sample amount of 2 ±0.2 mg was measured for a melting temperature, a coagulation temperature and a heat amount for melting, at a temperature elevation rate of 10°C/minute and a temperature decrease rate of 10°C/minute with a differential scanning calorimeter (DSC-7, supplied by Perkin Elmer Inc. of USA). An onset temperature of leading edge of a heat capacity curve (temperature at a point of intersection of a base line and a tangent line of the heat absorption curve) caused by the melting behavior of the thermal storage material in microcapsules during an increase in temperature was taken as a melting temperature of the thermal storage material, and an onset set temperature of leading edge of the heat capacity curve (temperature at a point of intersection of a base line and a tangent line of the heat release curve) caused by the coagulation behavior of the thermal storage material in microcapsules during a decrease in temperature was taken as a coagulation temperature of the thermal storage material, and an integral value of a difference between the heat absorption peak and base line of the heat capacity curve during an increase in temperature was taken as a heat amount for melting. For comparison, a thermal storage material before encapsulation was also measured for a melting temperature (melting point) and a coagulation temperature under the same conditions as the above as required, and a difference between the melting temperature and the coagulation temperature was determined.

### [Change ratio of temperature difference]

The melting and coagulation of a thermal storage material in the state of being micro-encapsulated were repeated 300 times. A difference between the melting temperature and the coagulation temperature after they were repeated 300 times was taken as (ΔT2), a difference between the melting temperature and the coagulation temperature at an initial stage was taken as (ΔT1), and a percentage of a value obtained by dividing a difference between (ΔT1) and (ΔT2) (absolute value of (ΔT1)-(ΔT2)) by the difference (ΔT1) between the melting temperature and the coagulation temperature at an initial stage was taken as a change ratio of temperature difference. That is, it can be calculated by a change ratio (%) of temperature difference = (|ΔT1) - (ΔT2|)/ΔT1x100. The change ratio of temperature difference shows that the smaller the value thereof is, to less degree the difference between the melting temperature of a thermal storage material and the coagulation temperature thereof changes, and that such thermal storage material microcapsules are more excellent in stability in repeated use.

### [Heat loss ratio]

A dry product obtained by sampling 2 g of a dispersion of thermal storage material microcapsules and evaporating water as a medium by heating it at 100°C for 2 hours was measured for a mass W1, and the dry product was further heat-treated at 200°C for 3 hours and then measured for a mass W2. A percentage of a value obtained by dividing a mass loss amount (W1-W2) by the mass W1 measured before the heat treatment was taken as a heat loss ratio. That is, it can be calculated by heat loss ratio (%) = (W1-W2)/W1x100. The heat loss ratio shows that the smaller the value thereof is, the more excellent the heat resistance of thermal storage material microcapsules is. It also shows that the larger the value thereof is, the poorer the heat resistance of the thermal storage material microcapsules is. [Thermal history durability]

A dry product obtained by sampling 5 g of a dispersion of thermal storage material microcapsules and evaporating water as a medium by heating it at 100°C for 2 hours was placed in a temperature-controllable constant-temperature vessel, and it was subjected to a change in temperature from -10°C to 60°C which was a temperature region having a phase change temperature in it. This temperature-change treatment was repeated 300 times and the dry product was measured for a heat storage amount. A ratio of the heat storage amount to a heat storage amount found before the temperature-change treatment was taken as a thermal history durability. The temperature-change treatment had the cycle of 1 hour for an increase in temperature, 30 minutes for holding at 60°C, 1 hour for a decrease in temperature and 30 minutes for holding at -10°C. In Examples 125 to 128, the above temperature region was set in the region from 20°C to 90°C, and one cycle consisted of 1 hour for an increase in temperature, 30 minutes for holding at 90°C, 1 hour for a decrease in temperature and 30 minutes for holding at 20°C. The thermal history durability shows that the larger the value thereof is, the more excellent the property of holding a thermal storage amount after the temperature-change treatment is. The thermal storage amount was determined on the basis of a heat amount for melting measured with a differential scanning calorimeter.

### (Example 1)

80 Parts of hexadecyl palmitate corresponding to the compound of the general formula (I) [a compound of the general formula (I) in which R¹ is pentadecyl having 15 carbon atoms and R² is hexadecyl having 16 carbon atoms] was added, with vigorously stirring, to 100 parts of 5 a % styrene-maleic anhydride copolymer sodium salt aqueous solution having its pH adjusted to 4.5, followed by emulsification until an average particle diameter of 3.0 µm was attained. The above hexadecyl palmitate had a purity of 96 %, an acid value of 0.3 and a hydroxyl value of 1.0. Then, 8 parts of melamine, 11 parts of a 37 % formaldehyde aqueous solution and 20 parts of water were mixed , the mixture was adjusted to a pH of 8 and a melamine-formalin initial condensate aqueous solution was prepared at approximately 80°C. The entire amount of this aqueous solution was added to the above emulsion and the mixture was stirred under heat at 75°C for 3 hours to carry out an encapsulation reaction, and the resultant dispersion was adjusted to a pH of 9 to complete the encapsulation. There was obtained a dispersion of thermal storage material microcapsules having melamine-formalin resin coatings formed by an in-situ polymerization method, which dispersion had a low viscosity and had excellent dispersion stability. The thus-obtained thermal storage material microcapsules had a volume average particle diameter of 3.2 µm, and the thermal storage material had a melting temperature and a coagulation temperature of 51°C and 22°C. The difference between the melting temperature and the coagulation temperature at an initial stage was 29°C, and the change ratio of temperature difference was 2 %. Further, the thermal storage material microcapsules had a thermal loss ratio of 3 %.

### (Examples 2 - 11)

Thermal storage material microcapsules according to an in-situ polymerization method were produced in the same manner as in Example 1 except that the hexadecyl palmitate in Example 1 was replaced with compounds shown in Table 1. Table 1 shows the volume average particle diameters of the thus-obtained thermal storage material microcapsules, the melting temperatures, coagulation temperatures, initial differences between the melting temperatures and the coagulation temperatures and change ratios of temperature difference of the thermal storage materials and the thermal loss ratios of the thermal storage material microcapsules.

### (Examples 12 - 16)

Thermal storage material microcapsules according to an in-situ polymerization method in Examples 12 to 16 were produced in the same manner as in Example 1 except that the average particle diameter at the stage of emulsification in Example 1 was adjusted to 0.05 µm, 0.08 µm, 0.2 µm, 6.1 µm and 9.1 µm. Table 1 shows the volume average particle diameters of the thus-obtained thermal storage material microcapsules, the melting temperatures, coagulation temperatures, initial differences between the melting temperatures and the coagulation temperatures and change ratios of temperature difference of the thermal storage materials and the thermal loss ratios of the thermal storage material microcapsules.

### (Example 17)

80 Parts of dodecyl myristate corresponding to the compound of the general formula (I) [a compound of the general formula (I) in which R¹ is tridecyl having 13 carbon atoms and R² is dodecyl having 12 carbon atoms] was added, with vigorously stirring, to 100 parts of a 5 % ethylene-maleic anhydride copolymer sodium salt aqueous solution containing 5.3 parts of urea and 0.5 part of resorcin and having a pH adjusted to 3.0, followed by emulsification until an average particle diameter of 1.9 µm was attained. The above dodecyl myristate had a purity of 93 %, an acid value of 0.7 and a hydroxyl value of 2.3. Then, 14.5 parts of a 37 % formaldehyde aqueous solution and 20 parts of water were added to this emulsion, and the mixture was stirred under heat at 60°C for 2 hours to carry out an encapsulation reaction. Then, the resultant dispersion was adjusted to a pH of 9 to complete the encapsulation reaction. There was obtained a dispersion of thermal storage material microcapsules having urea-formalin resin coatings formed by an in-situ polymerization method, which dispersion had a low viscosity and had excellent dispersion stability. Table 1 shows the volume average particle diameter of the thus-obtained thermal storage material microcapsules, the melting temperature, coagulation temperature, initial difference between the melting temperature and the coagulation temperature and change ratio of temperature difference of the thermal storage material and the thermal loss ratio of the thermal storage material microcapsules.

### (Examples 18 - 19)

Thermal storage material microcapsules in Examples 18 and 19 according to an in-situ polymerization method were produced in the same manner as in Example 17 except that the average particle diameter at the stage of emulsification in Example 17 was adjusted to 3.3 µm and 5.0 µm. Table 1 shows the volume average particle diameters of the thus-obtained thermal storage material microcapsules, the melting temperatures, coagulation temperatures, initial differences between the melting temperatures and the coagulation temperatures and change ratios of temperature difference of the thermal storage materials and the thermal loss ratios of the thermal storage material microcapsules.

### (Example 20)

80 Parts of tetradecyl myristate corresponding to the compound of the general formula (I) [a compound of the general formula (I) in which R¹ is tridecyl having 13 carbon atoms and R² is tetradecyl having 14 carbon atoms] was added, with vigorously stirring, to 100 parts of a 5 % styrene-maleic anhydride copolymer aqueous solution having a pH adjusted to 4.5, followed by emulsification until an average particle diameter of 3.4 µm was attained. The above tetradecyl myristate had a purity of 97 %, an acid value of 0.2 and a hydroxyl value of 0.3. Then, 8 parts of melamine, 11 parts of a 37 % formaldehyde aqueous solution and 20 parts of water were mixed, the mixture was adjusted to a pH of 8, and a melamine-formaldehyde initial condensate aqueous solution was prepared at approximately 80°C. The entire amount of this aqueous solution was added to the above emulsion and the mixture was stirred under heat at 75°C for 3 hours to carry out an encapsulation reaction, and then the resultant dispersion was adjusted to a pH of 9 to complete the encapsulation. There was obtained a dispersion of thermal storage material microcapsules having melamine-formalin resin coatings formed by an in-situ polymerization method, which dispersion had a low viscosity and had excellent dispersion stability. Table 1 shows the volume average particle diameter of the thus-obtained thermal storage material microcapsules, the melting temperature, coagulation temperature, initial difference between the melting temperature and the coagulation temperature and change ratio of temperature difference of the thermal storage material and the thermal loss ratio of the thermal storage material microcapsules.

### (Example 21)

Thermal storage material microcapsules according to an in-situ polymerization method were produced in the same manner as in Example 1 except that the hexadecyl palmitate in Example 1 was replaced with hexacosyl stearate [a compound of the general formula (I) in which R¹ is heptadecyl having 17 carbon atoms and R² is hexacosyl having 26 carbon atoms] having a purity of 96 %, an acid value of 0.4 and a hydroxyl value of 1.1. Table 1 shows the volume average particle diameter of the thus-obtained thermal storage material microcapsules, the melting temperature, coagulation temperature, initial difference between the melting temperature and the coagulation temperature and change ratio of temperature difference of the thermal storage material and the thermal loss ratio of the thermal storage material microcapsules.

Then, the dispersion of the thermal storage material microcapsules was spray-dried with a spray dryer to give a powder of the thermal storage material microcapsules. Further, 25 parts by mass of latex (solid content 40 mass%) of an ethylene-vinyl acetate copolymer as a binder and a proper amount of water were added to 100 parts by mass of the powder of the thermal storage material microcapsules, and the mixture was extrusion-granulated with an extrusion type granulator. The extrusion product was dried at 100°C to give a granulated product of the thermal storage material microcapsules, which product had an average diameter of 2.1 mm in the minor diameter direction and an average diameter of 4.0 mm in the major diameter direction.

### (Example 22)

Thermal storage material microcapsules according to an in-situ polymerization method were produced in the same manner as in Example 1 except that the hexadecyl palmitate in Example 1 was replaced with triacontyl stearate [a compound of the general formula (I) in which R¹ is heptadecyl having 17 carbon atoms and R² is triacontyl group having 30 carbon atoms] having a purity of 95 %, an acid value of 0.4 and a hydroxyl value of 1.3. Table 1 shows the volume average particle diameter of the thus-obtained thermal storage material microcapsules, the melting temperature, coagulation temperature, initial difference between the melting temperature and the coagulation temperature and change ratio of temperature difference of the thermal storage material and the thermal loss ratio of the thermal storage material microcapsules.

### (Example 23)

Thermal storage material microcapsules according to an in-situ polymerization method were produced in the same manner as in Example 1 except that the hexadecyl palmitate in Example 1 was replaced with tetradecyl laurate [a compound of the general formula (I) in which R¹ is undecyl having 11 carbon atoms and R² is tetradecyl having 14 carbon atoms] having a purity of 96 %, an acid value of 0.3 and a hydroxyl value of 0.8. Table 1 shows the volume average particle diameter of the thus-obtained thermal storage material microcapsules, the melting temperature, coagulation temperature, initial difference between the melting temperature and the coagulation temperature and change ratio of temperature difference of the thermal storage material and the thermal loss ratio of the thermal storage material microcapsules. Then, the dispersion of the thermal storage material microcapsules was spray-dried with a spray dryer to give a powder of the thermal storage material microcapsules having an average particle diameter of 100 µm.

### (Example 24)

Thermal storage material microcapsules according to an in-situ polymerization method were produced in the same manner as in Example 1 except that the hexadecyl palmitate in Example 1 was replaced with hexadecyl palmitate having a purity of 86 %m an acid value of 6 and a hydroxyl value of 12. Table 1 shows the volume average particle diameter of the thus-obtained thermal storage material microcapsules, the melting temperature, coagulation temperature, initial difference between the melting temperature and the coagulation temperature and change ratio of temperature difference of the thermal storage material and the thermal loss ratio of the thermal storage material microcapsules.

### (Example 25)

A mixture containing 80 parts of hexadecyl palmitate as a thermal storage material and 0.8 part of N-stearyl erucic acid amide as a super-cooling preventing agent was added, with vigorously stirring, to 100 parts of a 5 % styrene-maleic anhydride copolymer sodium salt aqueous solution having a pH adjusted to 4.5, followed by emulsification until an average particle diameter of 3.0 µm was attained. The above hexadecyl palmitate had a purity of 86 %, an acid value of 1.6 and a hydroxyl value of 4.2. Then, 8 parts of melamine, 11 parts of a 37 % formaldehyde aqueous solution and 20 parts of water were mixed, the mixture was adjusted to a pH of 8 and a melamine-formalin initial condensate aqueous solution was prepared at approximately 80°C. The entire amount of this aqueous solution was added to the above emulsion and the mixture was stirred under heat at 75°C for 3 hours to carry out an encapsulation reaction. The resultant dispersion was adjusted to a pH of 9 to complete the encapsulation. There was obtained a dispersion of the thermal storage material microcapsules having melamine-formalin resin coatings formed by an in-situ polymerization method, which dispersion had a low viscosity and had excellent dispersion stability. Table 1 shows the volume average particle diameter of the thus-obtained thermal storage material microcapsules, the melting temperature, coagulation temperature, initial difference between the melting temperature and the coagulation temperature and change ratio of temperature difference of the thermal storage material and the thermal loss ratio of the thermal storage material microcapsules.

### (Example 26)

Thermal storage material microcapsules according to an in-situ polymerization method were produced in the same manner as in Example 19 except that the dodecyl myristate in Example 19 was replaced with dodecyl myristate having a purity of 77 %, an acid value of 8 and a hydroxyl value of 14. Table 1 shows the volume average particle diameter of the thus-obtained thermal storage material microcapsules, the melting temperature, coagulation temperature, initial difference between the melting temperature and the coagulation temperature and change ratio of temperature difference of the thermal storage material and the thermal loss ratio of the thermal storage material microcapsules.

### (Example 27)

Thermal storage material microcapsules according to an in-situ polymerization method were produced in the same manner as in Example 21 except that the hexacosyl stearate in Example 21 was replaced with hexacosyl stearate having a purity of 81 %, an acid value of 8 and a hydroxyl value of 13. Table 1 shows the volume average particle diameter of the thus-obtained thermal storage material microcapsules, the melting temperature, coagulation temperature, initial difference between the melting temperature and the coagulation temperature and change ratio of temperature difference of the thermal storage material and the thermal loss ratio of the thermal storage material microcapsules.

Then, a granulated product of the thermal storage material microcapsules, having an average diameter of 2.1 mm in the minor diameter direction and an average diameter of 4.0 mm in the major diameter direction, was obtained through a powder of the thermal storage material microcapsules in the same manner as in Example 21.

### (Example 28)

Thermal storage material microcapsules according to an in-situ polymerization method were produced in the same manner as in Example 22 except that the triacontyl stearate in Example 22 was replaced with triacontyl stearate having a purity of 78 %, an acid value of 7 and a hydroxyl value of 14. Table 1 shows the volume average particle diameter of the thus-obtained thermal storage material microcapsules, the melting temperature, coagulation temperature, initial difference between the melting temperature and the coagulation temperature and change ratio of temperature difference of the thermal storage material and the thermal loss ratio of the thermal storage material microcapsules.

### (Comparative Example 1)

Thermal storage material microcapsules according to an in-situ polymerization method were produced in the same manner as in Example 23 except that the tetradecyl laurate in Example 23 was replaced with tetradecyl laurate having a purity of 85 %, an acid value of 12 and a hydroxyl value of 9. Table 1 shows the volume average particle diameter of the thus-obtained thermal storage material microcapsules, the melting temperature, coagulation temperature, initial difference between the melting temperature and the coagulation temperature and change ratio of temperature difference of the thermal storage material and the thermal loss ratio of the thermal storage material microcapsules.

Then, a powder of thermal storage material microcapsules having an average particle diameter of 100 µm was obtained in the same manner as in Example 23.

### <Evaluation A> Evaluation in clothing material

The thermal storage material microcapsule dispersions obtained in Examples 19 and 26 were used, and 180 g/m² rayon fiber cloths were impregnated with the microcapsules with a nip coater such that each cloth had a microcapsule solid mass of 30 g/m². Then, the cloths were dried and processed to clothing materials having the property of thermal storage. Further, coats of adult sizes were sewn from the clothing materials. Five male adults wore a cotton undergarment each and wore thereon each a coat imparted with thermal storage material microcapsules, and feeling temperature senses were observed.

First, the results of feeling temperature senses after they rested sitting in a room having a room temperature of 24°C for 1 hour and then moved into a 35°C atmosphere that was a simulation of hot whether in midsummer will be described. For comparison, the observation was made using similar clothes imparted with no thermal storage material microcapsules. In this case, a third man began to feel too hot in about 5 minutes. When the observation was made using the clothes imparted with the thermal storage material microcapsules of Example 19, a third man began to feel too hot in about 18 minutes, and it was found that the time period for which the feeling of the comfortable sense continued became longer with the clothes imparted with the thermal storage material microcapsules of Example 19.

Further, when the thermal storage material microcapsules of Example 26 were used, a third man began to feel too hot in about 17 minutes, and the result at this point of time was that there was almost no difference from those of Example 19.

The results of feeling temperature senses when they returned to a room having a room temperature of 24°C 40 minutes after they moved to the 35°C atmosphere will be described below. In the case of the clothes imparted with the thermal storage material microcapsules of Example 19, all of the five adults felt the sense of coolness immediately when they returned into the room having a room temperature of 24°C, and none of them felt too hot. With regard to the clothes imparted with the thermal storage material microcapsules of Example 19 in which the difference between the melting temperature and the coagulation temperature was 5°C or more, even when they return to a suitable-temperature environment from the so-called hot environment, the temperature thereof is rapidly decreased to 26°C which is the coagulation temperature of the thermal storage material, and the heat release that the coagulation of the thermal storage material entails takes at 26°C, so that no heat release was felt from the clothes and that a comfortable sense can be immediately felt.

On the other hand, when the thermal storage material microcapsules of Example 26 were used, all of the five adults felt too hot immediately after they returned into the room having a room temperature of 24°C, and after about 14 minutes, a third man began to barely feel the sense of coolness. With regard to the clothes imparted with the thermal storage material microcapsules of Example 26 in which the difference between the melting temperature and the coagulation temperature was 2°C, even when they returned into the suitable-temperature environment from the so-called hot environment, a decrease in temperature stopped at 30°C which was the coagulation temperature of the thermal storage material, which resulted in that the adults who wore those clothes felt the sense of being too hot from the clothes although the room temperature was 24°C.

### <Evaluation B> Evaluation in microwave application type heat-retaining material

The granulated products of the thermal storage material microcapsules obtained in Examples 21 and 27 were used. Microwave application type heat-retaining materials were respectively obtained in a manner that 30 parts by mass of the granulated product of thermal storage material microcapsules and 70 parts by mass of silica gel particles having a particle diameter of 2 mm were mixed and 700 g of the resultant mixture was filled in a bag made of cotton cloth. These heat-retaining materials were heated with a cooking microwave oven (high-frequency output = 500 W) for 2 minutes and then taken out of the microwave oven to observe a feeling temperature sense.

When the thermal storage material microcapsules of Example 21 in which the difference between the melting temperature and the coagulation temperature was 21°C was used, the hot retention material exhibited a temperature of 60°C or higher at the initial stage after it was taken out, and the sense of relatively strong heat was actually felt. Approximately 5 minutes after it was taken out, it came to have a temperature of 52°C and the sense of pleasant heat came to be felt. Thereafter, a temperature of 45°C or higher that was a pleasant temperature region continued for approximately 70 minutes, and the heat-retaining material maintained the sense of warmness for a long period of time.

On the other hand, when the thermal storage material microcapsules of Example 27 in which the difference between the melting temperature and the coagulation temperature was 3°C was used, it exhibited a temperature of 70°C or higher at the initial stage after it was taken out, or it exhibited the sense of intense heat, and it exhibited the sense of strong heat at 65°C or higher even approximately 20 minutes after it was taken out. It was hence difficult to obtain the sense of pleasant use.

### <Evaluation C> Evaluation on fuel cell hot water supply cogeneration system

The dispersions of the thermal storage material microcapsules obtained in Examples 22 and 28 were used for evaluating them in a fuel cell hot water supply cogeneration system in the following manner. In a fuel cell hot water supply cogeneration system, a modifier and a fuel cell were provided with a heat-exchanger each, these heat-exchangers were connected to a thermal storage tank through pipes, the dispersion of the thermal storage material microcapsules was filled in the pipes and the thermal storage tank and circulated, and waste heat recovered by the heat-exchangers and the modifier was stored in the thermal storage tank for 2 hours. Then, hot water was withdrawn from a water supply pipe system connected to the thermal storage tank and monitored for temperatures.

When the thermal storage material microcapsules of Example 22 in which the difference between the melting temperature and the coagulation temperature was 22°C was used, hot water having a temperature of approximately 55°C or higher could be stably supplied with a little variation in temperature.

On the other hand, when the thermal storage material microcapsules of Example 28 in which the difference between the melting temperature and the coagulation temperature was approximately 4°C was used, hot water having a high temperature of approximately 70°C was withdrawn at an initial stage, while the temperature of the water soon began to sharply decrease, and it was difficult to supply hot water stably with a little variation in temperature.

### <Evaluation D> Evaluation in gas adsorbent

The powders of the thermal storage material microcapsules obtained in Example 23 and Comparative Example 1 were used, and thermal storage material composite adsorbents were obtained in a manner that 30 parts of the powder of the thermal storage material microcapsules and 100 parts of activated carbon having an average particle diameter of 1.2 mm were mixed. In an environment at an air temperature of 25°C, methane gas (supply gas temperature = 25°C) was fed to the thermal storage material composite adsorbent, a gas pressure of 1 MPa and a gas pressure 0.1 MPa were alternately repeated to carry out gas adsorption and gas desorption 9 times, and then an adsorption amount and a desorption amount in the tenth time were measured. A difference between these data was calculated as an effective adsorption volume.

When the thermal storage material microcapsules of Example 23 in which the difference between the melting temperature and the coagulation temperature was 18°C was used, the effective adsorption volume per g of the thermal storage material composite adsorbent was 59 mg or an excellent result was obtained.

On the other hand, when the thermal storage material microcapsules of Comparative Example 1 in which the difference between the melting temperature and the coagulation temperature was 3°C was used, the effective adsorption volume per g of the thermal storage material composite adsorbent was 51 mg or the result was poor as compared with the adsorbent using the thermal storage material microcapsules of Example 23. It is assumed that the above occurred as follows. Since the thermal storage material had a coagulation temperature of 33°C, the thermal energy that was generated as heat of adsorption and absorbed in the thermal storage material microcapsules during adsorption was fully released in the environment at an air temperature of 25°C before desorption, so that the thermal energy that was to effectively contribute to the inhibition of a decrease in temperature during the desorption was decreased, and the desorption efficiency was decreased as compared with that of the counterpart of Example 23.

### Table 1

**Table 1**

| Example | Thermal storage material | | | | Particle Diameter | Melting tempera -ture | Coagulation temperature | Difference between Mel. temp.- Co.temp. | Change ratio of temp. difference | Thermal loss ratio |
|---|---|---|---|---|---|---|---|---|---|---|
| | Name of compound | Purity | Acid value | Hydroxyl value | | | | | | |
| | | (%) | (mgKOH/g) | (mgKOH/g) | (*µ*m) | (°C) | (°C) | (°C) | (%) | (%) |
| 1 | Hexadecyl palmitate | 96 | 0.3 | 1.0 | 3.2 | 51 | 22 | 29 | 2 | 3 |
| 2 | | 93 | 0.3 | 1.0 | 3.2 | 51 | 34 | 17 | 4 | 3 |
| 3 | | 87 | 0.3 | 1.0 | 3.2 | 51 | 43 | 8 | 6 | 3 |
| 4 | | 96 | 0.8 | 1.0 | 3.2 | 51 | 35 | 16 | 5 | 3 |
| 5 | | 96 | 1.5 | 1.0 | 3.2 | 51 | 44 | 7 | 14 | 4 |
| 6 | | 96 | 0.3 | 2.2 | 3.2 | 51 | 32 | 19 | 5 | 3 |
| 7 | | 96 | 0.3 | 4.1 | 3.2 | 51 | 42 | 9 | 11 | 4 |
| 8 | | 87 | 0.3 | 4.1 | 3.2 | 51 | 44 | 7 | 13 | 5 |
| 9 | | 87 | 0.8 | 4.1 | 3.2 | 51 | 45 | 6 | 16 | 5 |
| 10 | | 87 | 1.5 | 1.0 | 3.2 | 51 | 46 | 5 | 16 | 6 |
| 11 | | 96 | 1.5 | 4.1 | 3.2 | 51 | 46 | 5 | 17 | 6 |
| 12 | | 96 | 0.3 | 1.0 | 0.05 | 51 | 10 | 41 | 2 | 24 |
| 13 | | 96 | 0.3 | 1.0 | 0.08 | 51 | 18 | 33 | 2 | 17 |
| 14 | | 96 | 0.3 | 1.0 | 0.2 | 51 | 19 | 32 | 2 | 8 |
| 15 | | 96 | 0.3 | 1.0 | 6.3 | 51 | 36 | 15 | 3 | 2 |
| 16 | | 96 | 0.3 | 1.0 | 9.4 | 51 | 43 | 8 | 4 | 1 |
| 17 | Dodecyl palmitate | 93 | 0.7 | 2.3 | 2.1 | 32 | 12 | 20 | 8 | 6 |
| 18 | | 93 | 0.7 | 2.3 | 3.5 | 32 | 20 | 12 | 9 | 5 |
| 19 | | 93 | 0.7 | 2.3 | 5.2 | 32 | 26 | 6 | 10 | 4 |
| 20 | Tetradecyl myristate | 97 | 0.2 | 0.3 | 3.6 | 39 | 13 | 26 | 2 | 3 |
| 21 | Hexacosyl stearate | 96 | 0.4 | 1.1 | 3.2 | 73 | 52 | 21 | 2 | 3 |
| 22 | Triacontyl stearate | 95 | 0.4 | 1.3 | 3.2 | 78 | 55 | 23 | 3 | 3 |
| 23 | Tetradecyl laurate | 96 | 0.3 | 0.8 | 3.2 | 36 | 18 | 18 | 2 | 4 |
| 24 | Hexadecyl palmitate | 86 | 6 | 12 | 3.2 | 51 | 48 | 3 | 23 | 15 |
| 25 | | 86 | 1.6 | 4.2 | 3.2 | 51 | 49 | 2 | 12 | 5 |
| 26 | Dodecyl myristate | 77 | 8 | 14 | 5.2 | 32 | 30 | 2 | 28 | 19 |
| 27 | Hexacosyl stearate | 81 | 8 | 13 | 3.2 | 73 | 70 | 3 | 24 | 17 |
| 28 | Triscontyl stearate | 78 | 7 | 14 | 3.2 | 78 | 74 | 4 | 27 | 16 |
| Comparative Example | Tetradecyl laurate | 85 | 12 | 9 | 3.2 | 36 | 33 | 3 | 26 | 19 |

### (Example 29)

A solution of 12 parts of dicyclohexylmethane-4,4-diisocyanate (aliphatic isocyanate, trade name; Desmodur W, supplied by Sumika Bayer Urethane Co., Ltd.) in 80 parts of hexadecyl palmitate [a compound of the general formula (I) in which R¹ is pentadecyl having 15 carbon atoms and R² is hexadecyl having 16 carbon atoms] was added to 100 parts of a 5 % polyvinyl alcohol (trade name; POVAL PVA-117, supplied by Kuraray Co., Ltd.) aqueous solution, and the mixture was emulsified with stirring at room temperature until an average particle diameter of 7.6 µm was attained. The above hexadecyl palmitate had a purity of 93 %, an acid value of 0.7 and a hydroxyl value of 2.5. To the resultant emulsion was added 50 parts of a 3 % polyether aqueous solution (trade name; Adeka Polyether EDP-450, a polyether supplied by Asahi Denka Kogyo K.K.), and the mixture was stirred under heat at 60°C for 2 hours. There was obtained a dispersion of thermal storage material microcapsules having polyurethane urea coatings formed by an interfacial polymerization method, which dispersion had a low viscosity and excellent dispersion stability. The resultant thermal storage material microcapsules had a volume average particle diameter of 7.9 µm. This thermal storage material had a melting temperature of 51°C and a coagulation temperature of 21°C, and the initial difference between the melting temperature and the coagulation temperature was 30°C, the change ratio of temperature difference was 3 %, and the thermal storage material microcapsules had a thermal loss ratio of 5 %.

### (Examples 30 - 39)

Thermal storage material microcapsules according to an interfacial polymerization method were produced in the same manner as in Example 29 except that the hexadecyl palmitate in Example 29 was replaced with thermal storage materials shown in Table 2. Table 2 shows the volume average particle diameters of the thus-obtained thermal storage material microcapsules, the melting temperatures, coagulation temperatures, initial differences between the melting temperatures and the coagulation temperatures and change ratios of temperature difference of the thermal storage materials and the thermal loss ratios of the thermal storage material microcapsules.

### (Examples 40 - 44)

Thermal storage material microcapsules according to an interfacial polymerization method were produced in the same manner as in Example 29 except that the average particle diameter at the emulsification stage in Example 29 was adjusted to 0.05 µm, 0.08 µm, 0.2 µm, 17.0 µm or 22.1 µm. Table 2 shows the volume average particle diameters of the thus-obtained thermal storage material microcapsules, the melting temperatures, coagulation temperatures, initial differences between the melting temperatures and the coagulation temperatures and change ratios of temperature difference of the thermal storage materials and the thermal loss ratios of the thermal storage material microcapsules.

### (Example 45)

A solution of 8.5 parts of polymeric diphenyl methane diisocyanate (aromatic isocyanate, trade name; 44V20, supplied by Sumika Bayer Urethane Co., Ltd.) in 80 parts of dodecyl myristate [a compound of the general formula (I) in which R¹ is tridecyl having 13 carbon atoms and R² is dodecyl having 12 carbon atoms] was emulsified in 100 parts of a 5 % polyvinyl alcohol (trade name; POVAL 117, supplied by Kuraray Co., Ltd.) aqueous solution with stirring at room temperature until a volume average particle diameter of 4.7 µm was attained. The above dodecyl myristate had a purity of 84 %, an acid value of 2.2 and a hydroxyl value of 8.0. Then, 52 parts of a 3 % diethylene triamine aqueous solution was added to this emulsion, and then the mixture was stirred under heat at 60°C for 2 hours. There was obtained a dispersion of thermal storage material microcapsules having coatings formed by an interfacial polymerization, which dispersion had a low viscosity and excellent dispersion stability. Table 2 shows the volume average particle diameter of the thus-obtained thermal storage material microcapsules, the melting temperature, coagulation temperature, initial difference between the melting temperature and the coagulation temperature and change ratio of temperature difference of the thermal storage material and the thermal loss ratio of the thermal storage material microcapsules.

### (Examples 46 - 47)

Thermal storage material microcapsules in Examples 46 and 47 were produced according to an interfacial polymerization method in the same manner as in Example 45 except that the average particle diameter in the emulsification stage in Example 45 was adjusted to 10.6 µm or 13.6 µm. Table 2 shows the volume average particle diameters of the thus-obtained thermal storage material microcapsules, the melting temperatures, coagulation temperatures, initial differences between the melting temperatures and the coagulation temperatures and change ratios of temperature difference of the thermal storage materials and the thermal loss ratios of the thermal storage material microcapsules.

### (Example 48)

9.5 Parts of methyl methacrylate and 0.5 parts of ethylene glycol dimethacrylate were dissolved in 80 parts of hexadecyl palmitate [a compound of the general formula (I) in which R¹ is pentadecyl having 15 carbon atoms and R² is hexadecyl having 16 carbon atoms], and the resultant solution was placed in 300 parts of a 1 % polyvinyl alcohol aqueous solution at 75°C. The mixture was emulsified by vigorous stirring. The above hexadecyl palmitate had a purity of 93 %, an acid value of 0.7 and a hydroxyl value of 2.5. In a polymerizer with the above emulsion in it, a nitrogen atmosphere was provided while the temperature inside it was maintained at 75°C, and then a solution of 0.4 part of 2,2'-azobis{2-[1-(2-hydroxyethyl)-2-imidazolin-2-yl]propane}dihydrochloride in 15 parts of deionized water was added. Polymerization was completed after 7 hours, and the inside of the polymerizer was cooled to room temperature to complete encapsulation. There was obtained a dispersion of thermal storage material microcapsules having polymethyl methacrylate coatings formed by a radical polymerization method, which dispersion had a low viscosity and excellent dispersion stability. Table 2 shows the volume average particle diameter of the thus-obtained thermal storage material microcapsules, the melting temperature, coagulation temperature, initial difference between the melting temperature and the coagulation temperature and change ratio of temperature difference of the thermal storage material and the thermal loss ratio of the thermal storage material microcapsules.

### (Example 49)

Thermal storage material microcapsules according to an interfacial polymerization method were produced in the same manner as in Example 29 except that the hexadecyl palmitate in Example 29 was replaced with hexacosyl stearate [a compound of the general formula (I) in which R¹ is heptadecyl having 17 carbon atoms and R² is hexacosyl having 26 carbon atoms] having a purity of 92 %, an acid value of 0.8 and a hydroxyl value of 2.7. Table 2 shows the volume average particle diameter of the thus-obtained thermal storage material microcapsules, the melting temperature, coagulation temperature, initial difference between the melting temperature and the coagulation temperature and change ratio of temperature difference of the thermal storage material and the thermal loss ratio of the thermal storage material microcapsules.

Then, the dispersion of the thermal storage material microcapsules was spray-dried with a spray-dryer to obtain a thermal storage material microcapsule powder. Further, 25 parts by mass of an ethylene-vinyl acetate copolymer latex (solid content 40 mass%) as a binder and a proper amount of water were added to, and mixed with, 100 parts by mass of the thus-obtained thermal storage material microcapsule powder, and the mixture was extrusion-granulated with an extrusion type granulator. The extrusion product was dried at 100°C to give a granulated product of the thermal storage material microcapsules, which product had an average diameter of 2.1 mm in the minor diameter direction and an average diameter of 4.1 mm in the major diameter direction.

### (Example 50)

Thermal storage material microcapsules according to an interfacial polymerization method were produced in the same manner as in Example 29 except that the hexadecyl palmitate in Example 29 was replaced with triacontyl stearate [a compound of the general formula (I) in which R¹ is heptadecyl having 17 carbon atoms and R² is triacontyl having 30 carbon atoms] having a purity of 92 %, an acid value of 0.8 and a hydroxyl value of 2.8. Table 2 shows the volume average particle diameter of the thus-obtained thermal storage material microcapsules, the melting temperature, coagulation temperature, initial difference between the melting temperature and the coagulation temperature and change ratio of temperature difference of the thermal storage material and the thermal loss ratio of the thermal storage material microcapsules.

### (Example 51)

Thermal storage material microcapsules according to an interfacial polymerization method were produced in the same manner as in Example 29 except that the hexadecyl palmitate in Example 29 was replaced with tetradecyl laurate [a compound of the general formula (I) in which R¹ is undecyl having 11 carbon atoms and R² is tetradecyl having 14 carbon atoms] having a purity of 93 %, an acid value of 0.6 and a hydroxyl value of 2.2. Table 2 shows the volume average particle diameter of the thus-obtained thermal storage material microcapsules, the melting temperature, coagulation temperature, initial difference between the melting temperature and the coagulation temperature and change ratio of temperature difference of the thermal storage material and the thermal loss ratio of the thermal storage material microcapsules.

Then, the above dispersion of the thermal storage material microcapsules was spray-dried with a spray dryer to give a thermal storage material microcapsule powder having an average particle diameter of 100 µm.

### (Example 52)

Thermal storage material microcapsules according to an interfacial polymerization method were produced in the same manner as in Example 29 except that the hexadecyl palmitate in Example 29 was replaced with hexadecyl palmitate having a purity of 73 %, an acid value of 7 and a hydroxyl value of 20. Table 2 shows the volume average particle diameter of the thus-obtained thermal storage material microcapsules, the melting temperature, coagulation temperature, initial difference between the melting temperature and the coagulation temperature and change ratio of temperature difference of the thermal storage material and the thermal loss ratio of the thermal storage material microcapsules.

### (Example 53)

A solution of 12 parts of dicyclohexylmethane-4,4-diisocyanate (trade name; Desmodur W, supplied by Sumika Bayer Urethane Co., Ltd.) as a polyvalent isocyanate in a mixture of 80 parts of hexadecyl palmitate with 0.8 part of N-stearyl erucic acid amide as a super-cooling preventing agent was added to 100 parts of a 5 % polyvinyl alcohol (trade name; POVAL PVA-117, supplied by Kuraray Co., Ltd.) aqueous solution, and the mixture was emulsified with stirring at room temperature until an average particle diameter of 7.6 µm was attained. The above hexadecyl palmitate had a purity of 73 %, an acid value of 4.2 and a hydroxyl value of 13. To the resultant emulsion was added 50 parts of a 3 % polyether aqueous solution (trade name; Adeka Polyether EDP-450, a polyether supplied by Asahi Denka Kogyo K.K.), and the mixture was stirred under heat at 60°C for 2 hours. There was obtained a dispersion of thermal storage material microcapsules having polyurethane urea coatings formed by an interfacial polymerization method, which dispersion had a low viscosity and excellent dispersion stability. Table 2 shows the volume average particle diameter of the thus-obtained thermal storage material microcapsules, the melting temperature, coagulation temperature, initial difference between the melting temperature and the coagulation temperature and change ratio of temperature difference of the thermal storage material and the thermal loss ratio of the thermal storage material microcapsules.

### (Comparative Example 2)

Thermal storage material microcapsules according to an interfacial polymerization method were produced in the same manner as in Example 46 except that the dodecyl myristate in Example 46 was replaced with dodecyl myristate having a purity of 71 %, an acid value of 9 and a hydroxyl value of 24. Table 2 shows the volume average particle diameter of the thus-obtained thermal storage material microcapsules, the melting temperature, coagulation temperature, initial difference between the melting temperature and the coagulation temperature and change ratio of temperature difference of the thermal storage material and the thermal loss ratio of the thermal storage material microcapsules.

### (Example 54)

Thermal storage material microcapsules according to an interfacial polymerization method were produced in the same manner as in Example 49 except that the hexacosyl stearate in Example 49 was replaced with hexacosyl stearate having a purity of 78 %, an acid value of 7 and a hydroxyl value of 20. Table 2 shows the volume average particle diameter of the thus-obtained thermal storage material microcapsules, the melting temperature, coagulation temperature, initial difference between the melting temperature and the coagulation temperature and change ratio of temperature difference of the thermal storage material and the thermal loss ratio of the thermal storage material microcapsules.

Then, a granulated product of the thermal storage material microcapsules, having an average diameter of 2.1 mm in the minor diameter direction and an average diameter of 4.1 mm in the major diameter direction, was obtained through a powder of the thermal storage material microcapsules in the same manner as in Example 49.

### (Example 55)

Thermal storage material microcapsules according to an interfacial polymerization method were produced in the same manner as in Example 50 except that the triacontyl stearate in Example 50 was replaced with triacontyl stearate having a purity of 75 %, an acid value of 8 and a hydroxyl value of 22. Table 2 shows the volume average particle diameter of the thus-obtained thermal storage material microcapsules, the melting temperature, coagulation temperature, initial difference between the melting temperature and the coagulation temperature and change ratio of temperature difference of the thermal storage material and the thermal loss ratio of the thermal storage material microcapsules.

### (Comparative Example 3)

Thermal storage material microcapsules according to an interfacial polymerization method were produced in the same manner as in Example 51 except that the tetradecyl laurate in Example 51 was replaced with tetradecyl laurate having a purity of 77 %, an acid value of 10 and a hydroxyl value of 18. Table 2 shows the volume average particle diameter of the thus-obtained thermal storage material microcapsules, the melting temperature, coagulation temperature, initial difference between the melting temperature and the coagulation temperature and change ratio of temperature difference of the thermal storage material and the thermal loss ratio of the thermal storage material microcapsules.

Then, a granulated product of the thermal storage material microcapsules, having an average diameter of 100 mm, was obtained in the same manner as in Example 51.

### <Evaluation A> Evaluation in clothing material

The thermal storage material microcapsule dispersions obtained in Example 47 and Comparative Example 2 were used, and 180 g/m² rayon fiber cloths were impregnated with the microcapsules with a nip coater such that each cloth had a microcapsule solid mass of 30 g/m². Then, the cloths were dried and processed to clothing materials having the property of thermal storage. Further, coats of adult sizes were sewn from the clothing materials. Five male adults wore a cotton undergarment each and wore thereon each a coat imparted with thermal storage material microcapsules, and feeling temperature senses were observed.

First, the results of feeling temperature senses after they rested sitting in a room having a room temperature of 24°C for 1 hour and then moved into a 35°C atmosphere that was a simulation of hot whether in midsummer will be described. For comparison, the observation was made using similar clothes imparted with no thermal storage material microcapsules. In this case, a third man began to feel too hot in about 5 minutes. When the observation was made using the clothes imparted with the thermal storage material microcapsules of Example 47, a third man began to feel too hot in about 16 minutes, and it was found that the time period for which the feeling of the comfortable sense continued became longer with the clothes imparted with the thermal storage material microcapsules of Example 47.

Further, when the thermal storage material microcapsules of Comparative Example 2 were used, a third man began to feel too hot in about 15 minutes, and the result at this point of time was that there was almost no difference from those of Example 47.

The results of feeling temperature senses when they returned to a room having a room temperature of 24°C 40 minutes after they moved to the 35°C atmosphere will be described below. In the case of the clothes imparted with the thermal storage material microcapsules of Example 47, all of the five adults felt the sense of coolness immediately when they returned into the room having a room temperature of 24°C, and none of them felt too hot. With regard to the clothes imparted with the thermal storage material microcapsules of Example 47 in which the difference between the melting temperature and the coagulation temperature was 6°C, even when they return to a suitable-temperature environment from the so-called hot environment, the temperature thereof is rapidly decreased to 26°C which is the coagulation temperature of the thermal storage material, and the heat release that the coagulation of the thermal storage material entails takes at 26°C, so that no heat release was felt from the clothes and that a comfortable sense can be immediately felt.

On the other hand, when the thermal storage material microcapsules of Comparative Example 2 were used, all of the five adults felt too hot immediately after they returned into the room having a room temperature of 24°C, and after about 12 minutes, a third man began to barely feel the sense of coolness. With regard to the clothes imparted with the thermal storage material microcapsules of Comparative Example 2 in which the difference between the melting temperature and the coagulation temperature was 3°C, even when they returned into the suitable-temperature environment from the so-called hot environment, a decrease in temperature stopped at 29°C which was the coagulation temperature of the thermal storage material, which resulted in that the adults who wore those clothes felt the sense of being too hot from the clothes although the room temperature was 24°C.

### <Evaluation B> Evaluation in microwave application type heat-retaining material

The granulated products of the thermal storage material microcapsules obtained in Examples 49 and 54 were used. Microwave application type heat-retaining materials were respectively obtained in a manner that 30 parts by mass of the granulated product of thermal storage material microcapsules and 70 parts by mass of silica gel particles having a particle diameter of 2 mm were mixed and 700 g of the resultant mixture was filled in a bag made of cotton cloth. These heat-retaining materials were heated with a cooking microwave oven (high-frequency output = 500 W) for 2 minutes and then taken out of the microwave oven to observe a feeling temperature sense.

When the thermal storage material microcapsules of Example 49 in which the difference between the melting temperature and the coagulation temperature was 23°C was used, the hot retention material exhibited a temperature of 60°C or higher at the initial stage after it was taken out, and the sense of relatively strong heat was actually felt. Approximately 5 minutes after it was taken out, it came to have a temperature of 50°C and the sense of pleasant heat came to be felt. Thereafter, a temperature of 45°C or higher that was a pleasant temperature region continued for approximately 65 minutes, and the heat-retaining material maintained the sense of warmness for a long period of time.

On the other hand, when the thermal storage material microcapsules of Example 54 in which the difference between the melting temperature and the coagulation temperature was 4°C was used, it exhibited a temperature of 70°C or higher at the initial stage after it was taken out, or it exhibited the sense of intense heat, and it exhibited the sense of strong heat at 65°C or higher even approximately 20 minutes after it was taken out. It was hence difficult to obtain the sense of pleasant use.

### <Evaluation C> Evaluation on fuel cell hot water supply cogeneration system

The dispersions of the thermal storage material microcapsules obtained in Examples 50 and 55 were used for evaluating them in a fuel cell hot water supply cogeneration system in the following manner. In a fuel cell hot water supply cogeneration system, a modifier and a fuel cell were provided with a heat-exchanger each, these heat-exchangers were connected to a thermal storage tank through pipes, the dispersion of the thermal storage material microcapsules was filled in the pipes and the thermal storage tank and circulated, and waste heat recovered by the heat-exchangers and the modifier was stored in the thermal storage tank for 2 hours. Then, hot water was withdrawn from a water supply pipe system connected to the thermal storage tank and monitored for temperatures.

When the thermal storage material microcapsules of Example 50 in which the difference between the melting temperature and the coagulation temperature was 25°C was used, hot water having a temperature of approximately 55°C or higher could be stably supplied with a little variation in temperature.

On the other hand, when the thermal storage material microcapsules of Example 55 in which the difference between the melting temperature and the coagulation temperature was approximately 4°C was used, hot water having a high temperature of approximately 70°C was withdrawn at an initial stage, while the temperature of the water soon began to sharply decrease, and it was difficult to supply hot water stably with a little variation in temperature.

### <Evaluation D> Evaluation in gas adsorbent

The powders of the thermal storage material microcapsules obtained in Example 51 and Comparative Example 3 were used, and thermal storage material composite adsorbents were obtained in a manner that 30 parts of the powder of the thermal storage material microcapsules and 100 parts of activated carbon having an average particle diameter of 1.2 mm were mixed. In an environment at an air temperature of 25°C, methane gas (supply gas temperature = 25°C) was fed to the thermal storage material composite adsorbent, a gas pressure of 1 MPa and a gas pressure 0.1 MPa were alternately repeated to carry out gas adsorption and gas desorption 9 times, and then an adsorption amount and a desorption amount in the tenth time were measured. A difference between these data was calculated as an effective adsorption volume.

When the thermal storage material microcapsules of Example 51 in which the difference between the melting temperature and the coagulation temperature was 20°C was used, the effective adsorption volume per g of the thermal storage material composite adsorbent was 57 mg or an excellent result was obtained.

On the other hand, when the thermal storage material microcapsules of Comparative Example 4 in which the difference between the melting temperature and the coagulation temperature was 4°C was used, the effective adsorption volume per g of the thermal storage material composite adsorbent was 49 mg or the result was poor as compared with the adsorbent using the thermal storage material microcapsules of Example 51. It is assumed that the above occurred as follows. Since the thermal storage material had a coagulation temperature of 32°C, the thermal energy that was generated as heat of adsorption and absorbed in the thermal storage material microcapsules during adsorption was fully released in the environment at an air temperature of 25°C before desorption, so that the thermal energy that was to effectively contribute to the inhibition of a decrease in temperature during the desorption was decreased, and the desorption efficiency was decreased as compared with that of the counterpart of Example 51.

### Table 2

**Table 2**

| Example | Thermal storage material | | | | Particle diameter | Melting temperature | Coagulation temperatur | Difference between Mel. Temp. - Co. | Change ratio of temp. temp difference | Thermal loss ratio |
|---|---|---|---|---|---|---|---|---|---|---|
| | Name of compound | purity | Acid value | Hydroxyl value | | | | | | |
| | | (%) | (mgKOH/g) | (mgKOH/g) | (*µ*m) | (°C) | (°C) | (°C) | (%) | (%) |
| 29 | Hexadecyl palmitate | 93 | 0.7 | 2.5 | 7.9 | 51 | 21 | 30 | 3 | 5 |
| 30 | | 84 | 0.7 | 2.5 | 7.9 | 51 | 32 | 19 | 5 | 5 |
| 31 | | 75 | 0.7 | 2:5 | 7.9 | 51 | 41 | 10 | 7 | 5 |
| 32 | | 93 | 2.4 | 2.5 | 7.9 | 51 | 33 | 18 | 8 | 5 |
| 33 | | 93 | 3.9 | 2.5 | 7.9 | 51 | 42 | 9 | 16 | 6 |
| 34 | | 93 | 0.7 | 7.0 | 7.9 | 51 | 30 | 21 | 6 | 5 |
| 35 | | 93 | 0.7 | 12 | 7.9 | 51 | 40 | 11 | 13 | 6 |
| 36 | | 75 | 0.7 | 12 | 7.9 | 51 | 42 | 9 | 14 | 7 |
| 37 | | 75 | 2.4 | 12 | 7.9 | 51 | 43 | 8 | 17 | 7 |
| 38 | | 75 | 3.9 | 2.5 | 7.9 | 51 | 44 | 7 | 18 | 8 |
| 39 | | 93 | 3.9 | 12 | 7.9 | 51 | 44 | 7 | 19 | 8 |
| 40 | | 93 | 0.7 | 2.5 | 0.05 | 51 | 8 | 43 | 3 | 27 |
| 41 | | 93 | 0.7 | 2.5 | 0.08 | 51 | 17 | 34 | 3 | 21 |
| 42 | | 93 | 0.7 | 2.5 | 0.2 | 51 | 18 | 33 | 3 | 10 |
| 43 | | 93 | 0.7 | 2.5 | 17.3 | 51 | 33 | 18 | 4 | 4 |
| 44 | | 93 | 0.7 | 2.5 | 22.4 | 51 | 42 | 9 | 5 | 3 |
| 45 | Dodecyl myristate | 84 | 2.2 | 8.0 | 4.9 | 32 | 10 | 22 | 10 | 6 |
| 46 | | 84 | 2.2 | 8.0 | 10.8 | 32 | 19 | 13 | 11 | 5 |
| 47 | | 84 | 2.2 | 8.0 | 13.8 | 32 | 26 | 6 | 12 | 4 |
| 48 | Hexadecyl palmitate | 93 | 0.7 | 2.5 | 5.3 | 51 | 22 | 29 | 3 | 11 |
| 49 | Hexacosyl stearate | 92 | 0.8 | 2.7 | 7.9 | 73 | 50 | 23 | 4 | 4 |
| 50 | Triacontyl stearate | 92 | 0.8 | 2.8 | 7.9 | 78 | 53 | 25 | 4 | 4 |
| 51 | Tetradecyl laurate | 93 | 0.6 | 2.2 | 7.9 | 36 | 16 | 20 | 3 | 5 |
| 52 | Hexadecyl palmitate | 73 | 7 | 20 | 7.9 | 51 | 48 | 3 | 25 | 18 |
| 53 | | 73 | 4.2 | 13 | 7.9 | 51 | 49 | 2 | 14 | 8 |
| Comparative Example 2 | Dodecyl myristate | 71 | 9 | 24 | 10.8 | 32 | 29 | 3 | 27 | 20 |
| 54 | Hexacosyl stearate | 78 | 7 | 20 | 7.9 | 73 | 69 | 4 | 25 | 17 |
| 55 | Triacontyl stearate | 75 | 8 | 22 | 7.9 | 78 | 74 | 4 | 29 | 18 |
| Comparative Example 3 | Tetradecyl laurate | 77 | 10 | 18 | 7.9 | 36 | 32 | 4 | 27 | 19 |

### (Example 56).

70 Parts of dodecyl myristate having a purity of 88 %, an acid value of 2.6 and a hydroxyl value of 4.8 [total number of carbon atoms = 26] and 30 parts of dodecyl laurate having a purity of 87 %, an acid value of 2.7 and a hydroxyl value of 4.4 [total number of carbon atoms = 24] were homogeneously mixed to prepare a mixture A as a thermal storage material. The difference between the melting temperature and the coagulation temperature of this mixture before micro-encapsulation was 0.7°C.

100 Parts of the above mixture A was added, with vigorously stirring, to 125 parts of a 5 % styrene-maleic anhydride copolymer sodium salt having a pH adjusted to 4.5, followed by emulsification until an average particle diameter of 12.0 µm was attained. Then, 10 parts of melamine, 14 parts of a 37 % formaldehyde aqueous solution and 25 parts of water were mixed, the mixture was adjusted to a pH of 8 and a melamine-formalin initial condensate aqueous solution was prepared at approximately 80°C. The entire amount of this aqueous solution was added to the above emulsion and the mixture was stirred under heat at 70°C for 2 hours to carry out an encapsulation reaction. Then, the resultant dispersion was adjusted to a pH of 9 to complete the encapsulation. There was obtained a dispersion of thermal storage material microcapsules having melamine-formalin resin coatings, which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 57)

80 Parts of dodecyl laurate having a purity of 92 %, an acid value of 1.4 and a hydroxyl value of 3.2 [total number of carbon atoms = 24] and 20 parts of decyl laurate having a purity of 91 %, an acid value of 1.6 and a hydroxyl value of 3.5 [total number of carbon atoms = 22] were homogeneously mixed to prepare a mixture B as a thermal storage material. The difference between the melting temperature and the coagulation temperature of this mixture before micro-encapsulation was 0.1°C.

A mixture of the above mixture B with 1 part of N-stearyl palmitic acid amide as a super-cooling preventing agent was added, with vigorously stirring, to 125 parts of a 5 % styrene-maleic anhydride copolymer sodium salt having a pH adjusted to 4.5, followed by emulsification until an average particle diameter of 2.0 µm was attained. Then, 10 parts of melamine, 14 parts of a 37 % formaldehyde aqueous solution and 25 parts of water were mixed, the mixture was adjusted to a pH of 8 and a melamine-formalin initial condensate aqueous solution was prepared at approximately 80°C. The entire amount of this aqueous solution was added to the above emulsion and the mixture was stirred under heat at 70°C for 2 hours to carry out an encapsulation reaction. Then, the resultant dispersion was adjusted to a pH of 9 to complete the encapsulation. There was obtained a dispersion of thermal storage material microcapsules having melamine-formalin resin coatings, which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 58)

97 Parts of that same dodecyl laurate as that used in Example 57 and 3 parts of the same decyl laurate as that used in Example 60 were homogeneously mixed to prepare a mixture C as a thermal storage material. The difference between the melting temperature and the coagulation temperature of this mixture before micro-encapsulation was 3.8°C.

Encapsulation was carried out in the same manner as in Example 57 except that the mixture B was replaced with the mixture C, to give a dispersion of thermal storage material microcapsules which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 59)

95 Parts of that same dodecyl laurate as that used in Example 57 and 5 parts of the same decyl laurate as that used in Example 60 were homogeneously mixed to prepare a mixture D as a thermal storage material. The difference between the melting temperature and the coagulation temperature of this mixture before micro-encapsulation was 3.6°C.

Encapsulation was carried out in the same manner as in Example 57 except that the mixture B was replaced with the mixture D, to give a dispersion of thermal storage material microcapsules which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 60)

90 Parts of that same dodecyl laurate as that used in Example 57 and 10 parts of the same decyl laurate as that used in Example 57 were homogeneously mixed to prepare a mixture E as a thermal storage material. The difference between the melting temperature and the coagulation temperature of this mixture before micro-encapsulation was 2.6°C.

Encapsulation was carried out in the same manner as in Example 57 except that the mixture B was replaced with the mixture E, to give a dispersion of thermal storage material microcapsules which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 61)

85 Parts of that same dodecyl laurate as that used in Example 57 and 15 parts of the same decyl laurate as that used in Example 57 were homogeneously mixed to prepare a mixture F as a thermal storage material. The difference between the melting temperature and the coagulation temperature of this mixture before micro-encapsulation was 1.4°C.

Encapsulation was carried out in the same manner as in Example 57 except that the mixture B was replaced with the mixture F, to give a dispersion of thermal storage material microcapsules which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 62)

50 Parts of that same dodecyl laurate as that used in Example 57 and 50 parts of the same decyl laurate as that used in Example 57 were homogeneously mixed to prepare a mixture G as a thermal storage material. The difference between the melting temperature and the coagulation temperature of this mixture before micro-encapsulation was 0.5°C.

Encapsulation was carried out in the same manner as in Example 57 except that the mixture B was replaced with the mixture G, to give a dispersion of thermal storage material microcapsules which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 63)

15 Parts of that same dodecyl laurate as that used in Example 57 and 85 parts of the same decyl laurate as that used in Example 57 were homogeneously mixed to prepare a mixture H as a thermal storage material. The difference between the melting temperature and the coagulation temperature of this mixture before micro-encapsulation was 2.9°C.

Encapsulation was carried out in the same manner as in Example 57 except that the mixture B was replaced with the mixture H, to give a dispersion of thermal storage material microcapsules which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 64)

10 Parts of that same dodecyl laurate as that used in Example 57 and 90 parts of the same decyl laurate as that used in Example 57 were homogeneously mixed to prepare a mixture H as a thermal storage material. The difference between the melting temperature and the coagulation temperature of this mixture before micro-encapsulation was 3.1°C.

Encapsulation was carried out in the same manner as in Example 57 except that the mixture B was replaced with the mixture I, to give a dispersion of thermal storage material microcapsules which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 65)

5 Parts of that same dodecyl laurate as that used in Example 57 and 95 parts of the same decyl laurate as that used in Example 57 were homogeneously mixed to prepare a mixture J as a thermal storage material. The difference between the melting temperature and the coagulation temperature of this mixture before micro-encapsulation was 3.0°C.

Encapsulation was carried out in the same manner as in Example 57 except that the mixture B was replaced with the mixture J, to give a dispersion of thermal storage material microcapsules which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 66)

3 Parts of that same dodecyl laurate as that used in Example 57 and 97 parts of the same decyl laurate as that used in Example 57 were homogeneously mixed to prepare a mixture K as a thermal storage material. The difference between the melting temperature and the coagulation temperature of this mixture before micro-encapsulation was 3.7°C.

Encapsulation was carried out in the same manner as in Example 57 except that the mixture B was replaced with the mixture K, to give a dispersion of thermal storage material microcapsules which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 67)

50 Parts of dodecyl myristate having a purity of 90 %, an acid value of 1.8 and a hydroxyl value of 3.8 [total number of carbon atoms = 26] and 50 parts of the same decyl laurate as that used in Example 57 [total number of carbon atoms = 22] were homogeneously mixed to prepare a mixture L as a thermal storage material. The difference between the melting temperature and the coagulation temperature of this mixture before micro-encapsulation was 0.2°C.

Encapsulation was carried out in the same manner as in Example 57 except that the mixture B was replaced with the mixture L, to give a dispersion of thermal storage material microcapsules which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 68)

70 Parts of tetradecyl myristate having a purity of 93 %, an acid value of 1.5 and a hydroxyl value of 3.1 [total number of carbon atoms = 28] and 30 parts of the same dodecyl myristate as that used in Example 67 [total number of carbon atoms = 26] were homogeneously mixed to prepare a mixture M. The difference between the melting temperature and the coagulation temperature of this mixture before micro-encapsulation was 1.1°C.

1 Part of N-stearyl palmitic acid amide as a supper-cooling preventing agent was added to 100 parts of the above mixture M, and the resultant mixture was added, with vigorously stirring, to 125 parts of a 5 % ethylene-maleic anhydride copolymer sodium salt aqueous solution containing 7.5 parts of urea and 0.6 part of resorcin and having a pH adjusted to 3.0, followed by emulsification until an average particle diameter of 5 µm was attained. To this emulsion were added 19 parts of a 37 % formaldehyde aqueous solution and 25 parts of water, and the mixture was stirred under heat at 60°C for 2 hours to carry out an encapsulation reaction. Then, this dispersion was adjusted to a pH of 9 to complete the encapsulation. There was obtained a dispersion of thermal storage material microcapsules having urea formalin resin coatings, which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 69)

85 Parts of the same decyl laurate as that used in Example 57 [total number of carbon atoms = 22] and 15 parts of decyl decanoate having a purity of 92 %, an acid value of 1.9 and a hydroxyl value of 3.3 [total number of carbon atoms = 20] were homogeneously mixed to prepare a mixture N. The difference between the melting temperature and the coagulation temperature of this mixture before micro-encapsulation was 2.0°C.

A solution of 11 parts of polymeric diphenyl methane diisocyanate (aromatic isocyanate, trade name; 44V20, supplied by Sumika Bayer Urethane Co., Ltd.) as a polyvalent isocyanate in 100 parts of the above mixture N containing 1 part of N-stearyl palmitic acid amide as a super-cooling preventing agent was added to 125 parts of a 5 % polyvinyl alcohol (trade name; POVAL 117, supplied by Kuraray Co., Ltd.) aqueous solution, and the mixture was emulsified with stirring at room temperature until a volume average particle diameter of 3 µm was attained. Then, 69 parts of a 3 % diethylene triamine aqueous solution was added to this emulsion, and the mixture was heated and stirred at 60°C for 1 hour. There was obtained a dispersion of thermal storage material microcapsules having polyurea coatings, which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 70)

40 Parts of the same dodecyl laurate as that used in Example 57 [total number of carbon atoms = 24] and 60 parts of the same decyl laurate as that used in Example 67 [total number of carbon atoms = 22] were homogeneously mixed to prepare a mixture O. The difference between the melting temperature and the coagulation temperature of this mixture before micro-encapsulation was 1.9°C.

A solution of 16 parts of dicyclohexaylmethane-4,4-diisocyanate (aliphatic isocyanate, trade name; Desmodur W, supplied by Sumika Bayer Urethane Co., Ltd.) as a polyvalent isocyanate in 100 parts of the above mixture O containing 1 part of N-stearyl palmitic acid amide as a super-cooling preventing agent was added to 125 parts of a 5 % polyvinyl alcohol (trade name; POVAL 117, supplied by Kuraray Co., Ltd.) aqueous solution, and the mixture was emulsified with stirring at room temperature until a volume average particle diameter of 4 µm was attained. Then, 69 parts of a 3 % polyether aqueous solution (trade name; Adeka Polyether EDP-450, a polyether supplied by Asahi Denka Kogyo K.K.) was added to this emulsion, and the mixture was heated and stirred at 60°C. There was obtained a dispersion of thermal storage material microcapsules having polyurethane urea coatings, which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 71)

50 Parts of the same dodecyl myristate as that used in Example 67 [total number of carbon atoms = 26] and 50 parts of the same dodecyl laurate as that used in Example 57 [total number of carbon atoms = 24] were homogeneously mixed to prepare a mixture P. The difference between the melting temperature and the coagulation temperature of this mixture before micro-encapsulation was 0°C.

1 Part of N-stearyl palmitic acid amide as a super-cooling preventing agent was added to 100 parts of the above mixture P, and further, 11.9 parts of methyl methacrylate and 0.6 part of ethylene glycol dimethacrylate as monomers were dissolved therein. The resultant solution was placed in 375 parts of a 1 % polyvinyl alcohol aqueous solution at 75°C and the mixture was vigorously stirred to emulsify it. In a polymerizer with the above emulsion in it, a nitrogen atmosphere was provided while the temperature inside it was maintained at 75°C, and then a solution of 0.5 part of 2,2'-azobis{2-[1-(2-hydroxyethyl)-2-imidazolin-2-yl]propane}dihydrochloride in 19 parts of deionized water was added. Polymerization was completed after 7 hours, and the inside of the polymerizer was cooled to room temperature to complete encapsulation. There was obtained a dispersion of thermal storage material microcapsules having polymethyl methacrylate coatings formed by a radical polymerization method, which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 72)

20 Parts of that same tetradecyl myristate as that used in Example 68 [total number of carbon atoms = 28], 70 parts of the same dodecyl myristate as that used in Example 67 [total number of carbon atoms = 26] and 10 parts of the same dodecyl laurate as that used in Example 57 [total number of carbon atoms = 24] were homogeneously mixed to prepare a mixture Q as a thermal storage material. The difference between the melting temperature and the coagulation temperature of this mixture before micro-encapsulation was 1.3°C.

Encapsulation was carried out in the same manner as in Example 57 except that the mixture B was replaced with the mixture Q, to give a dispersion of thermal storage material microcapsules which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 73)

50 Parts of that same dodecyl myristate as that used in Example 67 [total number of carbon atoms = 26] and 50 parts of tetradecyl laurate having a purity of 91 %, an acid value of 1.7 and a hydroxyl value of 3.4 [total number of carbon atoms = 26] were homogeneously mixed to prepare a mixture R as a thermal storage material. The difference between the melting temperature and the coagulation temperature of this mixture before micro-encapsulation was 0.7°C.

Encapsulation was carried out in the same manner as in Example 57 except that the mixture B was replaced with the mixture R, to give a dispersion of thermal storage material microcapsules which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 74)

40 Parts of that same dodecyl myristate as that used in Example 67 [total number of carbon atoms = 26], 30 parts of the same dodecyl laurate as that used in Example 57 [total number of carbon atoms = 24] and 30 parts of the same tetradecyl myristate as that used in Example 68 [total number of carbon atoms = 28] were homogeneously mixed to prepare a mixture S as a thermal storage material. The difference between the melting temperature and the coagulation temperature of this mixture before micro-encapsulation was 0.6°C.

Encapsulation was carried out in the same manner as in Example 57 except that the mixture B was replaced with the mixture S, to give a dispersion of thermal storage material microcapsules which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 75)

30 Parts of that same dodecyl myristate as that used in Example 67 [total number of carbon atoms = 26], 25 parts of the same dodecyl laurate as that used in Example 57 [total number of carbon atoms = 24], 25 parts of the same tetradecyl myristate as that used in Example 68 [total number of carbon atoms = 28] and 20 parts of the same tetradecyl laurate as that used in Example 73 [total number of carbon atoms = 26] were homogeneously mixed to prepare a mixture T as a thermal storage material. The difference between the melting temperature and the coagulation temperature of this mixture before micro-encapsulation was 0.5°C.

Encapsulation was carried out in the same manner as in Example 57 except that the mixture B was replaced with the mixture T, to give a dispersion of thermal storage material microcapsules which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 76)

25 Parts of that same dodecyl myristate as that used in Example 67 [total number of carbon atoms = 26], 25 parts of the same dodecyl laurate as that used in Example 57 [total number of carbon atoms = 24], 25 parts of the same tetradecyl myristate as that used in Example 68 [total number of carbon atoms = 28] and 25 parts of the same tetradecyl laurate as that used in Example 73 [total number of carbon atoms = 26] were homogeneously mixed to prepare a mixture U as a thermal storage material. The difference between the melting temperature and the coagulation temperature of this mixture before micro-encapsulation was 0.3°C.

Encapsulation was carried out in the same manner as in Example 57 except that the mixture B was replaced with the mixture U, to give a dispersion of thermal storage material microcapsules which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 77)

20 Parts of that same dodecyl myristate as that used in Example 67 [total number of carbon atoms = 26], 20 parts of the same dodecyl laurate as that used in Example 57 [total number of carbon atoms = 24], 20 parts of the same tetradecyl myristate as that used in Example 68 [total number of carbon atoms = 28], 20 parts of the same tetradecyl laurate as that used in Example 73 [total number of carbon atoms = 26] and 20 parts of dodecyl palmitate having a purity of 91 %, an acid value of 1.6 and a hydroxyl value of 3.9 [total number of carbon atoms = 28] were homogeneously mixed to prepare a mixture V as a thermal storage material. The difference between the melting temperature and the coagulation temperature of this mixture before micro-encapsulation was 1.0°C.

Encapsulation was carried out in the same manner as in Example 57 except that the mixture B was replaced with the mixture V, to give a dispersion of thermal storage material microcapsules which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 78)

17 Parts of that same dodecyl myristate as that used in Example 67 [total number of carbon atoms = 26], 17 parts of the same dodecyl laurate as that used in Example 57 [total number of carbon atoms = 24], 17 parts of the same tetradecyl myristate as that used in Example 68 [total number of carbon atoms = 28], 170 parts of the same tetradecyl laurate as that used in Example 73 [total number of carbon atoms = 26], 16 parts of the same dodecyl palmitate as that used in Example 77 [total number of carbon atoms = 28] and 16 parts of hexadecyl laurate having a purity of 90 %, an acid value of 1.9 and a hydroxyl value of 3.5 [total number of carbon atoms = 28] were homogeneously mixed to prepare a mixture W as a thermal storage material. The difference between the melting temperature and the coagulation temperature of this mixture before micro-encapsulation was 0.1°C.

Encapsulation was carried out in the same manner as in Example 57 except that the mixture B was replaced with the mixture W, to give a dispersion of thermal storage material microcapsules which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 79)

80 Parts of dodecyl laurate having a purity of 87 %, an acid value of 2.6 and a hydroxyl value of 4.5 and 20 parts of decyl laurate having a purity of 86 %, an acid value of 2.8 and a hydroxyl value of 4.7 were homogeneously mixed to prepare a mixture a as a thermal storage material. The difference between the melting temperature and the coagulation temperature of this mixture before micro-encapsulation was 0.1°C.

Encapsulation was carried out in the same manner as in Example 57 except that the mixture B was replaced with the mixture a to give a dispersion of thermal storage material microcapsules which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 80)

80 Parts of dodecyl laurate having a purity of 81 %, an acid value of 2.6 and a hydroxyl value of 4.5 and 20 parts of decyl laurate having a purity of 82 %, an acid value of 2.8 and a hydroxyl value of 4.7 were homogeneously mixed to prepare a mixture b as a thermal storage material. The difference between the melting temperature and the coagulation temperature of this mixture before micro-encapsulation was 0.2°C.

Encapsulation was carried out in the same manner as in Example 57 except that the mixture B was replaced with the mixture b to give a dispersion of thermal storage material microcapsules which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 81)

80 Parts of dodecyl laurate having a purity of 76 %, an acid value of 2.6 and a hydroxyl value of 4.5 and 20 parts of decyl laurate having a purity of 77 %, an acid value of 2.8 and a hydroxyl value of 4.7 were homogeneously mixed to prepare a mixture c as a thermal storage material. The difference between the melting temperature and the coagulation temperature of this mixture before micro-encapsulation was 0.3°C.

Encapsulation was carried out in the same manner as in Example 57 except that the mixture B was replaced with the mixture c to give a dispersion of thermal storage material microcapsules which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 82)

80 Parts of dodecyl laurate having a purity of 71 %, an acid value of 2.6 and a hydroxyl value of 4.5 and 20 parts of decyl laurate having a purity of 72 %, an acid value of 2.8 and a hydroxyl value of 4.7 were homogeneously mixed to prepare a mixture d as a thermal storage material. The difference between the melting temperature and the coagulation temperature of this mixture before micro-encapsulation was 0.3°C.

Encapsulation was carried out in the same manner as in Example 57 except that the mixture B was replaced with the mixture d to give a dispersion of thermal storage material microcapsules which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 83)

80 Parts of dodecyl laurate having a purity of 87 %, an acid value of 4.4 and a hydroxyl value of 4.5 and 20 parts of decyl laurate having a purity of 86 %, an acid value of 4.5 and a hydroxyl value of 4.7 were homogeneously mixed to prepare a mixture e as a thermal storage material. The difference between the melting temperature and the coagulation temperature of this mixture before micro-encapsulation was 0.2°C.

Encapsulation was carried out in the same manner as in Example 57 except that the mixture B was replaced with the mixture e to give a dispersion of thermal storage material microcapsules which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 84)

80 Parts of dodecyl laurate having a purity of 87 %, an acid value of 7.6 and a hydroxyl value of 4.5 and 20 parts of decyl laurate having a purity of 86 %, an acid value of 7.3 and a hydroxyl value of 4.7 were homogeneously mixed to prepare a mixture f as a thermal storage material. The difference between the melting temperature and the coagulation temperature of this mixture before micro-encapsulation was 0.2°C.

Encapsulation was carried out in the same manner as in Example 57 except that the mixture B was replaced with the mixture f to give a dispersion of thermal storage material microcapsules which dispersion had a slightly increased viscosity and a little poor dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules. When the acid value of the thermal storage material was close to the upper limit of the preferred range thereof in the present invention, the result was that the thermal storage material microcapsules were slightly poor in thermal history durability.

### (Example 85)

80 Parts of dodecyl laurate having a purity of 87 %, an acid value of 9.5 and a hydroxyl value of 4.5 and 20 parts of decyl laurate having a purity of 86 %, an acid value of 9.4 and a hydroxyl value of 4.7 were homogeneously mixed to prepare a mixture g as a thermal storage material. The difference between the melting temperature and the coagulation temperature of this mixture before micro-encapsulation was 0.2°C.

Encapsulation was carried out in the same manner as in Example 57 except that the mixture B was replaced with the mixture g to give a dispersion of thermal storage material microcapsules which dispersion had a slightly increased viscosity and a little poor dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules. When the acid value of the thermal storage material was higher than the preferred range thereof in the present invention, the result was that the thermal storage material microcapsules were slightly poor in thermal history durability.

### (Example 86)

80 Parts of dodecyl laurate having a purity of 87 %, an acid value of 2.6 and a hydroxyl value of 8 and 20 parts of decyl laurate having a purity of 86 %, an acid value of 2.8 and a hydroxyl value of 9 were homogeneously mixed to prepare a mixture h as a thermal storage material. The difference between the melting temperature and the coagulation temperature of this mixture before micro-encapsulation was 0.2°C.

Encapsulation was carried out in the same manner as in Example 57 except that the mixture B was replaced with the mixture h to give a dispersion of thermal storage material microcapsules which dispersion had a low viscosity and excellent dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 87)

80 Parts of dodecyl laurate having a purity of 87 %, an acid value of 2.6 and a hydroxyl value of 19 and 20 parts of decyl laurate having a purity of 86 %, an acid value of 2.8 and a hydroxyl value of 18 were homogeneously mixed to prepare a mixture i as a thermal storage material. The difference between the melting temperature and the coagulation temperature of this mixture before micro-encapsulation was 0.2°C.

Encapsulation was carried out in the same manner as in Example 57 except that the mixture B was replaced with the mixture i to give a dispersion of thermal storage material microcapsules which dispersion had a slightly increased viscosity and a little poor dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules. When the hydroxyl value of the thermal storage material was close to the upper limit of the preferred range thereof in the present invention, the result was that the thermal storage material microcapsules were slightly poor in thermal history durability.

### (Example 88)

80 Parts of dodecyl laurate having a purity of 87 %, an acid value of 2.6 and a hydroxyl value of 24 and 20 parts of decyl laurate having a purity of 86 %, an acid value of 2.8 and a hydroxyl value of 25 were homogeneously mixed to prepare a mixture j as a thermal storage material. The difference between the melting temperature and the coagulation temperature of this mixture before micro-encapsulation was 0.2°C.

Encapsulation was carried out in the same manner as in Example 57 except that the mixture B was replaced with the mixture j to give a dispersion of thermal storage material microcapsules which dispersion had a slightly increased viscosity and a little poor dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules. When the hydroxyl value of the thermal storage material was higher than the preferred range thereof in the present invention, the result was that the thermal storage material microcapsules were slightly poor in thermal history durability.

### (Example 89)

80 Parts of dodecyl laurate having a purity of 76 %, an acid value of 2.6 and a hydroxyl value of 19 and 20 parts of decyl laurate having a purity of 77 %, an acid value of 2.8 and a hydroxyl value of 18 were homogeneously mixed to prepare a mixture k as a thermal storage material. The difference between the melting temperature and the coagulation temperature of this mixture before micro-encapsulation was 0.3°C.

Encapsulation was carried out in the same manner as in Example 57 except that the mixture B was replaced with the mixture k to give a dispersion of thermal storage material microcapsules which dispersion had a slightly increased viscosity and a little poor dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules. When the hydroxyl value of the thermal storage material was close to the upper limit of the preferred range thereof in the present invention, the result was that the thermal storage material microcapsules were slightly poor in thermal history durability.

### (Example 90)

80 Parts of dodecyl laurate having a purity of 76 %, an acid value of 4.4 and a hydroxyl value of 19 and 20 parts of decyl laurate having a purity of 77 %, an acid value of 4.5 and a hydroxyl value of 18 were homogeneously mixed to prepare a mixture m as a thermal storage material. The difference between the melting temperature and the coagulation temperature of this mixture before micro-encapsulation was 0.3°C.

Encapsulation was carried out in the same manner as in Example 57 except that the mixture B was replaced with the mixture m to give a dispersion of thermal storage material microcapsules which dispersion had a slightly increased viscosity and a little poor dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules. When the hydroxyl value of the thermal storage material was close to the upper limit of the preferred range thereof in the present invention, the result was that the thermal storage material microcapsules were slightly poor in thermal history durability.

### (Example 91)

80 Parts of dodecyl laurate having a purity of 76 %, an acid value of 7.6 and a hydroxyl value of 4.5 and 20 parts of decyl laurate having a purity of 77 %, an acid value of 7.3 and a hydroxyl value of 4.7 were homogeneously mixed to prepare a mixture n as a thermal storage material. The difference between the melting temperature and the coagulation temperature of this mixture before micro-encapsulation was 0.2°C.

Encapsulation was carried out in the same manner as in Example 57 except that the mixture B was replaced with the mixture n to give a dispersion of thermal storage material microcapsules which dispersion had a slightly increased viscosity and a little poor dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules. When the thermal storage material had a purity close to the lower limit of the preferred range thereof in the present invention and an acid value close to the upper limit of the preferred range in the present invention, the result was that the thermal storage material microcapsules were slightly poor in thermal history durability.

### (Example 92)

80 Parts of dodecyl laurate having a purity of 87 %, an acid value of 7.6 and a hydroxyl value of 19 and 20 parts of decyl laurate having a purity of 86 %, an acid value of 7.3 and a hydroxyl value of 18 were homogeneously mixed to prepare a mixture p as a thermal storage material. The difference between the melting temperature and the coagulation temperature of this mixture before micro-encapsulation was 0.2°C.

Encapsulation was carried out in the same manner as in Example 57 except that the mixture B was replaced with the mixture p to give a dispersion of thermal storage material microcapsules which dispersion had a slightly increased viscosity and a little poor dispersion stability. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules. When both the acid value and the hydroxyl value of the thermal storage material were close to the upper limits of the preferred ranges thereof in the present invention, the result was that the thermal storage material microcapsules were slightly poor in thermal history durability.

### (Example 93)

Encapsulation was carried out in the same manner as in Example 56 except that the mixture A was replaced with the same dodecyl myristate as that used in Example 56 (the difference between the melting temperature and the coagulation temperature before micro-encapsulation was 2.7°C), to give a dispersion of thermal storage material microcapsules. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 94)

Encapsulation was carried out in the same manner as in Example 57 except that the mixture B was replaced with the same dodecyl laurate as that used in Example 57 (the difference between the melting temperature and the coagulation temperature before micro-encapsulation was 3.9°C), to give a dispersion of thermal storage material microcapsules. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 95)

Encapsulation was carried out in the same manner as in Example 57 except that the mixture B was replaced with the same decyl laurate as that used in Example 57 (the difference between the melting temperature and the coagulation temperature before micro-encapsulation was 2.9°C), to give a dispersion of thermal storage material microcapsules. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Example 96)

50 Parts of the same dodecyl myristate as that used in Example 67 [total number of carbon atoms = 26] and 50 parts of the same decyl decanoate as that used in Example 69 [total number of carbon atoms = 20] were homogeneously mixed to prepare a mixture q. The difference between the melting temperature and the coagulation temperature of this mixture before micro-encapsulation was 0.4°C. The thermal storage material had an acid value of 8 or less.

Encapsulation was carried out in the same manner as in Example 57 except that the mixture B was replaced with the mixture q, to give a dispersion of thermal storage material microcapsules. Table 3 shows the volume average particle diameter of the thus-obtained thermal storage material microcapsules, the melting temperature, coagulation temperature and difference between the melting temperature and the coagulation temperature of the thermal storage material, an amount of heat for melting per thermal storage material microcapsule solid and the thermal history durability of the thermal storage material microcapsules.

### (Comparative Example 4)

50 Parts of n-octadecane [total number of carbon atoms = 18] and 50 parts of n-hexadecane [total number of carbon atoms = 16] as aliphatic hydrocarbon compounds were homogeneously mixed to prepare a mixture r. The difference between the melting temperature and the coagulation temperature of this mixture before micro-encapsulation was 1.8°C.

Encapsulation was carried out in the same manner as in Example 57 except that the mixture B was replaced with the mixture r, to give a dispersion of thermal storage material microcapsules. When the thus-obtained thermal storage material microcapsules were evaluated for melting/coagulation behaviors, the thermal storage material had a melting temperature of 14.3°C while its melting peak was very broad, and it had a coagulation temperature of 11.2°C while its coagulation peak was also very broad. The difference between the melting temperature and the coagulation temperature of the thermal storage material was 3.1°C. Further, the amount of heat for melting per a thermal storage material microcapsule solid was as low as 119 J/g. The thermal history durability of the thermal storage material microcapsules was 98 %.

### (Comparative Example 5)

50 Parts of n-octadecane [total number of carbon atoms = 18] and 50 parts of n-tetradecane [total number of carbon atoms = 14] as aliphatic hydrocarbon compounds were homogeneously mixed to prepare a mixture s. The difference between the melting temperature and the coagulation temperature of this mixture before micro-encapsulation was 2.5°C.

Encapsulation was carried out in the same manner as in Example 57 except that the mixture B was replaced with the mixture s, to give a dispersion of thermal storage material microcapsules. When the thus-obtained thermal storage material microcapsules were evaluated for melting/coagulation behaviors, the melting peak thereof was divided into two peaks at 4°C and 27°C, and the coagulation peak thereof was also divided into two broad peaks. They failed to have performances that the melting (thermal storage) and coagulation (heat release) took place in a specific temperature region alone. The thermal history durability of the obtained thermal storage material microcapsules was 98 %.

### (Comparative Example 6)

50 Parts of n-octadecane [total number of carbon atoms = 18] and 50 parts of n-dodecane [total number of carbon atoms = 12] as aliphatic hydrocarbon compounds were homogeneously mixed to prepare a mixture t. The difference between the melting temperature and the coagulation temperature of this mixture before micro-encapsulation was 1.3°C.

Encapsulation was carried out in the same manner as in Example 57 except that the mixture B was replaced with the mixture t, to give a dispersion of thermal storage material microcapsules. When the thus-obtained thermal storage material microcapsules were evaluated for melting/coagulation behaviors, the melting peak thereof was divided into two peaks at -10°C and 28°C, and the coagulation peak thereof was also divided into two broad peaks. They failed to have performances that the melting (thermal storage) and coagulation (heat release) took place in a specific temperature region alone. The thermal history durability of the obtained thermal storage material microcapsules was 98 %.

### (Example 97)

The dispersion of thermal storage material microcapsules obtained in Example 56 was spray-dried with a spray dryer to give a powder of thermal storage material microcapsules having an average particle diameter of 80 µm and a water content of 2 %. The thus-obtained thermal storage material microcapsule powder had excellent flowability and emitted no sensible odor.

### (Example 98)

The dispersion of thermal storage material microcapsules obtained in Example 57 was spray-dried with a spray dryer to give a powder of thermal storage material microcapsules having an average particle diameter of 100 µm and a water content of 3 %. The thus-obtained thermal storage material microcapsule powder had excellent flowability and emitted no sensible odor.

### (Example 99)

The dispersion of thermal storage material microcapsules obtained in Example 57 was spray-dried with a spray dryer to give a powder of thermal storage material microcapsules having an average particle diameter of 120 µm. The thus-obtained thermal storage material microcapsule powder had excellent flowability and emitted no sensible odor. Further, 30 parts of a 30 % polyvinyl alcohol aqueous solution and a proper amount of water as binders were added to 100 parts of the thus-obtained thermal storage material microcapsule powder, and then the mixture was extrusion-granulated with an extrusion type granulator and the extrusion product was dried at 100°C to give a granulated product of the thermal storage material microcapsules, which product each had a columnar form having a minor diameter of 1 mm and a major diameter of 3 mm. In the thus-obtained thermal storage material microcapsule granulated product, no bleeding of the thermal storage material was found, and no odor was sensed.

### (Example 100)

The dispersion of thermal storage material microcapsules obtained in Example 57 was spray-dried with a spray dryer to give a powder of thermal storage material microcapsules having an average particle diameter of 120 µm. The thus-obtained thermal storage material microcapsule powder had excellent flowability and emitted no sensible odor. Further, 30 parts of a 30 % polyvinyl alcohol aqueous solution and a proper amount of water as binders were added to 100 parts of the thus-obtained thermal storage material microcapsule powder, and then the mixture was extrusion-granulated with an extrusion type granulator and the extrusion product was dried at 100°C to give a granulated product of the thermal storage material microcapsules, which product each had a columnar form having a minor diameter of 2 mm and a major diameter of 4 mm. In the thus-obtained thermal storage material microcapsule granulated product, no bleeding of the thermal storage material was found, and no odor was sensed.

### Table 3

**Table 3**

| Example | Particle diameter | Melting temperature | Coagulation temperature | Difference between Co. temp. | Heat amount for melting | Thermal history durability |
|---|---|---|---|---|---|---|
| | (*µ*m) | (°C) | (°C) | (°C) | (J/g) | (%) |
| 56 | 12.3 | 28.4 | 24.8 | 3.6 | 167 | 93 |
| 57 | 2.1 | 21.4 | 19.1 | 2.3 | 159 | 98 |
| 58 | 2.1 | 27.4 | 21.8 | 5.6 | 169 | 98 |
| 59 | 2.1 | 27.2 | 22.3 | 4.9 | 167 | 98 |
| 60 | 2.1 | 24.8 | 21.0 | 3.8 | 167 | 98 |
| 61 | 2.1 | 23.1 | 20.2 | 2.9 | 165 | 98 |
| 62 | 2.1 | 18.1 | 15.6 | 2.5 | 152 | 98 |
| 63 | 2.1 | 17.8 | 14.0 | 3.8 | 156 | 98 |
| 64 | 2.1 | 18.2 | 13.9 | 4.3 | 157 | 98 |
| 65 | 2.1 | 18.7 | 13.8 | 4.9 | 159 | 98 |
| 66 | 2.1 | 19.1 | 13.3 | 5.8 | 160 | 98 |
| 67 | 2.1 | 16.5 | 14.4 | 2.1 | 144 | 98 |
| 68 | 5.2 | 35.0 | 33.4 | 1.6 | 172 | 95 |
| 69 | 3.2 | 15.6 | 11.5 | 4.1 | 154 | 94 |
| 70 | 4.2 | 17.8 | 14.2 | 3.6 | 150 | 95 |
| 71 | 5.3 | 26.9 | 23.5 | 3.4 | 166 | 92 |
| 72 | 2.1 | 36.4 | 34.4 | 2.0 | 170 | 98 |
| 73 | 2.1 | 35.1 | 32.9 | 2.2 | 169 | 98 |
| 74 | 2.1 | 35.5 | 33.2 | 2.3 | 165 | 98 |
| 75 | 2.1 | 34.3 | 32.3 | 2.0 | 162 | 97 |
| 76 | 2.1 | 34.1 | 32.3 | 1.8 | 152 | 97 |
| 77 | 2.1 | 35.2 | 33.8 | 1.4 | 141 | 97 |
| 78 | 2.1 | 35.8 | 34.5 | 1.3 | 136 | 97 |
| 79 | 2.1 | 21.7 | 19.7 | 2.0 | 153 | 97 |
| 80 | 2.1 | 21.5 | 19.7 | 1.8 | 150 | 94 |
| 81 | 2.1 | 21.3 | 19.6 | 1.7 | 147 | 90 |
| 82 | 2.1 | 21.2 | 19.6 | 1.6 | 139 | 87 |
| 83 | 2.1 | 21.6 | 20.0 | 1.6 | 151 | 91 |
| 84 | 2.1 | 21.4 | 20.1 | 1.3 | 148 | 85 |
| 85 | 2.1 | 21.2 | 20.0 | 1.2 | 143 | 77 |
| 86 | 2.1 | 21.5 | 19.8 | 1.7 | 150 | 93 |
| 87 | 2.1 | 21.4 | 20.0 | 1.4 | 146 | 87 |
| 88 | 2.1 | 21.3 | 19.9 | 1.4 | 142 | 79 |
| 89 | 2.1 | 21.4 | 20.1 | 1.3 | 148 | 84 |
| 90 | 2.1 | 21.3 | 20.2 | 1.1 | 147 | 80 |
| 91 | 2.1 | 21.5 | 20.5 | 1.0 | 146 | 79 |
| 92 | 2.1 | 21.3 | 20.3 | 1.0 | 147 | 78 |
| 93 | 12.3 | 36.7 | 28.5 | 8.2 | 172 | 93 |
| 94 | 2.1 | 27.9 | 21.1 | 6.8 | 179 | 98 |
| 95 | 2.1 | 19.6 | 12.1 | 7.5 | 163 | 98 |
| 96 | 2.1 | 4.0 | 1.6 | 2.4 | 127 | 98 |
| Comparative Example 4 | 2.1 | 14.3 broad | 11.2 broad | 3.1 | 119 | 98 |
| Comparative Example 5 | 2.1 | 2 peaks 2 peaks (4°C and 27°C) | 2 peaks | Not identifiable | Not identifable | 98 |
| comparative Example 6 | 2·1 | 2 peaks (-10° C and 28°C) | 2 peaks | Not identifiable | Not identifiable | 98 |

### (Example 101)

A mixture of 100 parts of dodecyl myristate [a compound of the general formula (I) in which R¹ is tridecyl having 13 carbon atoms and R² is dodecyl having 12 carbon atoms] having a purity of 91 %, an acid value of 0.5 and a hydroxyl value of 3.7 as a thermal storage material with 1 part of eicosanoic acid [a compound of the general formula (IV) in which R⁶ is nonadecyl having 19 carbon atoms] as a temperature control agent was added, with vigorously stirring, to 125 parts of a 5 % styrene-maleic anhydride copolymer sodium salt aqueous solution having a pH adjusted to 4.5, followed by emulsification until an average particle diameter of 3.2 µm was attained. Then, 10 parts of melamine, 14 parts of a 37 % formaldehyde aqueous solution and 25 parts of water were mixed, the mixture was adjusted to a pH of 8 and a melamine-formalin initial condensate aqueous solution was prepared at approximately 80°C. The entire amount of this aqueous solution was added to the above emulsion, the mixture was stirred under heat at 70°C for 2 hours to carry out an encapsulation reaction, and then this dispersion was adjusted to a pH of 9 to complete the encapsulation. There was obtained a dispersion of thermal storage material microcapsules having melamine-formalin resin coatings formed by an in-situ polymerization method, which dispersion had a low viscosity and excellent dispersion stability. The thus-obtained thermal storage material microcapsules had a volume average particle diameter of 3.4 µm. This thermal storage material had a melting temperature of 36.5°C and a coagulation temperature of 34.2°C, and in the thermal storage material, the difference between the melting temperature and the coagulation temperature at an initial stage was 2.3°C, and the change ratio of temperature difference was 2 %. The thermal history durability of the thermal storage material microcapsules was 96 %.

### (Example 102)

Encapsulation was carried out in the same manner as in Example 101 except that the temperature control agent in Example 101 was replaced with 1 part of docosanoic acid [a compound of the general formula (IV) in which R⁶ is heneicosyl having 21 carbon atoms]. There was obtained a dispersion of thermal storage material microcapsules which dispersion had a low viscosity and excellent dispersion stability. Table 4 shows the volume average particle diameter of the thus-obtained thermal storage material microcapsules, the melting temperature, coagulation temperature, difference between the melting temperature and the coagulation temperature and change ratio of temperature difference of the thermal storage material, and the thermal history durability of the thermal storage material microcapsules.

### (Example 103)

Encapsulation was carried out in the same manner as in Example 101 except that the temperature control agent in Example 101 was replaced with 1 part of stearic acid [a compound of the general formula (IV) in which R⁶ is heptadecyl having 17 carbon atoms]. There was obtained a dispersion of thermal storage material microcapsules which dispersion had a low viscosity and excellent dispersion stability. Table 4 shows the volume average particle diameter of the thus-obtained thermal storage material microcapsules, the melting temperature, coagulation temperature, difference between the melting temperature and the coagulation temperature and change ratio of temperature difference of the thermal storage material, and the thermal history durability of the thermal storage material microcapsules.

### (Example 104)

Encapsulation was carried out in the same manner as in Example 101 except that the temperature control agent in Example 101 was replaced with 1 part of palmitic acid [a compound of the general formula (IV) in which R⁶ is pentadecyl having 15 carbon atoms]. There was obtained a dispersion of thermal storage material microcapsules which dispersion had a low viscosity and excellent dispersion stability. Table 4 shows the volume average particle diameter of the thus-obtained thermal storage material microcapsules, the melting temperature, coagulation temperature, difference between the melting temperature and the coagulation temperature and change ratio of temperature difference of the thermal storage material, and the thermal history durability of the thermal storage material microcapsules.

### (Example 105)

Encapsulation was carried out in the same manner as in Example 101 except that the amount of eicosanoic acid as a temperature control agent in Example 101 was changed to 0.02 part. There was obtained a dispersion of thermal storage material microcapsules which dispersion had a low viscosity and excellent dispersion stability. The resultant thermal storage material had a melting temperature of 36.7°C and a coagulation temperature of 30.5°C, and in the thermal storage material, the difference between the melting temperature and the coagulation temperature at an initial stage was 6.2°C, and the change ratio of temperature difference was 7 %. The thermal history durability of the thermal storage material microcapsules was 96 %. As described above, when the amount of eicosanoic acid as a temperature control agent is smaller than the preferred range thereof in the present invention, a decrease in the difference between the melting temperature and the coagulation temperature at an initial stage is insufficient and the temperature difference between the melting temperature and the coagulation temperature tends to change with time. The result was that the thermal storage material microcapsules were poor in stability against repeated use.

### (Examples 106 - 111)

Encapsulation was carried out in the same manner as in Example 101 except that the amount of eicosanoic acid as a temperature control agent in Example 101 was changed to 0.05 part, 0.1 part, 0.2 part, 1.5 parts, 2 parts or 3 parts, to give thermal storage material microcapsules of each of Examples 106 to 111. The thus-obtained dispersions of thermal storage material microcapsules had a low viscosity and had dispersion stability. Table 4 shows the volume average particle diameters of the thus-obtained thermal storage material microcapsules, the melting temperatures, coagulation temperatures, differences between the melting temperature and the coagulation temperature and change ratios of temperature difference of the thermal storage materials, and the thermal history durability of the thermal storage material microcapsules.

### (Example 112)

Encapsulation was carried out in the same manner as in Example 101 except that the amount of eicosanoic acid as a temperature control agent was changed to 5 parts, to give a dispersion of thermal storage material microcapsules which dispersion had a slightly increased viscosity and a little poor dispersion stability. The thus-obtained thermal storage material had a melting temperature of 36.4°C and a coagulation temperature of 34.5°C. The difference between the melting temperature and the coagulation temperature at an initial stage was 1.9°C and the change ratio of temperature difference was 2 %. Further, the thermal history durability of the thermal storage material microcapsules was 76 %. As described above, when the amount of the eicosanoic acid as a temperature control agent is larger than the preferred range thereof in the present invention, the dispersion of the thermal storage material microcapsules has a slightly increased viscosity and has a little poor dispersion stability, and the result was that the thermal storage material microcapsules was a little poor in thermal history durability.

### (Example 113)

A mixture of 100 parts of dodecyl laurate [a compound of the.general formula (I) in which R¹ is undecyl having 11 carbon atoms and R² is dodecyl having 12 carbon atoms] having a purity of 90 %, an acid value of 1.8 and a hydroxyl value of 1.5 with 0.5 parts of a palmityl alcohol [a compound of the general formula (V) in which R⁷ is hexadecyl having 16 carbon atoms] as a thermal storage material was added, with vigorously stirring, to 125 parts of a 5 % styrene-maleic anhydride copolymer sodium salt aqueous solution having a pH adjusted to 4.5, followed by emulsification until an average particle diameter of 4.5 µm was attained. Then, 10 parts of melamine, 14 parts of a 37 % formaldehyde aqueous solution and 25 parts of water were mixed, the mixture was adjusted to a pH of 8, and a melamine-formalin initial condensate aqueous solution was prepared at approximately 80°C. The entire amount of this aqueous solution was added to the above emulsion and the mixture was stirred under heat at 70°C for 2 hours to carry out an encapsulation reaction, and this dispersion was adjusted to a pH of 9 to complete the encapsulation. There was obtained a dispersion of thermal storage material microcapsules having melamine-formalin resin coatings formed according to an in-situ polymerization method, which dispersion had a low viscosity and excellent dispersion stability. The thus-obtained thermal storage material microcapsules had a volume average particle diameter of 4.8 µm. The thermal storage material had a melting temperature of 27.8°C and a coagulation temperature of 25.0°C, the difference between the melting temperature and the coagulation temperature at an initial stage was 2.8°C and the change ratio of temperature difference was 3 %. The thermal history durability of the thermal storage material microcapsules was 95 %.

### (Example 114)

Encapsulation was carried out in the same manner as in Example 113 except that the temperature control agent in Example 113 was changed to 0.5 part of eicosyl alcohol (a compound of the general formula (V) in which R⁷ is eicosyl having 20 carbon atoms], to give a dispersion of thermal storage material microcapsules which dispersion had a low viscosity and excellent dispersion stability. Table 4 shows the volume average particle diameter of the thus-obtained thermal storage material microcapsules, the melting temperature, coagulation temperature, difference between the melting temperature and the coagulation temperature and change ratio of temperature difference of the thermal storage material, and the thermal history durability of the thermal storage material microcapsules.

### (Example 115)

Encapsulation was carried out in the same manner as in Example 113 except that the temperature control agent in Example 113 was changed to 0.5 part of stearyl alcohol (a compound of the general formula (V) in which R⁷ is octadecyl having 18 carbon atoms], to give a dispersion of thermal storage material microcapsules which dispersion had a low viscosity and excellent dispersion stability. Table 4 shows the volume average particle diameter of the thus-obtained thermal storage material microcapsules, the melting temperature, coagulation temperature, difference between the melting temperature and the coagulation temperature and change ratio of temperature difference of the thermal storage material, and the thermal history durability of the thermal storage material microcapsules.

### (Example 116)

Encapsulation was carried out in the same manner as in Example 113 except that the temperature control agent in Example 113 was changed to 0.5 part of myristyl alcohol (a compound of the general formula (V) in which R⁷ is tetradecyl having 14 carbon atoms], to give a dispersion of thermal storage material microcapsules which dispersion had a low viscosity and excellent dispersion stability. Table 4 shows the volume average particle diameter of the thus-obtained thermal storage material microcapsules, the melting temperature, coagulation temperature, difference between the melting temperature and the coagulation temperature and change ratio of temperature difference of the thermal storage material, and the thermal history durability of the thermal storage material microcapsules.

### (Example 117)

Encapsulation was carried out in the same manner as in Example 113 except that the amount of palmityl alcohol as a temperature control agent in Example 113 was changed to 0.02 part, to give a dispersion of thermal storage material microcapsules which dispersion had a low viscosity and excellent dispersion stability. The thermal storage material had a melting temperature of 27.8°C and a coagulation temperature of 21.8°C, and the difference between the melting temperature and the coagulation temperature at an initial stage was 6.0°C. The change ratio of temperature was 7 % and the thermal history durability of the thermal storage material microcapsules was 95 %. As described above, when the amount of the palmityl alcohol as a temperature control agent was smaller than the preferred range thereof in the present invention, a decrease in the difference between the melting temperature and the coagulation temperature at an initial stage is insufficient and the temperature difference between the melting temperature and the coagulation temperature tends to change with time. The result was that the thermal storage material microcapsules were a little poor in stability against repeated use.

### (Examples 118 - 123)

Encapsulation was carried out in the same manner as in Example 113 except that the amount of palmityl alcohol as a temperature control agent in Example 113 was changed to 0.05 part, 0.1 part, 0.2 part, 1.5 parts, 2 parts or 3 parts, to give thermal storage material microcapsules of each of Examples 118 to 123. The thus-obtained dispersions of thermal storage material microcapsules had a low viscosity and had dispersion stability. Table 4 shows the volume average particle diameters of the thus-obtained thermal storage material microcapsules, the melting temperatures, coagulation temperatures, differences between the melting temperature and the coagulation temperature and change ratios of temperature difference of the thermal storage materials, and the thermal history durability of the thermal storage material microcapsules.

### (Example 124)

Encapsulation was carried out in the same manner as in Example 113 except that the amount of palmityl alcohol as a temperature control agent in Example 113 was changed to 5 parts, to give a dispersion of thermal storage material microcapsules which dispersion had a slightly increased viscosity and had a little poor dispersion stability. The thermal storage material had a melting temperature of 27.4°C and a coagulation temperature of 25.6°C, and the difference between the melting temperature and the coagulation temperature at an initial stage was 1.8°C, and the change ratio of temperature difference was 3 %. The thermal history durability of the thermal storage material microcapsules was 87 %. When the amount of palmityl alcohol as a temperature control agent is larger than the preferred range thereof in the present invention as described above, the result was that the dispersion of thermal storage material microcapsules had a slightly increased viscosity and had a little poor dispersion stability.

### (Example 125)

Encapsulation was carried out in the same manner as in Example 116 except that the dodecyl laurate as a thermal storage material in Example 113 was replaced with 100 parts of diheptadecyl ketone [a compound of the general formula (I) in which each of R¹ and R² is heptadecyl having 17 carbon atoms] and that the palmityl alcohol as a temperature control agent was replaced with 1 part of docosanoic acid [a compound of the general formula (IV) in which R⁶ is heneicosyl having 21 carbon atoms]. There was obtained a dispersion of thermal storage material microcapsules which dispersion had a low viscosity and excellent dispersion stability. The thermal storage material had a melting temperature of 79.5°C and a coagulation temperature of 76.3°C, and the difference between the melting temperature and the coagulation temperature at an initial stage was 3.2°C, and the change ratio of temperature difference was 4 %. The thermal history durability of the thermal storage material microcapsules was 82 %.

### (Example 126)

Encapsulation was carried out in the same manner as in Example 113 except that the dodecyl laurate as a thermal storage material in Example 113 was replaced with 100 parts of pentaerythritol tetrastearate [a compound of the general formula (II) in which each of four R⁴'s is octadecyl having 18 carbon atoms] and that the palmityl alcohol as a temperature control agent was replaced with 1 part of docosyl alcohol [a compound of the general formula (V) in which R⁷ is docosyl having 22 carbon atoms]. There was obtained a dispersion of thermal storage material microcapsules which dispersion had a low viscosity and excellent dispersion stability. Table 4 shows the volume average particle diameter of the thus-obtained thermal storage material microcapsules, the melting temperature, coagulation temperature, difference between the melting temperature and the coagulation temperature and change ratio of temperature difference of the thermal storage material, and the thermal history durability of the thermal storage material microcapsules.

### (Example 127)

Encapsulation was carried out in the same manner as in Example 113 except that the dodecyl laurate as a thermal storage material in Example 113 was replaced with 100 parts of trioctadecylamine [a compound of the general formula (III) in which each of three R⁵'s is octadecyl having 18 carbon atoms] and that the palmityl alcohol as a temperature control agent was replaced with 1 part of docosyl alcohol [a compound of the general formula (V) in which R⁷ is docosyl having 22 carbon atoms]. There was obtained a dispersion of thermal storage material microcapsules which dispersion had a low viscosity and excellent dispersion stability. Table 4 shows the volume average particle diameter of the thus-obtained thermal storage material microcapsules, the melting temperature, coagulation temperature, difference between the melting temperature and the coagulation temperature and change ratio of temperature difference of the thermal storage material, and the thermal history durability of the thermal storage material microcapsules.

### (Example 128)

A mixture of 100 parts of hexadecyl palmitate [a compound of the general formula (I) in which R¹ is pentadecyl having 15 carbon atoms and R² is hexadecyl having 16 carbon atoms] having a purity of 93 %, an acid value of 1.2 and a hydroxyl value of 2.3 as a thermal storage material with 1 part of docosyl alcohol [a compound of the general formula (V) in which R⁷ is docosyl having 22 carbon atoms] as a temperature control agent was added, with vigorously stirring, to 125 parts of a 5 % ethylene-maleic anhydride copolymer sodium salt aqueous solution containing 7.5 parts of urea and 0.6 part of resorcin and having a pH adjusted to 3.0, followed by emulsification until an average particle diameter of 5 µm was attained. Then, 19 parts of a 37 % formaldehyde aqueous solution and 25 parts of water were added to this emulsion, and the mixture was stirred under heat at 60°C for 2 hours to carry out an encapsulation reaction. Then, this dispersion was adjusted to a pH of 9 to complete the encapsulation. There was obtained a dispersion of thermal storage material microcapsules having urea-formalin resin coatings formed by an in-situ polymerization method, which dispersion had a low viscosity and excellent dispersion stability. The thus-obtained thermal storage material microcapsules had a volume average particle diameter of 5.2 µm. The thermal storage material had a melting temperature of 51.3°C and a coagulation temperature of 98.73°C, and the difference between the melting temperature and the coagulation temperature at an initial stage was 2.6°C. The change ratio of temperature difference was 2 %, and the thermal history durability of the thermal storage material microcapsules was 93 %.

### (Example 129)

0.5 Part of stearic acid [a compound of the general formula (IV) in which R⁶ is heptadecyl having 17 carbon atoms] as a temperature control agent was added to 100 parts of decyl laurate [a compound of the general formula (I) in which R¹ is undecyl having 11 carbon atoms and R² is decyl having 10 carbon atoms] having a purity of 91 %, an acid value of 0.6 and a hydroxyl value of 2.9 as a thermal storage material, and 11 parts of polymeric diphenyl methane diisocyanate (aromatic isocyanate, trade name; 44V20, supplied by Sumika Bayer Urethane Co., Ltd.) as a polyvalent isocyanate was dissolved therein. The resultant solution was added to 125 parts of a 5 % polyvinyl alcohol (trade name; POVAL 117, supplied by Kuraray Co., Ltd.) aqueous solution, and the mixture was emulsified with stirring at room temperature until a volume average particle diameter of 3 µm was attained. Then, 69 parts of a 3 % diethylenetriamine aqueous solution was added to this emulsion, and then the mixture was heated and stirred at 60°C for 1 hour. There was obtained a dispersion of thermal storage material microcapsules having polyurea coatings formed by an interfacial polymerization method, which dispersion had a low viscosity and excellent dispersion stability. The thus-obtained thermal storage material microcapsules had a volume average particle diameter of 3.2 µm. The thermal storage material had a melting temperature of 19.7°C and a coagulation temperature of 15.5°C, and the difference between the melting temperature and the coagulation temperature at an initial stage was 4.2°C. The change ratio of temperature difference was 3 %, and the thermal history durability of the thermal storage material microcapsules was 93 %.

### (Example 130)

1 Part of palmitic acid [a compound of the general formula (IV) in which R⁶ is pentadecyl having 15 carbon atoms] as a temperature control agent was added to 100 parts of decyl decanoate [a compound of the general formula (I) in which R¹ is nonyl having 9 carbon atoms and R² is decyl having 10 carbon atoms] having a purity of 90 %, an acid value of 0.7 and a hydroxyl value of 2.6 as a thermal storage material, and 16 parts of dicyclohexaylmethane-4,4-diisocyanate (aliphatic isocyanate, trade name; Desmodur W, supplied by Sumika Bayer Urethane Co., Ltd.) as a polyvalent isocyanate was dissolved therein. The resultant solution was added to 125 parts of a 5 % polyvinyl alcohol (trade name; POVAL 117, supplied by Kuraray Co., Ltd.) aqueous solution, and the mixture was emulsified with stirring at room temperature until a volume average particle diameter of 4 µm was attained. Then, 69 parts of a 3 % polyether aqueous solution (trade name; Adeka Polyether EDP-450, a polyether supplied by Asahi Denka Kogyo K.K.) was added to this emulsion, and the mixture was heated and stirred at 60°C. There was obtained a dispersion of thermal storage material microcapsules having polyurethane urea coatings formed by an interfacial polymerization method, which dispersion had a low viscosity and excellent dispersion stability. The thus-obtained thermal storage material microcapsules had a volume average particle diameter of 4.2 µm. The thermal storage material had a melting temperature of 8.4°C and a coagulation temperature of 5.0°C, and the difference between the melting temperature and the coagulation temperature at an initial stage was 3.4°C. The change ratio of temperature difference was 3 %, and the thermal history durability of the thermal storage material microcapsules was 92 %.

### (Example 131)

0.5 Part of eicosyl alcohol [a compound of the general formula (V) in which R⁷ is eicosyl having 20 carbon atoms] as a temperature control agent was added to 100 parts of dodecyl myristate [a compound of the general formula (I) in which R¹ is tridecyl having 13 carbon atoms and R² is dodecyl having 12 carbon atoms] having a purity of 91 %, an acid value of 0.5 and a hydroxyl value of 3.7 as a thermal storage material, and further, 11.9 parts of methyl methacrylate and 0.6 part of ethylene glycol dimethacrylate as monomers were dissolved therein. The resultant solution was placed in 375 parts of a 1 % polyvinyl alcohol aqueous solution at 75°C, and the mixture was vigorously stirred to emulsify it. In a polymerizer with the above emulsion in it, a nitrogen atmosphere was provided while the temperature inside it was maintained at 75°C, and then a solution of 0.5 part of 2,2'-azobis(2-[1-(2-hydroxyethyl)-2-imidazolin-2-yl]propane}dihydrochloride in 19 parts of deionized water was added. Polymerization was completed after 7 hours, and the inside of the polymerizer was cooled to room temperature to complete encapsulation. There was obtained a dispersion of thermal storage material microcapsules having polymethyl methacrylate coatings formed by a radical polymerization method, which dispersion had a low viscosity and excellent dispersion stability. The thus-obtained thermal storage material microcapsules had a volume average particle diameter of 5.3 µm. The thermal storage material had a melting temperature of 35.8°C and a coagulation temperature of 32.5°C, and the difference between the melting temperature and the coagulation temperature at an initial stage was 3.3°C. The change ratio of temperature difference was 3 %, and the thermal history durability of the thermal storage material microcapsules was 91 %.

### (Example 132)

Encapsulation was carried out in the same manner as in Example 101 except that the thermal storage material in Example 101 was replaced with 100 parts of decyl laurate [a compound of the general formula (I) in which R¹ is undecyl having 11 carbon atoms and R² is decyl having 10 carbon atoms] having a purity of 88 %, an acid value of 2.5 and a hydroxyl value of 4.4 and that the amount of eicosanoic acid as a temperature control agent was changed to 0.5 part. There was obtained a dispersion of thermal storage material microcapsules which dispersion had a low viscosity and excellent dispersion stability. Table 4 shows the volume average particle diameter of the thus-obtained thermal storage material microcapsules, the melting temperature, coagulation temperature, difference between the melting temperature and the coagulation temperature and change ratio of temperature difference of the thermal storage material, and the thermal history durability of the thermal storage material microcapsules.

### (Example 133)

Encapsulation was carried out in the same manner as in Example 132 except that the thermal storage material in Example 132 was replaced with decyl laurate having a purity of 82 %, an acid value of 2.5 and a hydroxyl value of 4.4, to give a dispersion of thermal storage material microcapsules which dispersion had a low viscosity and excellent dispersion stability. Table 4 shows the volume average particle diameter of the thus-obtained thermal storage material microcapsules, the melting temperature, coagulation temperature, difference between the melting temperature and the coagulation temperature and change ratio of temperature difference of the thermal storage material, and the thermal history durability of the thermal storage material microcapsules.

### (Example 134)

Encapsulation was carried out in the same manner as in Example 132 except that the thermal storage material in Example 132 was replaced with decyl laurate having a purity of 77 %, an acid value of 2.5 and a hydroxyl value of 4.4, to give a dispersion of thermal storage material microcapsules which dispersion had a low viscosity and excellent dispersion stability. Table 4 shows the volume average particle diameter of the thus-obtained thermal storage material microcapsules, the melting temperature, coagulation temperature, difference between the melting temperature and the coagulation temperature and change ratio of temperature difference of the thermal storage material, and the thermal history durability of the thermal storage material microcapsules.

### (Example 135)

Encapsulation was carried out in the same manner as in Example 132 except that the thermal storage material in Example 132 was replaced with decyl laurate having a purity of 71 %, an acid value of 2.5 and a hydroxyl value of 4.4, to give a dispersion of thermal storage material microcapsules which dispersion had a low viscosity and excellent dispersion stability. The thermal storage material had a melting temperature of 19.5°C and a coagulation temperature of 17.4°C, and the difference between the melting temperature and the coagulation temperature at an initial stage was 2.1°C. The change ratio of temperature difference was 5 % and the thermal history durability of the thermal storage material microcapsules was 87 %. The heat amount for melting per a thermal storage material microcapsule solid was 138 J/g, and the result was that the heat amount was a little lower than the heat amount for melting (152 J/g) in Example 132.

### (Example 136)

Encapsulation was carried out in the same manner as in Example 132 except that the thermal storage material in Example 132 was replaced with decyl laurate having a purity of 88 %, an acid value of 4.3 and a hydroxyl value of 4.4, to give a dispersion of thermal storage material microcapsules which dispersion had a low viscosity and excellent dispersion stability. The thermal storage material had a melting temperature of 19.7°C and a coagulation temperature of 17.7°C, and the difference between the melting temperature and the coagulation temperature at an initial stage was 2.0°C. The change ratio of temperature difference was 3 % and the thermal history durability of the thermal storage material microcapsules was 89 %.

### (Example 137)

Encapsulation was carried out in the same manner as in Example 132 except that the thermal storage material in Example 132 was replaced with decyl laurate having a purity of 88 %, an acid value of 7.5 and a hydroxyl value of 4.4, to give a dispersion of thermal storage material microcapsules which dispersion had a slightly increased viscosity and had a little poor dispersion stability. The thermal storage material had a melting temperature of 19.4°C and a coagulation temperature of 17.5°C, and the difference between the melting temperature and the coagulation temperature at an initial stage was 1.9°C. The change ratio of temperature difference was 3 % and the thermal history durability of the thermal storage material microcapsules was 83 %. When the acid value of the thermal storage material was close to the upper limit of the preferred range thereof in the present invention as described above, the result was that the thermal storage material microcapsules were a little poor in thermal history durability.

### (Example 138)

Encapsulation was carried out in the same manner as in Example 132 except that the thermal storage material in Example 132 was replaced with decyl laurate having a purity of 88 %, an acid value of 10 and a hydroxyl value of 4.4, to give a dispersion of thermal storage material microcapsules which dispersion had a slightly increased viscosity and had a little poor dispersion stability. The thermal storage material had a melting temperature of 19.1°C and a coagulation temperature of 17.2°C, and the difference between the melting temperature and the coagulation temperature at an initial stage was 1.9°C. The change ratio of temperature difference was 4 % and the thermal history durability of the thermal storage material microcapsules was 75 %. When the acid value of the thermal storage material was higher than the upper limit of the preferred range thereof in the present invention as described above, the result was that the thermal storage material microcapsules were slightly poor in thermal history durability.

### (Example 139)

Encapsulation was carried out in the same manner as in Example 132 except that the thermal storage material in Example 132 was replaced with decyl laurate having a purity of 88 %, an acid value of 2.5 and a hydroxyl value of 7.5, to give a dispersion of thermal storage material microcapsules which dispersion had a low viscosity and had excellent dispersion stability. The thermal storage material had a melting temperature of 19.6°C and a coagulation temperature of 17.3°C, and the difference between the melting temperature and the coagulation temperature at an initial stage was 2.3°C. The change ratio of temperature difference was 3 % and the thermal history durability of the thermal storage material microcapsules was 91 %.

### (Example 140)

Encapsulation was carried out in the same manner as in Example 132 except that the thermal storage material in Example 132 was replaced with decyl laurate having a purity of 88 %, an acid value of 2.5 and a hydroxyl value of 18, to give a dispersion of thermal storage material microcapsules which dispersion had a slightly increased viscosity and had a little poor dispersion stability. The thermal storage material had a melting temperature of 19.3°C and a coagulation temperature of 17.2°C, and the difference between the melting temperature and the coagulation temperature at an initial stage was 2.1°C. The change ratio of temperature difference was 3 % and the thermal history durability of the thermal storage material microcapsules was 86 %. When the hydroxyl value of the thermal storage material was close to the upper limit of the preferred range thereof in the present invention as described above, the result was that the thermal storage material microcapsules were slightly poor in thermal history durability.

### (Example 141)

Encapsulation was carried out in the same manner as in Example 132 except that the thermal storage material in Example 132 was replaced with decyl laurate having a purity of 88 %, an acid value of 2.5 and a hydroxyl value of 25, to give a dispersion of thermal storage material microcapsules which dispersion had a slightly increased viscosity and had a little poor dispersion stability. The thermal storage material had a melting temperature of 19.2°C and a coagulation temperature of 17.2°C, and the difference between the melting temperature and the coagulation temperature at an initial stage was 2.0°C. The change ratio of temperature difference was 4 % and the thermal history durability of the thermal storage material microcapsules was 77 %. When the hydroxyl value of the thermal storage material was higher than the upper limit of the preferred range thereof in the present invention as described above, the result was that the thermal storage material microcapsules were a little poor in thermal history durability.

### (Example 142)

Encapsulation was carried out in the same manner as in Example 132 except that the thermal storage material in Example 132 was replaced with decyl laurate having a purity of 77 %, an acid value of 2.5 and a hydroxyl value of 18, to give a dispersion of thermal storage material microcapsules which dispersion had a slightly increased viscosity and had a little poor dispersion stability. The thermal storage material had a melting temperature of 19.2°C and a coagulation temperature of 17.2°C, and the difference between the melting temperature and the coagulation temperature at an initial stage was 2.0°C. The change ratio of temperature difference was 4 % and the thermal history durability of the thermal storage material microcapsules was 82 %. When the hydroxyl value of the thermal storage material was close to the upper limit of the preferred range thereof in the present invention as described above, the result was that the thermal storage material microcapsules were slightly poor in thermal history durability.

### (Example 143)

Encapsulation was carried out in the same manner as in Example 132 except that the thermal storage material in Example 132 was replaced with decyl laurate having a purity of 77 %, an acid value of 4.3 and a hydroxyl value of 18, to give a dispersion of thermal storage material microcapsules which dispersion had a slightly increased viscosity and had a little poor dispersion stability. The thermal storage material had a melting temperature of 19.1°C and a coagulation temperature of 17.2°C, and the difference between the melting temperature and the coagulation temperature at an initial stage was 1.9°C. The change ratio of temperature difference was 3 % and the thermal history durability of the thermal storage material microcapsules was 78 %. When the purity of the thermal storage material was close to the lower limit of the preferred range thereof in the present invention and when the hydroxyl value of the thermal storage material was close to the upper limit thereof in the present invention as described above, the result was that the thermal storage material microcapsules were a little poor in thermal history durability when the acid value of the thermal storage material was slightly increased.

### (Example 144)

Encapsulation was carried out in the same manner as in Example 132 except that the thermal storage material in Example 132 was replaced with decyl laurate having a purity of 77 %, an acid value of 7.5 and a hydroxyl value of 4.4, to give a dispersion of thermal storage material microcapsules which dispersion had a slightly increased viscosity and had a little poor dispersion stability. The thermal storage material had a melting temperature of 19.1°C and a coagulation temperature of 17.4°C, and the difference between the melting temperature and the coagulation temperature at an initial stage was 1.7°C. The change ratio of temperature difference was 3 % and the thermal history durability of the thermal storage material microcapsules was 78 %. When the purity of the thermal storage material was close to the lower limit of the preferred range thereof in the present invention and when the acid value of the thermal storage material was close to the upper limit thereof in the present invention as described above, the result was that the thermal storage material microcapsules were a little poor in durability against repeated phase change.

### (Example 145)

Encapsulation was carried out in the same manner as in Example 132 except that the thermal storage material in Example 132 was replaced with decyl laurate having a purity of 88 %, an acid value of 7.5 and a hydroxyl value of 18, to give a dispersion of thermal storage material microcapsules which dispersion had a slightly increased viscosity and had a little poor dispersion stability. The thermal storage material had a melting temperature of 19.3°C and a coagulation temperature of 17.7°C, and the difference between the melting temperature and the coagulation temperature at an initial stage was 1.6°C. The change ratio of temperature difference was 3 % and the thermal history durability of the thermal storage material microcapsules was 76 %. When both the acid value and hydroxyl value of the thermal storage material were close to the upper limits of the preferred ranges thereof in the present invention as described above, the result was that the thermal storage material microcapsules were a little poor in durability against repeated phase change.

### (Example 146)

Encapsulation was carried out in the same manner as in Example 101 except that the eicosanoic acid as a temperature control agent in Example 101 was replaced with 1 part of N-stearyl palmitic acid amide, to give a dispersion of thermal storage material microcapsules which dispersion had a low viscosity and excellent dispersion stability. The thermal storage material had a melting temperature of 36.6°C and a coagulation temperature of 30.7°C, and the difference between the melting temperature and the coagulation temperature at an initial stage was 5.9°C. The change ratio of temperature difference was 15 % and the thermal history durability of the thermal storage material microcapsules was 96 %. When N-stearyl palmitic acid amide is used as described above, not only a decrease in the difference in the melting temperature and the coagulation temperature at an initial stage is a little insufficient, but also the difference between the melting temperature and the coagulation temperature changes with time. The result was that the thermal storage material microcapsules were poor in stability against repeated use.

### (Example 147)

Encapsulation was carried out in the same manner as in Example 101 except that the eicosanoic acid as a temperature control agent in Example 101 was replaced with 1 part of decanoic acid (a compound of the general formula (IV) in which R⁶ is nonyl having 9 carbon atoms], to give a dispersion of thermal storage material microcapsules which dispersion had a low viscosity and excellent dispersion stability. The thermal storage material had a melting temperature of 36.5°C and a coagulation temperature of 29.1°C, and the difference between the melting temperature and the coagulation temperature at an initial stage was 7.4°C. The change ratio of temperature difference was 12 % and the thermal history durability of the thermal storage material microcapsules was 96 %. When dodecyl myristate [a compound of the general formula (I) in which R¹ is tridecyl having 13 carbon atoms and R² is dodecyl having 12 carbon atoms] is used, and when decanoic acid is used as described above, not only a decrease in the difference between the melting temperature and the coagulation temperature at an initial stage is insufficient, but also the temperature difference between the melting temperature and the coagulation temperature changes with time. The result was that the thermal storage material microcapsules were poor in stability against repeated use.

### (Example 148)

Encapsulation was carried out in the same manner as in Example 101 except that the eicosanoic acid as a temperature control agent in Example 101 was replaced with 1 part of dodecanoic acid (a compound of the general formula (IV) in which R⁶ is undecyl having 11 carbon atoms], to give a dispersion of thermal storage material microcapsules which dispersion had a low viscosity and excellent dispersion stability. The thermal storage material had a melting temperature of 36.7°C and a coagulation temperature of 30.5°C, and the difference between the melting temperature and the coagulation temperature at an initial stage was 6.2°C. The change ratio of temperature difference was 10 % and the thermal history durability of the thermal storage material microcapsules was 96 %. When dodecyl myristate is used, and when dodecanoic acid is used as described above, not only a decrease in the difference between the melting temperature and the coagulation temperature at an initial stage is insufficient, but also the temperature difference between the melting temperature and the coagulation temperature changes with time. The result was that the thermal storage material microcapsules were poor in stability against repeated use.

### (Example 149)

Encapsulation was carried out in the same manner as in Example 101 except that the eicosanoic acid as a temperature control agent in Example 101 was replaced with 1 part of myristic acid (a compound of the general formula (IV) in which R⁶ is tridecyl having 13 carbon atoms], to give a dispersion of thermal storage material microcapsules which dispersion had a low viscosity and excellent dispersion stability. The thermal storage material had a melting temperature of 36.6°C and a coagulation temperature of 31.3°C, and the difference between the melting temperature and the coagulation temperature at an initial stage was 5.3°C. The change ratio of temperature difference was 9 % and the thermal history durability of the thermal storage material microcapsules was 96 %. When dodecyl myristate is used, and when myristic acid is used as described above, not only a decrease in the difference between the melting temperature and the coagulation temperature at an initial stage is insufficient, but also the temperature difference between the melting temperature and the coagulation temperature tends to change with time. The result was that the thermal storage material microcapsules were poor in stability against repeated use.

### (Example 150)

Encapsulation was carried out in the same manner as in Example 113 except that the palmityl alcohol as a temperature control agent in Example 113 was replaced with 0.5 part of octyl alcohol [a compound of the general formula (V) in which R⁷ is octyl having 8 carbon atoms], to give a dispersion of thermal storage material microcapsules which dispersion had a low viscosity and excellent dispersion stability. The thermal storage material had a melting temperature of 27.5°C and a coagulation temperature of 19.6°C, and the difference between the melting temperature and the coagulation temperature at an initial stage was 7.9°C. The change ratio of temperature difference was 13 % and the thermal history durability of the thermal storage material microcapsules was 95 %. When dodecyl laurate [a compound of the general formula (I) in which R¹ is undecyl having 11 carbon atoms and R² is dodecyl having 12 carbon atoms] is used, and when octyl alcohol is used as described above, not only a decrease in the difference between the melting temperature and the coagulation temperature at an initial stage was insufficient, but also the temperature difference between the melting temperature and the coagulation temperature changes with time. The result was that the thermal storage material microcapsules were poor in stability against repeated use.

### (Example 151)

Encapsulation was carried out in the same manner as in Example 113 except that the palmityl alcohol as a temperature control agent in Example 113 was replaced with 0.5 part of decyl alcohol [a compound of the general formula (V) in which R⁷ is decyl having 10 carbon atoms], to give a dispersion of thermal storage material microcapsules which dispersion had a low viscosity and excellent dispersion stability. The thermal storage material had a melting temperature of 27.7°C and a coagulation temperature of 21.1°C, and the difference between the melting temperature and the coagulation temperature at an initial stage was 6.6°C. The change ratio of temperature difference was 11 % and the thermal history durability of the thermal storage material microcapsules was 95 %. When dodecyl laurate is used, and when decyl alcohol is used as described above, not only a decrease in the difference between the melting temperature and the coagulation temperature at an initial stage was insufficient, but also the temperature difference between the melting temperature and the coagulation temperature changes with time. The result was that the thermal storage material microcapsules were poor in stability against repeated use.

### (Example 152)

Encapsulation was carried out in the same manner as in Example 113 except that the palmityl alcohol as a temperature control agent in Example 113 was replaced with 0.5 part of dodecyl alcohol [a compound of the general formula (V) in which R⁷ is dodecyl having 12 carbon atoms], to give a dispersion of thermal storage material microcapsules which dispersion had a low viscosity and excellent dispersion stability. The thermal storage material had a melting temperature of 27.6°C and a coagulation temperature of 22.2°C, and the difference between the melting temperature and the coagulation temperature at an initial stage was 5.4°C. The change ratio of temperature difference was 8 % and the thermal history durability of the thermal storage material microcapsules was 95 %. When dodecyl laurate is used, and when dodecyl alcohol is used as described above, not only a decrease in the difference between the melting temperature and the coagulation temperature at an initial stage was insufficient, but also the temperature difference between the melting temperature and the coagulation temperature changes with time. The result was that the thermal storage material microcapsules were poor in stability against repeated use.

### (Example 153)

Encapsulation was carried out in the same manner as in Example 101 except that no temperature control agent was added to give a dispersion of thermal storage material microcapsules which dispersion had a low viscosity and excellent dispersion stability. The thermal storage material had a melting temperature of 36.4°C and a coagulation temperature of 24.3°C, and the difference between the melting temperature and the coagulation temperature at an initial stage was 12.1°C. The change ratio of temperature difference was 19 % and the thermal history durability of the thermal storage material microcapsules was 96 %. When no temperature control agent is added as described above, not only the difference between the melting temperature and coagulation temperature at an initial stage increases, but also the temperature difference between the melting temperature and the coagulation temperature changes with time, and the result was that the thermal storage material microcapsules were poor in stability against repeated use.

### (Example 154)

The thermal storage material microcapsules dispersion obtained in Example 101 was spray-dried with a spray dryer to give a thermal storage material microcapsule powder having an average particle diameter of 90 µm and having a water content of 3 %. The thus-obtained thermal storage material microcapsule powder had excellent flowability and emitted no sensible odor.

### (Example 155)

The thermal storage material microcapsules dispersion obtained in Example 113 was spray-dried with a spray dryer to give a thermal storage material microcapsule powder having an average particle diameter of 110 µm and having a water content of 2 %. The thus-obtained thermal storage material microcapsule powder had excellent flowability and emitted no sensible odor.

### (Example 156)

The thermal storage material microcapsules dispersion obtained in Example 101 was spray-dried with a spray dryer to give a thermal storage material microcapsule powder having an average particle diameter of 120 µm. The thus-obtained thermal storage material microcapsule powder had excellent flowability and emitted no sensible odor. Further, 30 parts of a 30 % polyvinyl alcohol aqueous solution and a proper amount of water as binders were added to 100 parts of the thus-obtained thermal storage material microcapsule powder, and then the mixture was extrusion-granulated with an extrusion type granulator and the extrusion product was dried at 100°C to give a granulated product of the thermal storage material microcapsules, which product each had a columnar form having a minor diameter of 1 mm and a major diameter of 3 mm. In the thus-obtained thermal storage material microcapsule granulated product, no bleeding of the thermal storage material was found, and no odor was sensed. (Example 157)

The thermal storage material microcapsules dispersion obtained in Example 113 was spray-dried with a spray dryer to give a thermal storage material microcapsule powder having an average particle diameter of 130 µm. The thus-obtained thermal storage material microcapsule powder had excellent flowability and emitted no sensible odor. Further, 30 parts of a 30 % polyvinyl alcohol aqueous solution and a proper amount of water as binders were added to 100 parts of the thus-obtained thermal storage material microcapsule powder, and then the mixture was extrusion-granulated with an extrusion type granulator and the extrusion product was dried at 100°C to give a granulated product of the thermal storage material microcapsules, which product each had a columnar form having a minor diameter of 2 mm and a major diameter of 4 mm. In the thus-obtained thermal storage material microcapsule granulated product, no bleeding of the thermal storage material was found, and no odor was sensed.

### Table 4

**Table 4**

| Example | Particle diameters | Melting temperatur | Coagulation temperature | Difference between Mel.temp.- Co.temp. | Change ratio of temp. difference | Thermal history durability |
|---|---|---|---|---|---|---|
| | (*µ*m) | (°C) | (°C) | (°C) | (%) | (%) |
| 101 | 3.4 | 36.5 | 34.2 | 2.3 | 2 | 96 |
| 102 | 3.4 | 36.4 | 34.2 | 2.2 | 2 | 96 |
| 103 | 3.4 | 36.6 | 34.1 | 2.5 | 2 | 96 |
| 104 | 3.4 | 36.7 | 32.9 | 3.8 | 4 | 96 |
| 105 | 3.4 | 36.7 | 30.5 | 6.2 | 7 | 96 |
| 106 | 3.4 | 36.7 | 31.9 | 4.8 | 4 | 96 |
| 107 | 3.4 | 36.6 | 32.4 | 4.2 | 3 | 96 |
| 108 | 3.4 | 36.7 | 33.2 | 3.5 | 2 | 96 |
| 109 | 3.4 | 36.5 | 34.4 | 2.1 | 2 | 95 |
| 110 | 3.4 | 36.6 | 34.7 | 1.9 | 2 | 92 |
| 111 | 3.4 | 36.4 | 34.6 | 1.8 | 2 | 86 |
| 112 | 3.4 | 36.4 | 34.5 | 1.9 | 2 | 76 |
| 113 | 4.8 | 27.8 | 25.0 | 2.8 | 3 | 95 |
| 114 | 4.8 | 27.5 | 25.1 | 2.4 | 3 | 95 |
| 115 | 4.8 | 27.6 | 25.0 | 2.6 | 3 | 95 |
| 116 | 4.8 | 27.7 | 23.8 | 3.9 | 5 | 95 |
| 117 | 4.8 | 27.8 | 21.8 | 6.0 | 7 | 95 |
| 118 | 4.8 | 27.7 | 23.2 | 4.5 | 5 | 95 |
| 119 | 4.8 | 27.8 | 23.9 | 3.9 | 4 | 95 |
| 120 | 4.8 | 27.5 | 24.2 | 3.3 | 3 | 95 |
| 121 | 4.8 | 27.6 | 25.4 | 2.2 | 3 | 95 |
| 122 | 4.8 | 27.7 | 25.7 | 2.0 | 3 | 94 |
| 123 | 4.8 | 27.5 | 25.7 | 1.8 | 3 | 91 |
| 124 | 4.8 | 27.4 | 25.6 | 1.8 | 3 | 87 |
| 125 | 4.8 | 79.5 | 76.3 | 3.2 | 4 | 82 |
| 126 | 4.8 | 75.8 | 72.0 | 3.8 | 4 | 83 |
| 127 | 4.8 | 54.1 | 50.2 | 3.9 | 5 | 80 |
| 128 | 5.2 | 51.3 | 48.7 | 2.6 | 2 | 93 |
| 129 | 3.2 | 19.7 | 15.5 | 4.2 | 3 | 93 |
| 130 | 4.2 | 8.4 | 5.0 | 3.4 | 3 | 92 |
| 131 | 5.3 | 35.8 | 32.5 | 3.3 | 3 | 91 |
| 132 | 3.4 | 19.7 | 17.4 | 2.3 | 3 | 95 |
| 133 | 3.4 | 19.5 | 17.3 | 2.2 | 4 | 92 |
| 134 | 3.4 | 19.6 | 17.4 | 2.2 | 4 | 89 |
| 135 | 3.4 | 19.5 | 17.4 | 2.1 | 5 | 87 |
| 136 | 3.4 | 19.7 | 17.7 | 2.0 | 3 | 89 |
| 137 | 3.4 | 19.4 | 17.5 | 1.9 | 3 | 83 |
| 138 | 3.4 | 19.1 | 17.2 | 1.9 | 4 | 75 |
| 139 | 3.4 | 19.6 | 17.3 | 2.3 | 3 | 91 |
| 140 | 3.4 | 19.3 | 17.2 | 2.1 | 3 | 86 |
| 141 | 3.4 | 19.2 | 17.2 | 2.0 | 4 | 77 |
| 142 | 3.4 | 19.2 | 17.2 | 2.0 | 4 | 82 |
| 143 | 3.4 | 19.1 | 17.2 | 1.9 | 3 | 78 |
| 144 | 3.4 | 19.1 | 17.4 | 1.7 | 3 | 78 |
| 145 | 3.4 | 19.3 | 17.7 | 1.6 | 3 | 76 |
| 146 | 3.4 | 36.6 | 30.7 | 5.9 | 15 | 96 |
| 147 | 3.4 | 36.5 | 29.1 | 7.4 | 12 | 96 |
| 148 | 3.4 | 36.7 | 30.5 | 6.2 | 10 | 96 |
| 149 | 3.4 | 36.6 | 31.3 | 5.3 | 9 | 96 |
| 150 | 4.8 | 27.5 | 19.6 | 7.9 | 13 | 95 |
| 151 | 4.8 | 27.7 | 21.1 | 6.6 | 11 | 95 |
| 152 | 4.8 | 27.6 | 22.2 | 5.4 | 8 | 95 |
| 153 | 3.4 | 36.4 | 24.3 | 12.1 | 19 | 96 |

### Industrial Utility

The thermal storage material microcapsules according the present invention can be applied to fiber-processed products such as clothing materials, bedclothes, etc., heat-retaining materials for heating and storing heat by the application of microwave, apparatuses for recovering waste heat of a fuel cell, an incinerator, etc., and over-heating and/or supper-cooling suppressing materials for electronic parts and gas adsorbents, and in addition to these, they can be applied to various use fields of construction materials, the building frame thermal storage/space filling type air conditioning of buildings, floor heating, air-conditioning, civil engineering materials such as roads and bridges, industrial and agricultural thermal insulation materials, household goods, fitness gears, medical materials, and the like.

## Claims

1. Thermal storage material microcapsules encapsulating a thermal storage material, said thermal storage material comprising at least one selected from compounds of the following formulae (I) to (III),
R¹-X-R² (I)
wherein each of R¹ and R² is independently a hydrocarbon group having 6 or more carbon atoms and X is a divalent binding group containing a heteroatom,
R³(-Y-R⁴)n (II)
wherein R³ is a hydrocarbon group having a valence of n, each of R⁴s is independently a hydrocarbon group having 6 or more carbon atoms and each Y is a divalent binding group containing a heteroatom,
A(-Z-R⁵)m (III)
wherein A is an atom, atomic group or binding group having a valence of m, each of R⁵s is independently a hydrocarbon group having 6 or more carbon atoms and each Z is a divalent binding group containing a heteroatom or a direct bond, the thermal storage material having an acid value of 8 or less.

2. The thermal storage material microcapsules of claim 1, wherein the thermal storage material has a purity of 75 mass% or more.

3. The thermal storage material microcapsules of claim 1, wherein the thermal storage material has a hydroxyl value of 20 or less.

4. Thermal storage material microcapsules encapsulating a thermal storage material, said thermal storage material comprising at least one selected from compounds of the following formulae (I) to (III),
R¹-X-R² (I)
wherein each of R¹ and R² is independently a hydrocarbon group having 6 or more carbon atoms and X is a divalent binding group containing a heteroatom,
R³(-Y-R⁴)n (II)
wherein R³ is a hydrocarbon group having a valence of n, each of R⁴s is independently a hydrocarbon group having 6 or more carbon atoms and each Y is a divalent binding group containing a heteroatom,
A(-Z-R⁵)m (III)
wherein A is an atom, atomic group or binding group having a valence of m, each of R⁵s is independently a hydrocarbon group having 6 or more carbon atoms and each Z is a divalent binding group containing a heteroatom or a direct bond, said thermal storage material having a melting temperature and a coagulation temperature which are different by 5°C or more.

5. The thermal storage material microcapsules of claim 4, which have coatings formed by an in-situ polymerization method.

6. The thermal storage material microcapsules of claim 5, wherein the thermal storage material has a purity of 91 mass% or more.

7. The thermal storage material microcapsules of claim 5, wherein the thermal storage material has an acid value of 1 or less.

8. The thermal storage material microcapsules of claim 5, wherein the thermal storage material has a hydroxyl value of 3 or less.

9. The thermal storage material microcapsules of any one of claims 5 to 8, which have a volume average particle diameter of 0.1 µm or more but 7 µm or less.

10. The thermal storage material microcapsules of claim 4, which have coatings formed by an interfacial polymerization method or a radical polymerization method.

11. The thermal storage material microcapsules of claim 10, wherein the thermal storage material has a purity of 80 mass% or more.

12. The thermal storage material microcapsules of claim 10, wherein the thermal storage material has an acid value of 3 or less.

13. The thermal storage material microcapsules of claim 10, wherein the thermal storage material has a hydroxyl value of 10 or less.

14. The thermal storage material microcapsules of any one of claims 10 to 13, which have a volume average particle diameter of 0.1 µm or more but 12 µm or less.

15. Thermal storage material microcapsules encapsulating a thermal storage material, said thermal storage material comprising two or more compounds selected from compounds of the following formulae (I) to (III),
R¹-X-R² (I)
wherein each of R¹ and R² is independently a hydrocarbon group having 6 or more carbon atoms and X is a divalent binding group containing a heteroatom,
R³(-Y-R⁴)n (II)
wherein R³ is a hydrocarbon group having a valence of n, each of R⁴s is independently a hydrocarbon group having 6 or more carbon atoms and each Y is a divalent binding group containing a heteroatom,
A(-Z-R⁵)m (III)
wherein A is an atom, atomic group or binding group having a valence of m, each of R⁵s is independently a hydrocarbon group having 6 or more carbon atoms and each Z is a divalent binding group containing a heteroatom or a direct bond, the totals of carbon atoms being different in number by 4 or less between or among the selected compounds.

16. The thermal storage material microcapsules of claim 15, wherein the content of the most compound of the compounds constituting the thermal storage material is 20 to 95 mass%.

17. Thermal storage material microcapsules encapsulating a thermal storage material and a temperature control agent, said thermal storage material comprising at least one selected from compounds of the following formulae (I) to (III),
R¹-X-R² (I)
wherein each of R¹ and R² is independently a hydrocarbon group having 6 or more carbon atoms and X is a divalent binding group containing a heteroatom,
R³(-Y-R⁴)n (II)
wherein R³ is a hydrocarbon group having a valence of n, each of R⁴s is independently a hydrocarbon group having 6 or more carbon atoms and each Y is a divalent binding group containing a heteroatom,
A(-Z-R⁵)m (III)
wherein A is an atom, atomic group or binding group having a valence of m, each of R⁵s is independently a hydrocarbon group having 6 or more carbon atoms and each Z is a divalent binding group containing a heteroatom or a direct bond,
said temperature control agent containing at least one of compounds of the following general formulae (IV) and (V), 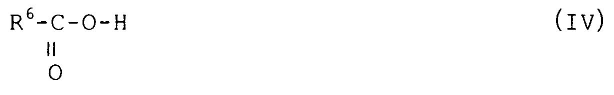 wherein R⁶ is a hydrocarbon group having 8 or more carbon atoms,
R⁷-O-H (V)
wherein R⁷ is a hydrocarbon group having 8 or more carbon atoms,
the temperature control agent and the thermal storage material satisfying the requirement that the number of carbon atoms of a hydrocarbon group having the most carbon atoms in compounds constituting the temperature control agent is greater than the number of carbon atoms of a hydrocarbon group having the most carbon atoms in compounds constituting the thermal storage material by 2 or more.

18. The thermal storage material microcapsules of claim 17, wherein the number of carbon atoms of a hydrocarbon group having the most carbon atoms in the compounds constituting the temperature control agent is greater than the number of carbon atoms of a hydrocarbon group having the most carbon atoms in the compounds constituting the thermal storage material by 4 or more.

19. The thermal storage material microcapsules of claim 17 or 18, which have a temperature control agent content in the range of 0.05 to 3 mass% based on the thermal storage material.

20. A thermal storage material microcapsule dispersion of the thermal storage material microcapsules recited in any one of claims 1 to 19 in a dispersing medium.

21. A thermal storage material microcapsule solid formed of or form the thermal storage material microcapsules recited in any one of claims 1 to 20 or a plurality of the thermal storage material microcapsules recited in any one of claims 1 to 20 which are bonded together.
